(19)

Europäisches
Patentamt
European
Patent Office
Office européen
des brevets

(11)     **EP 2 447 705 A1**

(12)

# EUROPEAN PATENT APPLICATION
published in accordance with Art. 153(4) EPC

(43) Date of publication:
**02.05.2012 Bulletin 2012/18**

(21) Application number: **10792105.8**

(22) Date of filing: **22.06.2010**

(51) Int Cl.:
*G01N 21/35* (2006.01)          *G01J 1/02* (2006.01)
*G01J 1/04* (2006.01)          *G01N 21/61* (2006.01)

(86) International application number:
**PCT/JP2010/060570**

(87) International publication number:
**WO 2010/150787 (29.12.2010 Gazette 2010/52)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **25.06.2009  JP 2009151622
18.09.2009  JP 2009217332
18.09.2009  JP 2009217333
24.09.2009  JP 2009219202**

(71) Applicant: **Panasonic Corporation
Osaka 571-8501 (JP)**

(72) Inventors:
• **NISHIKAWA, Takayuki**
**2-1-61 Shiromi, Chuo-ku
Osaka 540-6207 (JP)**

• **WATABE, Yoshifumi**
**2-1-61 Shiromi, Chuo-ku
Osaka 540-6207 (JP)**
• **INABA, Yuichi**
**2-1-61 Shiromi, Chuo-ku
Osaka 540-6207 (JP)**
• **HIRAI, Takahiko**
**2-1-61 Shiromi, Chuo-ku
Osaka 540-6207 (JP)**
• **KITAMURA, Hiroaki**
**2-1-61 Shiromi, Chuo-ku
Osaka 540-6207 (JP)**

(74) Representative: **Appelt, Christian W.
Boehmert & Boehmert
Pettenkoferstrasse 20-22
80336 München (DE)**

(54)     **INFRARED GAS DETECTOR AND INFRARED GAS MEASURING DEVICE**

(57)     An infrared gas detector includes an infrared reception member, a package configured to accommodate the infrared reception member, and an optical filter. The infrared reception member includes a plurality of thermal infrared detection elements each configured to detect infrared based on heat caused by received infrared. The thermal infrared detection elements are placed side by side. The package is provided with a window opening configured to allow the infrared reception member to receive infrared. The optical filter is attached to the package so as to cover the window opening, and includes a plurality of filter elements respectively corresponding to the plurality of the thermal infrared detection elements. Each of the filter elements includes a filter substrate made of an infrared transparent material, a transmission filter configured to transmit infrared of a selected wavelength, and a cut-off filter configured to absorb infrared of a wavelength longer than the selected wavelength. The transmission filter and the cut-off filter are formed over the filter substrate. The filter substrate is thermally coupled to the package. The transmission filters of the respective filter elements are configured to transmit infrared of the different selected wavelengths.

FIG. 1

**Description**

**Technical Field**

The present invention is directed to infrared gas detectors and infrared gas measuring devices.

**Background Art**

In the past, there has been proposed an infrared gas measuring device designed to measure a gas based on the principle that a gas absorbs infrared with a specific wavelength. The infrared gas measuring device measures an absorbance of infrared (infrared ray) with an absorption wavelength depending on a molecular structure of a gas to be measured, and calculates a concentration of the gas on the basis of the measured absorbance (see JP 07-72078 A, JP 03-205521 A, and JP 10-281866 A).

JP 07-72078 A discloses an infrared gas detector including a filter configured to transmit infrared with a specific wavelength and a pyroelectric photodetector configured to detect infrared which has been transmitted by the filter. The filter is formed on the pyroelectric photodetector directly. Therefore, an increase of a heat capacity makes ensuring thermal insulation difficult, and therefore the response performance is likely to be decreased.

JP 03-205521 A discloses an infrared sensor including a package consisting of a case and a stem. The package accommodates a holder configured to house an infrared detection element. The case is provided with an opening allowing the infrared detection element to receive infrared through the opening. The opening is covered with a windowpane configured to transmit infrared. The windowpane is made of sapphire, for example. There is an optical filter attached to the holder so as to be placed in front of the infrared detection element. The optical filter includes a substrate. The substrate is provided at its first surface with a bandpass surface (transmission filter) configured to transmit infrared of a predetermined wavelength range. The substrate is provided at its second surface a short-long cutting surface (cut-off filter) configured to remove infrared in a wavelength range other than the predetermined wavelength range. Each of the transmission filter and the cut-off filter is a laminated film formed by stacking a Ge film and a SiO film. The SiO film absorbs infrared in a wavelength range having its lower limit greater than an upper limit of the wavelength range (transmission range) of infrared transmitted by the transmission filter. This may causes an increase of temperatures of the transmission filter and the cut-off filter. Consequently, the transmission filter and the cut-off filter may emit infrared in an absorption range. When the optical filter and the infrared detection element see an inhomogeneous temperature distribution, absorption of far infrared by the optical filter may cause a difference between an intensity of emitted infrared in a long-wavelength range and an intensity of received infrared of the infrared detection element. Therefore, the infrared sensor is likely to provide an output caused by an inhomogeneous temperature distribution.

**Disclosure of Invention**

In view of the above insufficiency, the present invention has been aimed to propose an infrared gas detector and an infrared gas measuring device which have their improved sensitivity improved and are fabricated at a lowered cost.

The infrared gas detector in accordance with the present invention includes an infrared reception member, a package configured to accommodate the infrared reception member, and an optical filter. The infrared reception member includes a plurality of thermal infrared detection elements each configured to detect infrared based on heat caused by received infrared. The thermal infrared detection elements are placed side by side. The package is provided with a window opening configured to allow the infrared reception member to receive infrared. The optical filter is attached to the package so as to cover the window opening, and includes a plurality of filter elements respectively corresponding to the plurality of the thermal infrared detection elements. Each of the filter elements includes a filter substrate made of an infrared transparent material, a transmission filter configured to transmit infrared of a selected wavelength, and a cut-off filter configured to absorb infrared of a wavelength longer than the selected wavelength. The transmission filter and the cut-off filter are formed over the filter substrate. The filter substrate is thermally coupled to the package. The transmission filters of the respective filter elements are configured to transmit infrared of the different selected wavelengths.

In a preferred aspect, the infrared reception member includes a pair of the thermal infrared detection elements. The thermal infrared detection element is a pyroelectric element or a thermopile. The thermal infrared detection elements in the pair are connected in anti-series or anti-parallel with each other.

Preferably, the infrared gas detector further comprises an amplifier circuit configured to amplify an output of the infrared reception member. The amplifier circuit is housed in the package.

In another preferred aspect, the infrared gas detector further comprises an amplifier circuit. The infrared reception member includes a pair of the thermal infrared detection elements. The thermal infrared detection element is a pyroelectric element or a thermopile. The amplifier circuit is a differential amplifier circuit configured to amplify a difference between outputs of the respective thermal infrared detection elements in the pair.

In another preferred aspect, the filter substrate is made of a Si substrate or a Ge substrate.

Preferably, the package is provided with a shield member made of a metal, the shield being configured to prevent transmission of an electromagnetic wave from an outside to an inside of the package. The filter substrate is electrically connected to the shield member.

In another preferred aspect, the filter substrate has a first surface facing an inside of the package and a second surface facing an outside of the package. The transmission filter is formed over the first surface of the filter substrate. The cut-off filter is formed over the second surface of the filter substrate.

In another preferred aspect, the filter substrates of the respective filter elements are provided as a single part.

In another preferred aspect, the transmission filter includes a first λ/4 multilayer, a second λ/4 multilayer, and a wavelength selection layer interposed between the first λ/4 multilayer and the second λ/4 multilayer. Each of the first λ/4 multilayer and the second λ/4 multilayer is fabricated by stacking plural kinds of thin films having different refractive indices and the same optical thickness. The wavelength selection layer has an optical thickness which is different from the optical thickness of the thin film and is selected based on the selected wavelength regarding the transmission filter. The cut-off filter is a laminated film fabricated by stacking plural kinds of thin films having different refractive indices. At least one of the plural kinds of the thin films of the cut-off filter is made of a far infrared absorption material having a property of absorbing far infrared.

The infrared gas measuring device in accordance with the present invention includes an infrared light source configured to emit infrared to a predetermined space and an infrared gas detector configured to receive infrared passing through the predetermined space. The infrared gas detector in accordance with the present invention includes an infrared reception member, a package configured to accommodate the infrared reception member, and an optical filter. The infrared reception member includes a plurality of thermal infrared detection elements each configured to detect infrared based on heat caused by received infrared. The thermal infrared detection elements are placed side by side. The package is provided with a window opening configured to allow the infrared reception member to receive infrared. The optical filter is attached to the package so as to cover the window opening, and includes a plurality of filter elements respectively corresponding to the plurality of the thermal infrared detection elements. Each of the filter elements includes a filter substrate made of an infrared transparent material, a transmission filter configured to transmit infrared of a selected wavelength, and a cut-off filter configured to absorb infrared of a wavelength longer than the selected wavelength. The transmission filter and the cut-off filter are formed over the filter substrate. The filter substrate is thermally coupled to the package. The transmission filters of the respective filter elements are configured to transmit infrared of the different selected wavelengths.

In a preferred aspect, the infrared gas measuring device further comprises a driving circuit configured to control the infrared light source such that the infrared light source emits infrared intermittently.

Preferably, the infrared light source includes a substrate, a holding layer formed over the substrate, an infrared emission layer formed over the holding layer, and a gaseous layer interposed between the substrate and the holding layer. The infrared emission layer is configured to emit infrared in response to receive heat generated when the infrared emission layer is energized. The gaseous layer is configured to suppress a decrease of a temperature of the holding layer while the infrared emission layer is energized, and to promote heat transmission from the holding layer to the substrate while the infrared emission layer is not energized.

Preferably, the gaseous layer has a thickness **Lg** in the rage of 0.05Lg' to 3Lg', wherein **"f"** [Hz] denotes a frequency of a sinusoidal voltage applied to the infrared emission layer, and $\alpha$**g** [W/mK] denotes a thermal conductivity of the gaseous layer, and **Cg** [J/m$^3$K] denotes a volumetric heat capacity of the gaseous layer, and **Lg' = (2$\alpha$g / $\omega$Cg)$^{1/2}$** ($\omega$ = 2$\pi$**f**).

Preferably, the holding layer has heat conductivity lower than the substrate. The holding layer is configured to produce infrared transmitted from the holding layer to the infrared emission layer in response to absorbing heat generated by the energized infrared emission layer or reflecting infrared emitted from the infrared emission layer. The infrared emission layer is configured to transmit the infrared produced by the holding layer.

**Brief Description of Drawings**

> FIG. 1 shows a schematic plane diagram (a) illustrating the infrared gas detector of the first embodiment, and a schematic cross sectional diagram (b) illustrating the infrared gas detector of the first embodiment,
> FIG. 2 is a schematic exploded perspective diagram illustrating the above infrared gas detector,
> FIG. 3 shows a schematic plane diagram (a) illustrating the infrared reception element of the above infrared gas detector, a diagram (b) illustrating a circuit of the infrared reception element of the above infrared gas detector, and a diagram (c) illustrating a circuit of a modified example of the infrared reception element of the above infrared gas detector,

FIG. 4 is a schematic cross sectional diagram illustrating the optical filter of the above infrared gas detector,

FIG. 5 is an explanatory diagram illustrating a relation between a selected wavelength and a reflection range with regard to the above optical filter,

FIG. 6 is a diagram illustrating transmission spectra of the refractive index periodic structure for an explanation of a reflection width of the above optical filter,

FIG. 7 is an explanatory diagram illustrating a relation between a refractive index and a reflection width of a low refractive index material of the above refractive index periodic structure,

FIG. 8 is a schematic cross sectional diagram illustrating a basic configuration of a filter main body of the above optical filter,

FIG. 9 is an explanatory diagram illustrating characteristics of the above basic configuration,

FIG. 10 is an explanatory diagram illustrating characteristics of the above basic configuration,

FIG. 11 is a diagram illustrating transmission spectra of a thin film made of a far infrared absorption material with regard to the above optical filter,

FIG. 12 shows cross sectional diagrams illustrating a process of fabricating the above optical filter,

FIG. 13 is a diagram illustrating transmission spectra of a part including two transmission filters of the above optical filter,

FIG. 14 is a diagram illustrating a result of an analysis of a property of a thin film formed by use of ion-beam assisted deposition apparatus by means of FT-IR spectroscopy (Fourier transform infrared spectroscopy),

FIG. 15 shows a diagram (a) illustrating transmission spectra of a reference obtained by forming an $Al_2O_3$ film having a thickness of $1\mu m$ on a Si substrate, and an explanatory diagram (b) illustrating optical parameters (a refractive index and an absorption coefficient) of the $Al_2O_3$ film calculated based on the transmission spectra illustrated by the diagram (a),

FIG. 16 is a diagram illustrating transmission spectra of the above optical filter,

FIG. 17 is a diagram illustrating a transmission spectrum of the cut-off filter of the above optical filter,

FIG. 18 is a schematic configuration diagram illustrating the infrared gas measuring device including the above infrared gas detector,

FIG. 19 is an explanatory diagram illustrating a relation between a temperature and radiant energy regarding an object,

FIG. 20 shows a schematic cross sectional diagram (a) illustrating a modified example of the infrared light source, and a schematic cross sectional diagram (b) illustrating a primary part of the modified example of the infrared light source,

FIG. 21 is an explanatory diagram illustrating an output of the infrared light source,

FIG. 22 is an explanatory diagram illustrating the above optical filter,

FIG. 23 is an explanatory diagram illustrating an output of the infrared reception element,

FIG. 24 shows a schematic plane diagram (a) illustrating a modified example of the infrared reception element of the above infrared gas detector, a diagram (b) illustrating a circuit of the modified example of the infrared reception element of the above infrared gas detector, and a diagram (c) illustrating a circuit of another modified example of the infrared reception element of the above infrared gas detector,

FIG. 25 is an explanatory diagram illustrating transparent characteristics of Si,

FIG. 26 is an explanatory diagram illustrating transparent characteristics of Ge,

FIG. 27 shows a schematic plane diagram (a) illustrating a primary part of a modified example of the thermal infrared detection element of the above infrared gas detector, and a schematic cross sectional diagram (b) illustrating the modified example of the thermal infrared detection element of the above infrared gas detector,

FIG. 28 shows a schematic plane diagram (a) illustrating a modified example of the infrared reception element of the above infrared gas detector, and a diagram (b) illustrating a circuit of the modified example of the infrared reception element of the above infrared gas detector,

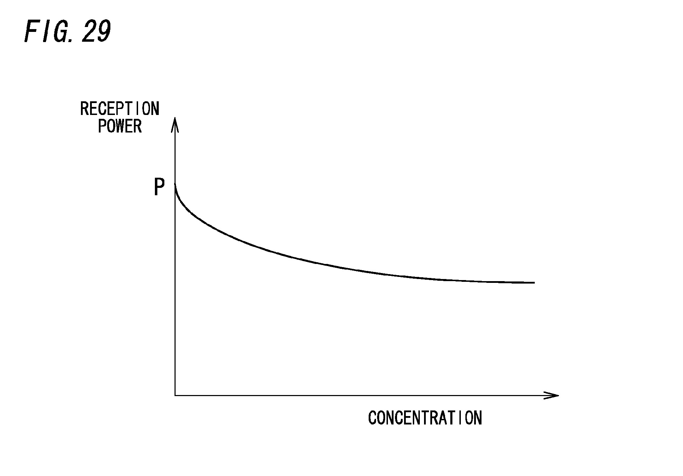

FIG. 29 is an explanatory diagram illustrating a relation between a concentration and a transmittance of a gas,

FIG. 30 is a schematic configuration diagram illustrating a whole construction of the second embodiment,

FIG. 31 is a cross sectional diagram illustrating the transmission filter used in the above,

FIG. 32 is a diagram illustrating characteristics of the transmission filter and the cut-off filter used in the above,

FIG. 33 is a cross sectional diagram illustrating an instance of the radiation element used in the above,

FIG. 34 is an explanatory diagram illustrating an operation of the radiation element used in the above,

FIG. 35 is a diagram illustrating temperature characteristics of the holding layer of the above radiation element,

FIG. 36 shows a diagram (a) illustrating the waveform of a driving voltage applied between electrodes of the radiation element, a diagram (b) illustrating a temperature variation of the infrared emission layer, a diagram (c) illustrating a temperature variation of an infrared emission layer of a first comparative example of the radiation element, and a diagram (d) illustrating a temperature variation of an infrared emission layer of a second comparative example of the radiation element,

FIG. 37 is a schematic cross sectional diagram illustrating a first modified example of the above radiation element,

FIG. 38 is a top diagram illustrating the first modified example of the above radiation element,

FIG. 39 is an explanatory diagram illustrating a process of fabricating the first modified example of the above radiation element,

FIG. 40 is a schematic diagram illustrating the first modified example of the above radiation element devoid of the second impurity diffused region,

FIG. 41 is a cross sectional diagram illustrating another instance of the first modified example of the above radiation element,

FIG. 42 is a top diagram illustrating a second modified example of the above radiation element, and

FIG. 43 is an explanatory diagram illustrating a process of fabricating a third modified example of the above radiation element,

**Best mode for Carrying out the Invention**

(FIRST EMBODIMENT)

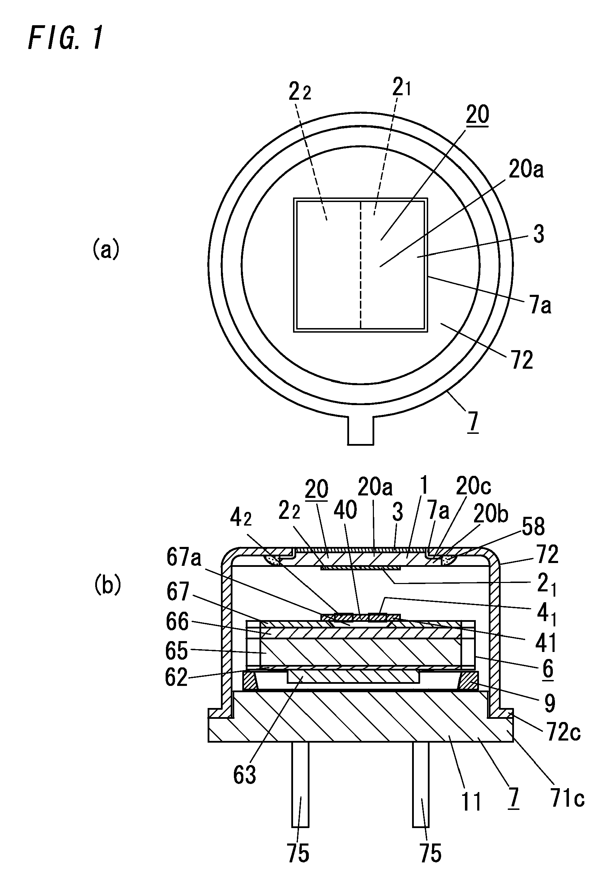

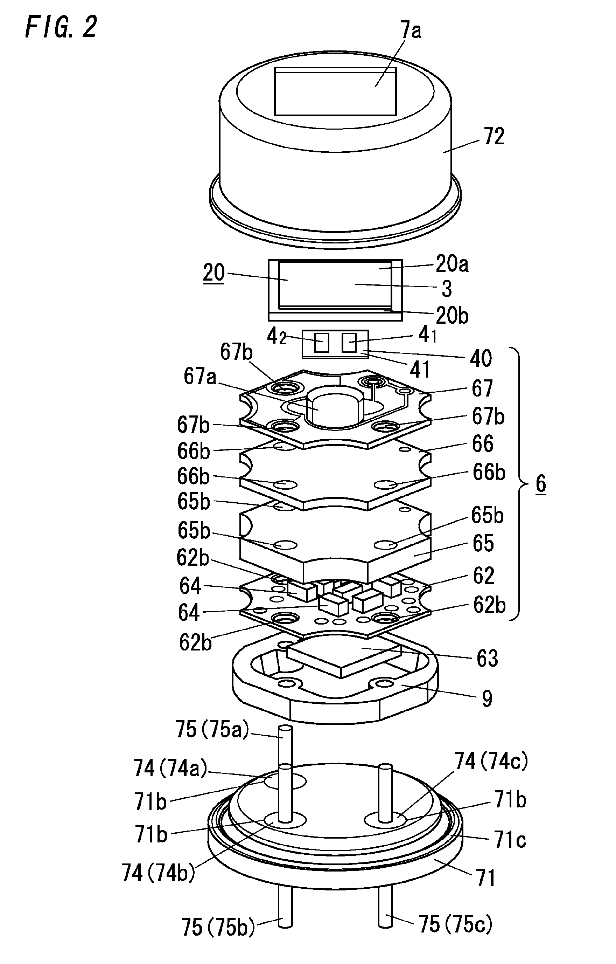

As shown in FIGS. 1 and 2, the infrared gas detector (infrared reception unit) of the present embodiment includes a circuit block 6 and a package 7. The circuit block 6 includes an infrared reception element (infrared reception member) **40** and a signal processing circuit. The infrared reception member **40** includes plural (two) pyroelectric elements $4_1$ and $4_2$. The signal processing circuit is configured to make signal processing with regard to an output of the infrared reception element **40**. The package **7** is a can package configured to accommodate the circuit block **6.** Besides, in the present embodiment, each of the pyroelectric elements $4_1$ and $4_2$ is a thermal infrared detection element which is used for sensing infrared on the basis of heat applied thereto.

The package **7** includes a stem **71** and a cap **72** which are made of a metal. Although the circuit block **6** is mounted on the stem **71,** a spacer **9** made of a dielectric material is interposed between the circuit block **6** and the stem **71**. The cap **72** is fixed to the stem **71** so as to envelop the circuit block **6.** The circuit block **6** has portions electrically connected to plural (three) terminal pins **75**. The terminal pin **75** is fixed to the stem **71** so as to penetrate the stem **71.** The stem **71** is formed in a circular disk shape. The cap **72** is formed in a circular cylindrical shape and has an opened bottom. The stem 71 is fixed to the cap **72** to cover the opened bottom of the cap **72.** Besides, the spacer **9** is fixed to the circuit block **6** and the stem **71** by use of an adhesive.

The cap **72** is a member of the package **7.** The cap **72** has a front wall which is positioned in front of the infrared reception element **40.** The cap **72** is provided at its front wall with a window opening **7a** formed into a rectangular shape (a square shape, in the present embodiment). The window opening **7a** is provided to allow the infrared reception element **40** to receive infrared via the window opening **7a.** An infrared optical filter (optical filter) **20** is attached to an inside of the cap **72** so as to cover the window opening **7a.** In brief, the optical filter **20** is arranged in front of the infrared reception element **40,** and is fixed to the package **7** in such a manner to cover the window opening **7a** of the package **7.**

There are plural terminal holes **71b** extending the stem **71** in a thickness direction of the stem **71b.** The plural terminal pins **75** are inserted into the plural terminal holes **71b,** respectively. The terminal pin **75** is fixed to the stem **71** by use of a sealing portion **74** while the terminal pin **75** penetrates the terminal hole **71b.**

The cap **72** and the stem **71** are made of a steel plate. The stem **71** is provided with a flange **71c** at its outer periphery. The cap **72** has an outer rim **72c** which extends outward from a rear end of a periphery of the cap **72.** The cap **72** is fixed to the stem **71** hermetically by welding the outer rim **72c** to the flange **71c.**

The circuit block **6** includes a first circuit board **62,** a resin layer **65,** a shield plate **66,** and a second circuit board **67.** The first circuit board **62** is a printed-wiring board (e.g., a composite copper-lined laminated board) having one surface on which an integrated circuit **63** is mounted and the other surface on which electronic chips **64** are mounted. The integrated circuit **63** and the electronic chips **64** are components of the above signal processing circuit. The resin layer **65** is formed on the mounted surface of the first circuit board **62** on which the electronic chips **64** are mounted. The shield plate **66** includes a dielectric substrate and a metal layer (hereinafter referred to as "shield layer") formed on a surface of the dielectric substrate. For example, the dielectric layer is made of a glass epoxy resin, and the shield layer is made of a metal material (e.g., copper). The shield plate **66** is positioned on the resin layer **65.** The second circuit board **67** is a printed-wiring board (e.g., a composite copper-lined laminated board). Mounted on the second circuit board **67** is the infrared reception element **40.** The second circuit board **67** is placed on the shield plate **66.** In a modified example, a shield layer made of a copper foil or a metal plate may be used as an alternative to the shield plate **66.**

The integrated circuit **63** is mounted on a first surface (lower surface, in FIG. 2) of the first circuit board **62** in a flip-chip bonding manner. The plural electric chips 64 are reflowed on a second surface (upper surface, in FIG. 2) of the first circuit board 62.

The infrared reception element **40** includes a pair of the pyroelectric elements $4_1$ and $4_2,$ and a pyroelectric element formation substrate **41** made of a pyroelectric material (e.g., lithium tantalate). The pyroelectric elements $4_1$

and $4_2$ are connected to each other in a reverse polarity. The pyroelectric elements $4_1$ and $4_2$ in the pair are arranged side by side on the pyroelectric element formation substrate 41. The infrared reception element 40 is a dual element device in which the two pyroelectric elements $4_1$ and $4_2$ are connected in anti-series with each other in order to obtain a differential output between the pyroelectric elements $4_1$ and $4_2$.

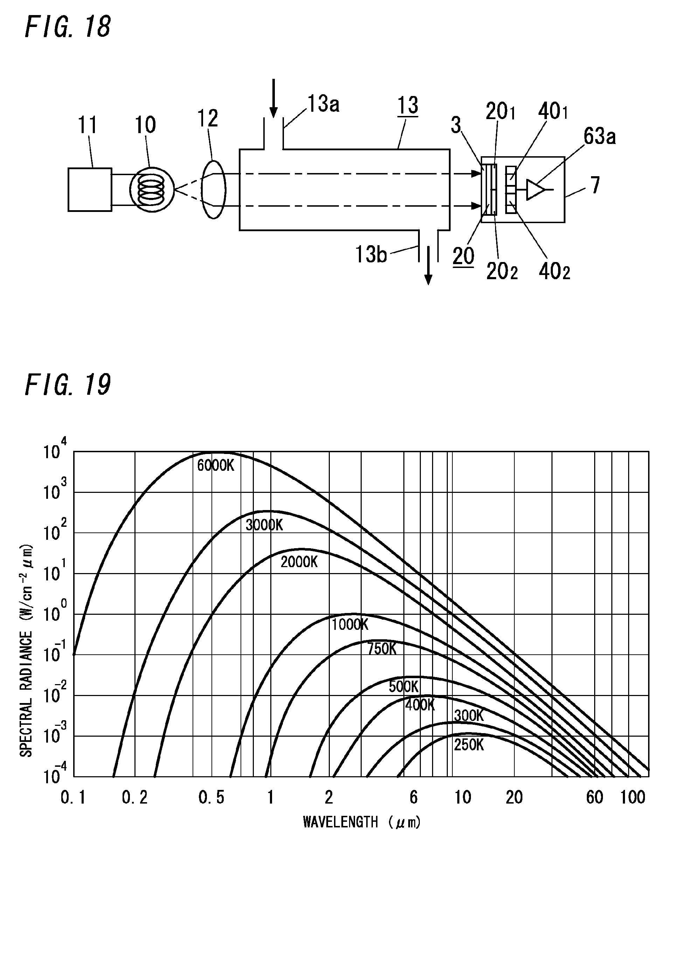

For example, the integrated circuit 63 includes an amplifier circuit (bandpass amplifier) 63a (see FIG. 18) and a window comparator. The amplifier circuit 63a is configured to amplify an output in a predetermined frequency band (e.g., approximately 0.1 to 10 Hz) which is provided from the infrared reception element 40. The window comparator is connected to a rear side of the amplifier circuit 63a.

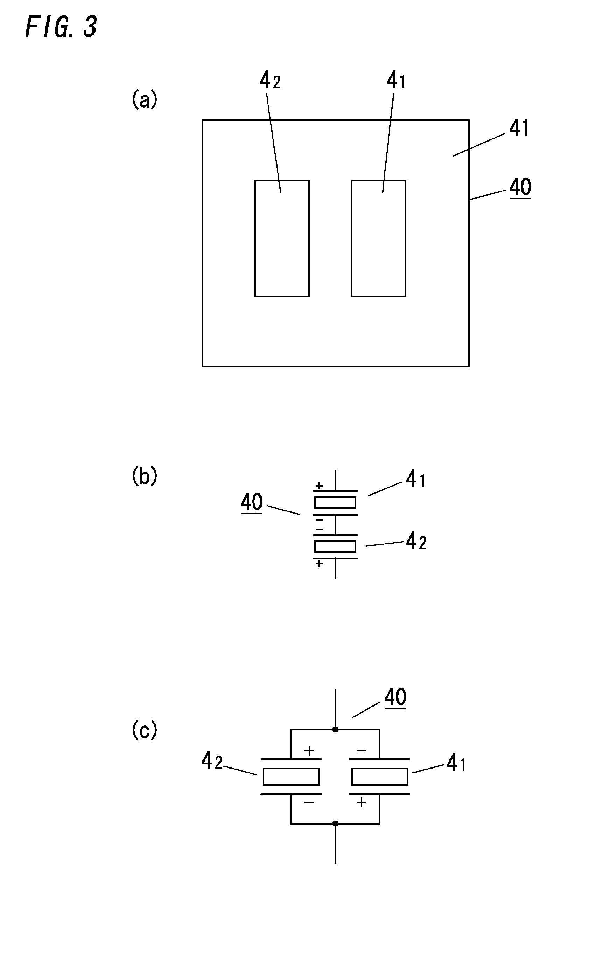

Since the circuit block 6 of the present embodiment includes the shield plate 66, it is possible to prevent the oscillation which would otherwise occur due to capacitance coupling between the infrared reception element 40 and the above amplifier circuit, for example. Besides, the infrared reception element 40 may be configured to produce the differential output between the pyroelectric elements $4_1$ and $4_2$ in the pair. Therefore, for example, as shown in (c) of FIG. 3, the pyroelectric elements $4_1$ and $4_2$ are connected in anti-parallel with each other.

The second circuit board 67 is provided with a thermal insulation space 67a penetrating the second circuit board 67 in a thickness direction thereof. The thermal insulation space 67a is formed in order to thermally insulate the pyroelectric elements $4_1$ and $4_2$ from the second circuit board 67. Therefore, a gap is formed between the shield plate 66 and each of the pyroelectric elements $4_1$ and $4_2$. Thus, it is possible to improve the sensitivity. Instead of forming the thermal insulation space 67a in the second circuit board 67, a supporting member may extend from the second circuit board 67. The supporting member is configured to support the infrared reception element 40 such that a gap is formed between the shield plate 66 and each of the pyroelectric elements $4_1$ and $4_2$.

There are through holes 62b, 65b, 66b, and 67b respectively extending the first circuit board 62, the resin layer 65, the shield plate 66, and the second circuit board 67 in a thickness direction thereof. The single terminal pin 75 is inserted into a set of the through holes 62b, 65b, 66b, and 67b. The infrared reception element 40 and the above signal processing circuit are electrically connected to each other via the terminal pins 75. Besides, when a boring process of forming through holes penetrating the circuit block 6 in a thickness direction thereof is performed after a process of stacking the first circuit board 62, the resin layer 65, the shield plate 66, and the second circuit board 67, the through holes 62b, 65b, 66b, and 67b can be formed by means of performing the boring process one time. With using such a process of fabricating device embedded substrates, it is possible to simplify a fabrication process and to easily make an electrical connection inside the circuit block 6.

As to the three terminal pins 75, the first one 75 (75a) is used for supplying power, and the second one 75 (75b) is used for outputting signals, and the third one 75 (75c) is used for grounding. The shield layer of the shield plate 66 is electrically connected to the terminal pin 75c used for grounding. The terminal pins 75a and 75b are fixed to the stem 71 hermetically by use of the sealing portions 74 and 74 (74a and 74b), respectively. The sealing portions 74a and 74b are made of a dielectric sealing glass The terminal pins 75c is fixed to the stem 71 hermetically by use of the sealing portion 74 (74c) which is made of metal. In short, the terminal pins 75a and 75b are electrically insulated from the stem 71 but the terminal pin 75c has the same electrical potential as the stem 71. Therefore, the ground potential is given to the shield plate 66. Besides, the potential of the shield plate 66 is not limited to the ground potential, but may be a specific potential enabling the shield plate 66 to have a shield function. In the present embodiment, the cap 72 and the stem 71 constitute a shield member configured to block an outside electromagnetic wave. In other words, the package 7 of the present embodiment includes the shield member made of metal and configured to prevent transmission of an electromagnetic wave from an outside to an inside of the package 7.

When the infrared gas detector of the present embodiment is fabricated, first, the circuit block 6 on which the infrared reception element 40 is mounted is placed on the spacer 9 fixed on the stem 71. Thereafter, the outer rim 72c of the cap 72 to which the infrared optical filter 20 is fixed so as to cover the window opening 7a is welded to the flange 71c of the stem 71. Thus, the package 7 is hermetically sealed. The inside of the package 7 is filled with dry-nitrogen in order to prevent a variation of characteristics of the infrared reception element 40 caused by an influence of humidity, for example. In the present embodiment, the package 7 is a can package. Therefore, the package 7 can have its improved shielding effect for exogenous noises. Further, the air tightness of the package 7 can be improved, and thus the package 7 can have its improved resistance to climate conditions. Alternatively, the package 7 may be a ceramics package which is provided with a shield layer made of a metal layer as the shield member and provides a shield effect.

The optical filter 20 includes a filter main body 20a and a flange portion 20b. The filter main body 20a includes a filter formation substrate (filter substrate) 1, narrow band transmission filters (transmission filters) 2 ($2_1$ and $2_2$), and a wideband cut-off filter (cut-off filter) 3. The flange portion 20b extends from an outer periphery of the filter main body 20a (outer periphery of the filter substrate 1). The flange portion 20b is fixed to a periphery of the window opening 7a of the cap 72 by use of a bonding portion 58. Thus, the filter substrate 1 is thermally coupled to the package 7. In order to improve thermal conductance between the optical filter 20 and the cap 72, a high thermal conductive adhesive such as a silver paste (an epoxy resin containing metallic fillers) and a solder paste is used as the bonding portion 58. The filter main body 20a is formed into a rectangular shape (in the present embodiment, a square shape). The flange portion **20b** has its outer periphery which is formed into a rectangular (in the present embodiment, a square shape). In the present embodiment, the filter main body **20a** has a rectangular shape of a few mm SQ. However, a shape and dimensions of the filter main body **20a** are not limited.

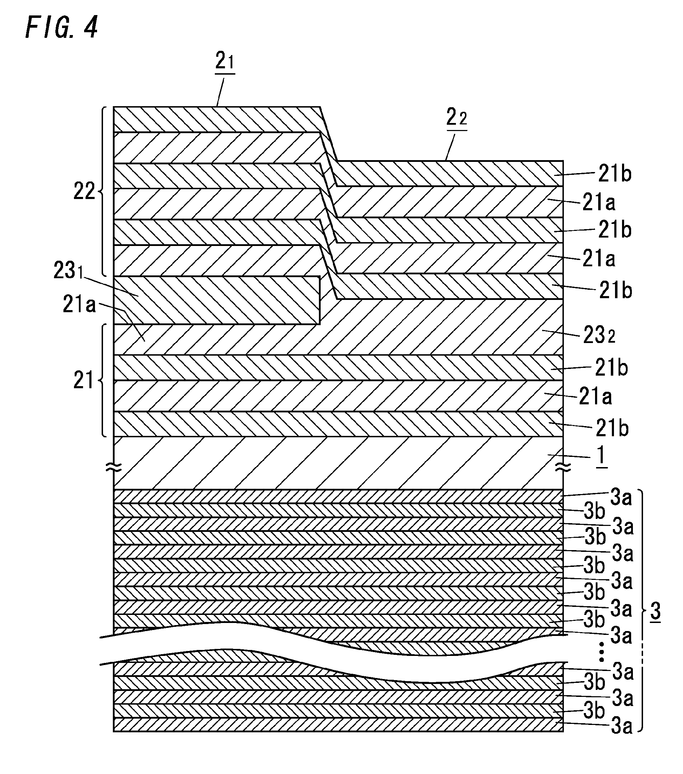

As shown in FIG. 4, the optical filter **20** (the filter main body **20a)** includes the filter substrate **1** made of an infrared transparent material (e.g., Si), a pair of the transmission filters $2_1$ and $2_2$ each configured to transmit infrared with a selected wavelength, and the cut-off filter **3** configured to absorb infrared with a wavelength longer than the both selected wavelengths of the transmission filters $2_1$ and $2_2$. The transmission filters $2_1$ and $2_2$ and the cut-off filter 3 are formed over the filter substrate **1**. The transmission filters $2_1$ and $2_2$ in the pair are formed on a first surface (upper surface, in FIG. 4) of the filter substrate **1** in such a manner to face the corresponding pyroelectric elements $4_1$ and $4_2$, respectively. The transmission filters $2_1$ and $2_2$ in the pair have the different selected wavelengths. The cut-off filter **3** is formed on a second surface (lower surface, in FIG. 4) of the filter substrate **1**. The cut-off filter **3** is configured to absorb infrared having a wavelength which is longer than an upper limit of a reflection band defined by the transmission filters $2_1$ and $2_2$. In other words, the cut-off filter **3** absorbs infrared having a wavelength exceeding a predetermined wavelength which is longer than both of the selected wavelengths of the transmission filters $2_1$ and $2_2$. In the present embodiment, one transmission filter $2_1$, a portion of the filter substrate **1** overlapped with the transmission filter $2_1$, and a portion of the cut-off filter **3** overlapped with the transmission filter $2_1$ constitute a filter element. Further, the other transmission filter $2_2$, a portion of the filter substrate **1** overlapped with the transmission filter $2_2$, and a portion of the cut-off filter 3 overlapped with the transmission filter $2_2$ constitute another filter element. In the present embodiment, the plural filter elements share the filter substrate **1**. In other words, the filter substrates **1** of the respective filter elements are provided as a single part.

The transmission filter $2_1$ includes a first $\lambda/4$ multilayer (first multilayer) **21,** a second $\lambda/4$ multilayer (second multilayer) **22,** and a wavelength selection layer **23** ($23_1$) interposed between the first multilayer **21** and the second multilayer **22**. The transmission filter $2_2$ includes the first multilayer **21,** the second multilayer **22,** and the wavelength selection layer **23** ($23_2$) interposed between the first multilayer **21** and the second multilayer **22**. Each of the first multilayer **21** and the second multilayer **22** is fabricated by stacking plural (two) kinds of thin films **21b** and **21a** having different refractive indices and the same optical thickness. The first multilayer **21** is formed on the first surface of the filter substrate **1**. The second multilayer **21** is formed over the first multilayer **21.** In other words, the second multilayer **22** is formed in an opposite side of the first multilayer **21** from the filter substrate **1**. The wavelength selection layer $23_1$ has an optical thickness which is different from the optical thickness of the thin film 21a and is selected based on the selected wavelength regarding the transmission filter $2_1$. The wavelength selection layer $23_2$ has an optical thickness which is different from the optical thickness of the thin film **21b** and is selected based on the selected wavelength regarding the transmission filter $2_2$. Besides, an acceptable range of a variation of the optical thickness of each of the thin films **21a** and **21b** is approximately $\pm$ 1 %. An acceptable range of a variation of a physical thickness is decided depending on the variation of the optical thickness.

The thin film **21b** is a low refractive index layer which has a refractive index lower than the thin film **21a**. For example, a material (low refractive index material) of the thin film **21b** is $Al_2O_3$ which is one selected from far infrared absorption materials having a property of absorbing far infrared. The thin film **21a** is a high refractive index layer which has a refractive index higher than the thin film **21b**. For example, a material (high refractive index material) of the thin film **21a** is Ge. The wavelength selection layer $23_1$ is made of the same material as the second thin film **21b** from the top of the first multilayer **21** which is located directly below the wavelength selection layer $23_1$. The wavelength selection layer $23_2$ is made of the same material as the second thin film **21b** from the top of the first multilayer **21** which is located directly below the wavelength selection layer $23_2$. The thin films **21b** and **21b** of the second multilayer **22** farthest from the filter substrate **1** are made of the above low refractive index material. In the present embodiment, the far infrared absorption material is not limited to $Al_2O_3$ but may be $SiO_2$ and $Ta_2O_5$ which are oxidation products other than $Al_2O_3$. $SiO_2$ has a refractive index lower than $Al_2O_3$. Therefore, with using $SiO_2$, it is possible to increase a difference in a refractive index between the high refractive index material and the low refractive index material.

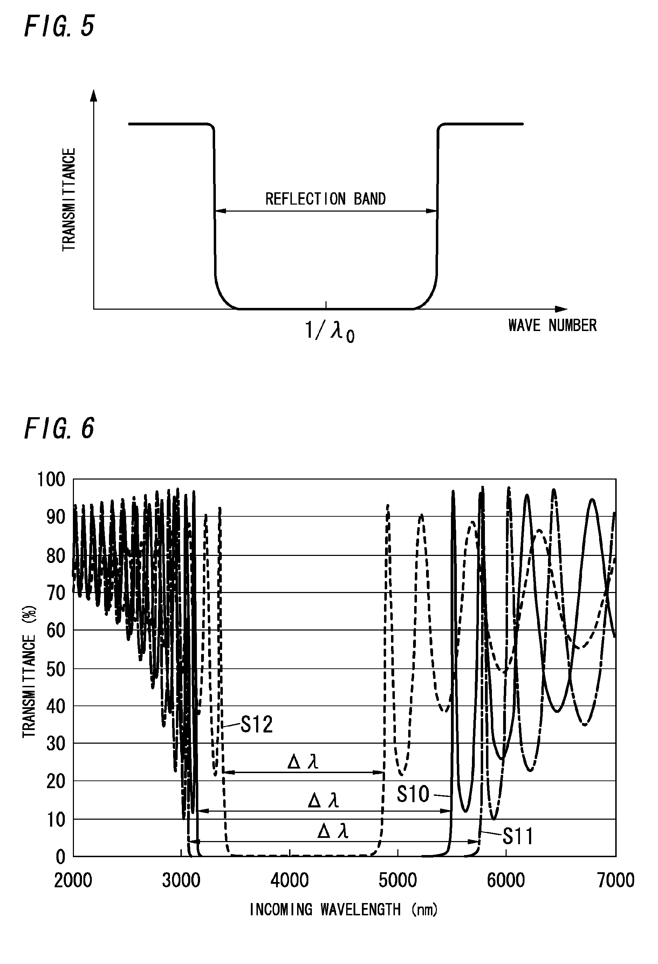

For example, a gas which may be generated in a house is $CH_4$ (methane), $SO_3$ (sulfur trioxide), $CO_2$ (carbon dioxide), CO (carbon monoxide), and NO (nitric monoxide). A specific wavelength (absorption wavelength) for detecting (sensing) a gas depends on a gas to be detected. For example, the specific wavelength of $CH_4$ (methane) is 3.3 $\mu$m. The specific wavelength of $SO_3$ (sulfur trioxide) is 4.0 $\mu$m. The specific wavelength of $CO_2$ (carbon dioxide) is 4.3 $\mu$m. The specific wavelength of CO (carbon monoxide) is 4.7 $\mu$m. The specific wavelength of NO (nitric monoxide) is 5.3 $\mu$m. In order to selectively detect the presence of infrared rays which are respectively corresponding to all the specific wavelengths listed in the above, the optical filter 20 needs to have the reflection band within an infrared wavelength range of approximately 3.1 $\mu$m to 5.5 $\mu$m. Further, the reflection width $\Delta\lambda$ which is equal to or more than 2.4 $\mu$m is necessary. As shown in FIG. 5, the reflection band is symmetric with respect to $1/\lambda_0$ with regard to a transmission spectra diagram. In this transmission spectra diagram, a horizontal axis denotes a wave number defined as the reciprocal of a wavelength of incident light, and a vertical axis denotes a transmittance. Besides, $\lambda_0$ denotes a setting wavelength corresponding to a quadruple of the optical thickness common to the thin films **21a** and **21b.**

In the present embodiment, each of the first multilayer **21** and the second multilayer **22** has a setting wavelength $\lambda_0$ of 4.0 $\mu$m. Therefore, it is possible to decide a detection target gas from the gases listed in the above by selecting the wavelength selection layer (**23$_1$** and **23$_2$**) having the optical thickness corresponding to the detection target gas. When nH denotes a refractive index of the high refractive index material, the thin film **21a** has a physical thickness of $\lambda_0/4n_H$. When $n_L$ denotes a refractive index of the low refractive index material, the thin film **21b** has a physical thickness of $\lambda_0/4n_L$. For example, when the high refractive index material is Ge, **nH** is **4.0**. Therefore, the thin film **21a** has the physical thickness of 250 nm. For example, when the low refractive index material is $Al_2O_3$, **nL** is 1.7. Therefore, the thin film **21b** has the physical thickness of 588 nm.

FIG. 6 shows a result of simulation of the transmission spectra. In this simulation, it is assumed that the filter substrate **1** is a Si substrate. In addition, it is assumed that the number of the stacked thin films of the $\lambda/4$ multilayer (refractive index periodic structure) which is fabricated by alternately stacking the thin films **21b** and **21a** is 21. Further, it is assumed that no absorption occurs in each of the thin films **21a** and **21b** (i.e., each of the thin films **21a** and **21b** has an extinction coefficient of 0). Besides, the setting wavelength $\lambda_0$ is 4 $\mu$m.

In FIG. 6, the horizontal axis denotes the wavelength of incident light (infrared), and the vertical axis denotes the transmittance. In FIG. 6, **S10** indicates the transmission spectrum corresponding to a condition where the high refractive index material is Ge ($n_H = 4.0$) and the low refractive index material is $Al_2O_3$ (**$n_L$ = 1.7**). In FIG. 6, **S11** indicates the transmission spectrum corresponding to a condition where the high refractive index material is Ge (nH = 4.0) and the low refractive index material is $SiO_2$ (**nL** = 1.5). In FIG. 6, **S12** indicates the transmission spectrum corresponding to a condition where the high refractive index material is Ge ($n_H = 4.0$) and the low refractive index material is ZnS (**$n_L$** = 2.3).

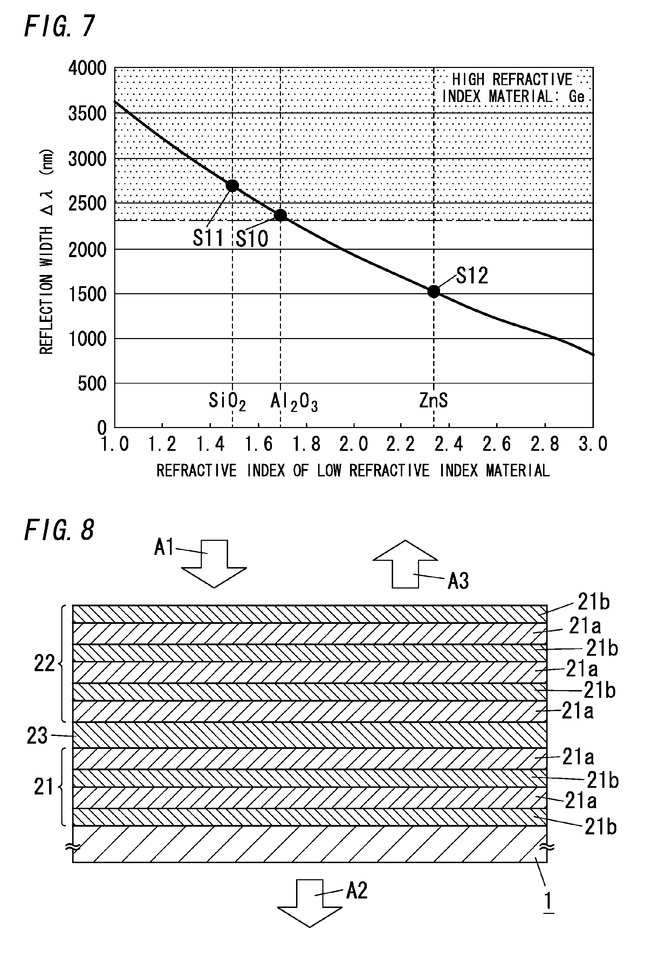

FIG. 7 shows a result of simulation of the reflection width $\Delta\lambda$ of the $\lambda/4$ multilayer (refractive index periodic structure) under the condition where the high refractive index material is Ge and the refractive index of the low refractive index material is varied. Besides, points indicated by **S10, S11,** and **S12** in FIG. 7 are respectively corresponding to **S10, S11,** and **S12** in FIG. 6.

FIGS. 6 and 7 show that the reflection width $\Delta\lambda$ is increased with an increase of the difference in the refractive index between the high refractive index material and the low refractive index material. Further, FIGS. 6 and 7 show that with using $Al_2O_3$ or $SiO_2$ as the low refractive index material while the high refractive index material is Ge, the optical filter **20** can have the reflection band corresponding to at least the infrared wavelength range of 3.1 $\mu$m to 5.5 $\mu$m and can have the reflection width $\Delta\lambda$ equal to or more than 2.4 $\mu$m.

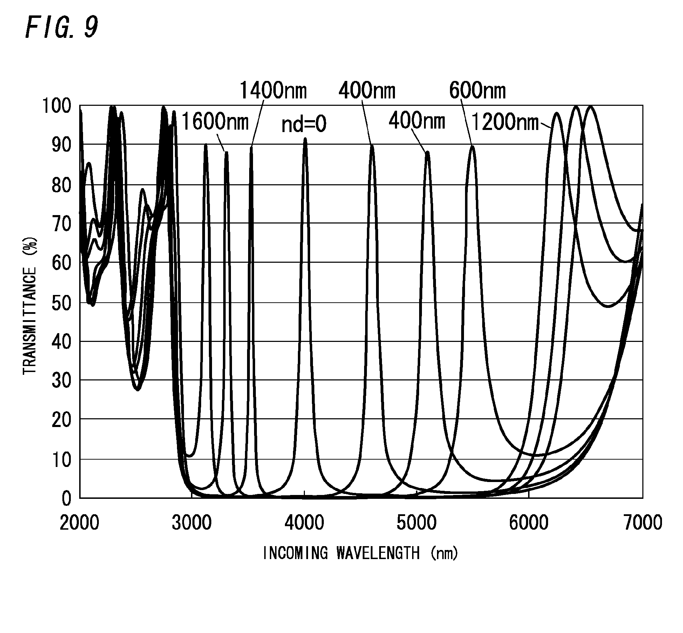

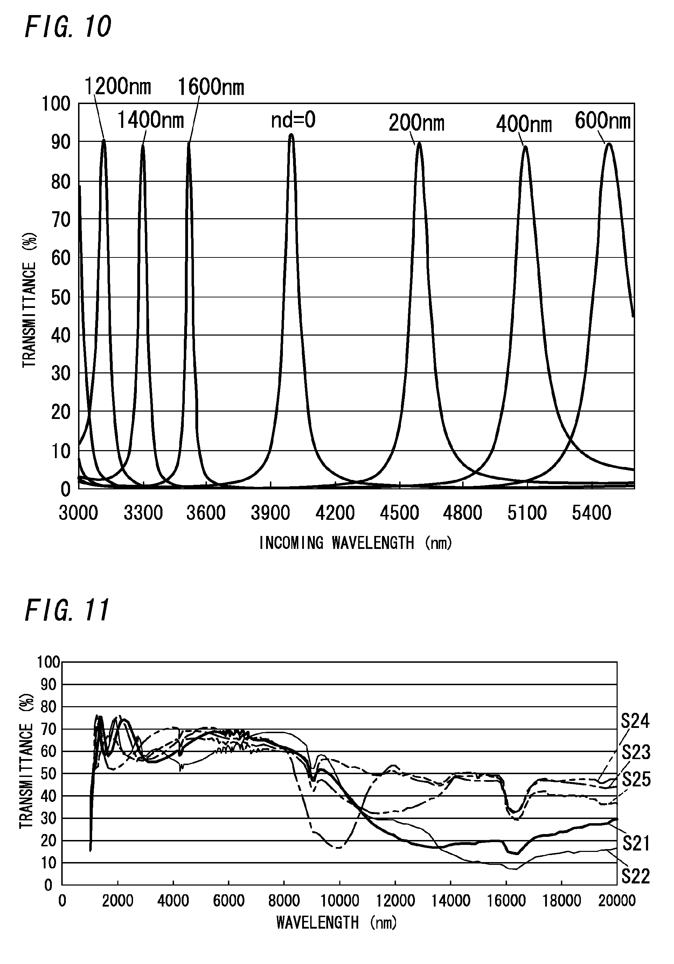

FIGS. 9 and 10 show a result of simulation of the transmission spectra with respect to the configuration shown in FIG. 8. In the configuration of FIG. 8, the number of thin films of the first multilayer **21** is 4, and the number of thin films of the second multilayer **22** is 6. Further, the high refractive index material of the thin film **21a** is Ge, and the low refractive index material of the thin film **21b** is $Al_2O_3$. The wavelength selection layer **23** is made of $Al_2O_3$ is used as the low refractive index material. In this simulation, the optical thickness of the wavelength selection layer **23** is in the range of 0 nm to 1600 nm. In FIG. 8, arrow **A1** denotes incident light, and arrow **A2** denotes reflected light, and arrow **A3** denotes transmitted light. When the wavelength selection material **23** is made of the material having the refractive index **"n"** and has its physical thickness **"d",** the optical thickness of the wavelength selection layer **23** is defined as the product (= nd) of the refractive index "n" and the physical thickness **"d"**. Also in this simulation, it is assumed that no absorption occurs in each of the thin films **21a** and **21b** (i.e., each of the thin films **21a** and **21b** has its extinction coefficient of 0). Besides, the setting wavelength $\lambda_0$ is 4 $\mu$m. Further, the thin film **21a** has its physical thickness of 250 nm, and the thin film **21b** has its physical thickness of 588 nm.

FIGS. 9 and 10 show that the first multilayer **21** and the second multilayer **22** produces the reflection band in the infrared wavelength range of 3 $\mu$m to 6 $\mu$m. Further, FIGS. 9 and 10 show that a narrow transmission band locally exists within the reflection band from 3 $\mu$m to 6 $\mu$m, and its transmission peak wavelength depends on the optical thickness **"nd"** of the corresponding wavelength selection layer **23.** For example, FIGS. 9 and 10 show that transmission peak wavelength can be continuously varied from 3.1 $\mu$m to 5.5 $\mu$m depending on the variation of the optical thickness **"nd"** of the wavelength selection layer **23** from 0 nm to 1600 nm. More specifically, the wavelength selection layers 23 with their optical thickness **"nd"** of 1390 nm, 0 nm, 95 nm, 235 nm, and 495 nm give the narrow transmission bands with their transmission peak wavelength of 3.3 $\mu$m, 4.0 $\mu$m, 4.3 $\mu$m, 4.7 $\mu$m, and 5.3 $\mu$m, respectively.

Accordingly, with appropriately selecting the optical thickness **"nd"** of the wavelength selection layer **23** without changing the configurations of the first multilayer **21** and the second multilayer **22,** it is possible to sense a desired gas (e.g., $CH_4$ identified by the specific wavelength of 3.3 $\mu$m, $SO_3$ identified by the specific wavelength of 4.0 $\mu$m, $CO_2$ identified by the specific wavelength of 4.3 $\mu$m, CO identified by the specific wavelength of 4.7 $\mu$m, and NO identified by the specific wavelength of 5.3 $\mu$m) or a fire corresponding to the specific wavelength of 4.3 $\mu$m. Besides, the range of the optical thickness **"nd"** from 0 nm to 1600 nm is corresponding to the range of the physical thickness **"d"** from 0 nm to 941 nm. As shown in FIG. 9, when the wavelength selection layer **23** has its optical thickness "nd" of 0 nm (i.e., the wavelength selection layer **23** is not provided), the transmission peak wavelength is 4000 nm. This transmission peak wavelength is derived from the first multilayer **21** and the second multilayer **22** having their setting wavelengths $\lambda_0$ of 4 $\mu$m (4000 nm). Therefore, when no wavelength selection layer **23** is provided, the transmission peak wavelength can be varied depending on the setting wavelength $\lambda_0$ of each of the first multilayer **21** and the second multilayer **22**.

In the aforementioned instance, $Al_2O_3$ is adopted as the low refractive index material. $Al_2O_3$ is the far infrared absorption material which absorbs infrared having a wavelength longer than the upper limit of the infrared reflection band (i.e., the infrared reflection band defined by the transmission filters **2$_1$** and **2$_2$**) defined by the first multilayer **21** and the second multilayer **22**. Analysis is made to the five different far infrared absorption materials ($MgF_2$, $Al_2O_3$, SiOx, Ta$_2$O5, and SiN$_X$). FIG. 11 shows a result of measurement of transmission spectra respectively corresponding to an $MgF_2$ film, an $Al_2O_3$ film, an SiOx film, a $Ta_2O_5$ film, and an SiNx film. Each of the $MgF_2$ film, the $Al_2O_3$ film, the SiOx film, the $Ta_2O_5$ film, and the SiNx film has its thickness of 1 $\mu$m. Following TABLE 1 shows respective deposition conditions of depositing the $MgF_2$ film, the $Al_2O_3$ film, the SiOx film, the $Ta_2O_5$ film, and the SiNx film on the Si substrate. Besides, ion beam assisted evaporation apparatus is used as deposition apparatus for each of the $MgF_2$ film, the $Al_2O_3$ film, the SiOx film, the $Ta_2O_5$ film, and the SiNx film.

[TABLE 1]

| | | $MgF_2$ | $Al_2O_3$ | $SiO_X$ | $Ta_2O_5$ | $Si_3N_4$ |
|---|---|---|---|---|---|---|
| refractive index | | 1.38 | 1.68 | 1.70 | 2.10 | 2.30 |
| deposition condition | common condition | substrate: Si substrate, thickness: 1 $\mu$m, evaporation rate: 5 Å/sec <br> substrate temperature: 250°C | | | | |
| | IB condition | no IB | oxygen IB | no IB | oxygen IB | Ar IB |

In TABLE 1, the item "IB condition" indicates a condition of ion beam assist in the deposition process performed by the ion beam assisted evaporation apparatus. The IB condition "no IB" indicates nonuse of an ion beam. The IB condition "oxygen IB" indicates the use of an oxygen ion beam. The IB condition "Ar IB" indicates the use of an argon ion beam. In FIG. 11, the horizontal axis denotes a wavelength, and the vertical axis denotes a transmittance. With regard to FIG. 11, **S20, S21**, **S22, S23,** and **S24** indicate transmission spectra of the $Al_2O_3$ film, the $Ta_2O_5$ film, the SiOx film, the SiNx film, and the $MgF_2$ film, respectively.

Following TABLE 2 shows analysis results of the $MgF_2$ film, the $Al_2O_3$ film, the SiOx film, the $Ta_2O_5$ film, and the SiNx film with regard to evaluation items "optical property: absorption", "refractive index", and "ease of deposition".

[TABLE 2]

| | $MgF_2$ | $Al_2O_3$ | $SiO_X$ | $Ta_2O_5$ | $Si_3N_4$ |
|---|---|---|---|---|---|
| optical property: absorption | Poor | Good | Average | Good | Average |
| refractive index | Very good | Good | Good | Average | Average |
| ease of deposition | Average | Very good | Average | Good | Average |

With regard to the evaluation item "optical property: absorption", evaluation was made on the basis of an absorption ratio for far infrared having a wavelength not less than 6 $\mu$m. The absorption ratio is calculated from the transmission spectrum shown in FIG. 11. TABLE 2 shows an evaluation rank for each evaluation item by use of "Very good", "Good", "Average", and "Poor", listed in the order of the evaluation rank from the highest to the lowest. With regard to the evaluation item "optical property: absorption", the higher evaluation rank is assigned to the higher far infrared absorption ratio, and the lower evaluation rank is assigned to the lower far infrared absorption ratio. With regard to the evaluation item "refractive index", the higher evaluation rank is assigned to the lower refractive index, and the lower evaluation rank is assigned to the higher refractive index, in consideration of increasing a difference in the refractive index between the high refractive index material and the low refractive index material. With regard to the evaluation item "ease of deposition", the higher evaluation rank is assigned to the lower level of the difficulty of forming a dense film by means of an evaporation technique or a sputtering technique, and the lower evaluation rank is assigned to the higher level of the difficulty of forming a dense film. Besides, with respect to each evaluation item, the evaluation result of SiOx was obtained by evaluating $SiO_2$, and the evaluation result of SiNx was obtained by evaluating $Si_3N_4$.

TABLE 2 shows a slight difference among the five materials ($MgF_2$, $Al_2O_3$, $SiO_X$, $Ta_2O_5$, and SiNx) with regard to the evaluation item "ease of deposition". Consequently, in consideration of the evaluation items "optical property: absorption" and "refractive index", it is preferred that the far infrared absorption material is selected from $Al_2O_3$, $SiOx$, $Ta_2O_5$, and $SiNx$. In comparison to using $SiOx$ or $SiNx$ as the far infrared absorption material, using $Al_2O_3$ or $T_2O_5$ as the far infrared absorption material can improve the absorbability for far infrared. In consideration of increasing the difference in the refractive index between the high refractive index material and the low refractive index material, $Al_2O_3$ is preferable to $T_2O_5$. When $SiNx$ is used as the far infrared absorption material, it is possible to improve moisture resistance of the thin film **21b** made of the far infrared absorption material. When $SiOx$ is used as the far infrared absorption material, it is possible to increase the difference in the refractive index between the high refractive index material and the low refractive index material and to reduce the number of thin films of each of the first $\lambda/4$ multilayer **21** and the second $\lambda/4$ multilayer **22.**

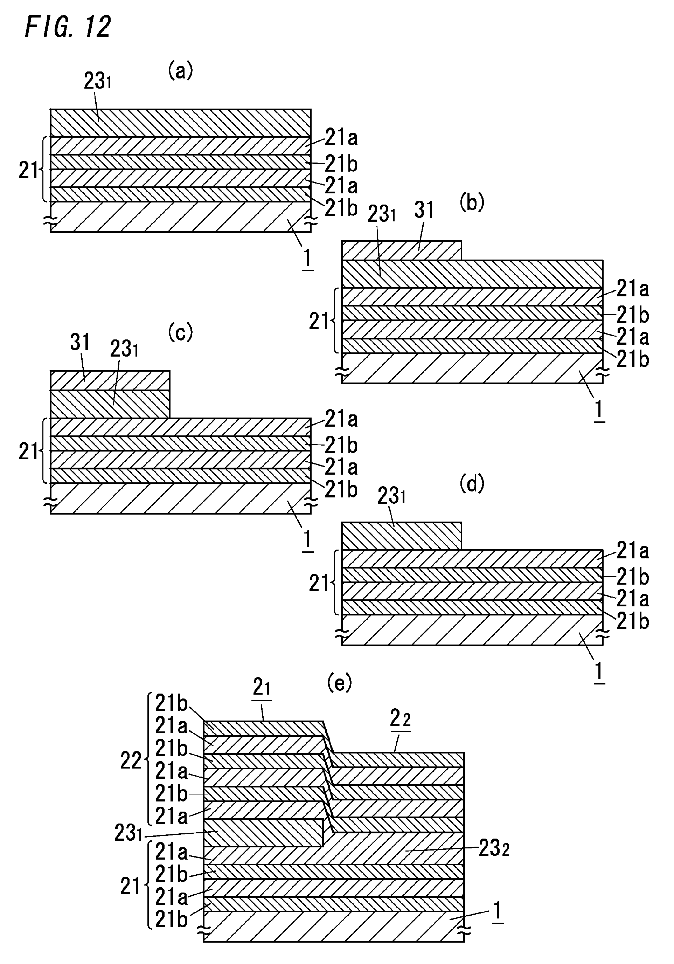

The following explanation referring to FIG. 12 is made to a process of manufacturing the transmission filters **2$_1$** and **2$_2$.**

First, a first multilayer forming process is performed. In the first multilayer forming process, the first multilayer **21** is formed by alternately stacking the thin film **21b** and the thin film **21a** on the entire first surface of the filter substrate **1**. The filter substrate **1** is a Si substrate. Each thin film **21b** is made of $Al_2O_3$ being the low refractive index material and has a predetermined physical thickness (588 nm, in this instance). Each thin film **21a** is made of Ge being the high refractive index material and has a predetermined physical thickness (250 nm, in this instance). After the first multilayer forming process, a wavelength selection layer forming process is performed. In the wavelength selection forming process, the wavelength selection layer **23$_1$** is deposited on the entire surface of the first multilayer **21**. The wavelength selection layer **23$_1$** is made of the same material ($Al_2O_3$ being the low refractive index material, in this instance) as the second thin film **21b** from the top of the first multilayer **21**. The wavelength selection layer **23$_1$** has its optical thickness selected in accordance with the selection wavelength of the transmission filter **2$_1$**. Thereby, the structure shown in (a) of FIG. 12 is obtained. For example, an evaporation technique or a sputtering technique can be used as the deposition method for each of the thin films **21b** and **21a** and the wavelength selection layer **23$_1$**. In this example, the two kinds of the thin films **21b** and **21a** can be deposited continuously. When $Al_2O_3$ is used as the low refractive index material as mentioned in the above, the use of the ion beam assisted deposition is preferable. With using the ion beam assisted deposition, the thin film **21b** is exposed to the oxygen ion beam in order to improve denseness of the thin film **21b** in the process of depositing the thin film **21b**. Alternatively, the low refractive index material may be one selected from $SiOx$, $T_2O_5$, and $SiNx$ which are the far infrared absorption materials other than $Al_2O_3$. In any case, preferably, the ion beam assisted deposition is used for forming the thin film **21b** made of the far infrared absorption material. In this instance, it is possible to precisely control the chemical composition of the thin film **21b** made of the low refractive index material and to improve the denseness of the thin film **21b.**

After the wavelength selection layer forming process, a resist layer forming process is performed. In the resist layer forming process, a resist layer **31** is formed by means of a photolithography technique so as to cover only the portion of the wavelength selection layer **23$_1$** corresponding to the transmission filter **2$_1$**. Thereby, the structure shown in (b) of FIG. 12 is obtained.

Thereafter, a wavelength selection layer patterning process is performed. In the wavelength selection layer patterning process, the wavelength selection layer **23$_1$** is etched in order to remove its unwanted part. In this etching process, the resist layer **31** is used as an etching mask, and the top thin film **21a** of the first multilayer **21** is used as an etching stopper layer. Thereby, the structure shown in (c) of FIG. 12 is obtained. In the wavelength selection layer patterning process, when the low refractive index material is an oxidation product ($Al_2O_3$) and the high refractive index material is a semiconductor material (Ge) as mentioned in the above, the wet etching technique with using the hydrofluoric acid solution as an etchant may be employed. In contrast to the dry etching technique, with using the above wet etching technique, it is possible to perform the etching process with high etching selectivity. This is explained by the reason that an oxidation product (e.g., $Al_2O_3$ and $SiO_2$) is easily dissolved in the hydrofluoric acid solution but Ge is hardly dissolved in the hydrofluoric acid solution. For example, the wet etching is performed by use of, as the hydrofluoric acid solution, the diluted hydrofluoric acid (e.g., the diluted hydrofluoric acid solution has the concentration of the hydrofluoric acid of 2 %) which is the mixture of the hydrofluoric acid (HF) and pure water ($H_2O$). In this example, the etching rate of $Al_2O_3$ is about 300 nm/min, and the etching rate ratio of $Al_2O_3$ to Ge is about 500 to 1. Therefore, it is enabled to perform the etching process with high etching selectivity.

After the wavelength selection layer patterning process, a resist layer removing process is performed. In the resist layer removing process, the resist layer **31** is removed. Thereby, the structure shown in (d) of FIG. 12 is obtained.

After the resist layer removing process, a second multilayer forming process is performed. In the second multilayer forming process, the second multilayer **22** is formed by alternately stacking the thin film **21a** and the thin film **21b** on the entire surface of the wavelength selection layer **23**. Each thin film **21a** is made of Ge being the high refractive index material and has a predetermined physical thickness (250 nm, in this instance). Each thin film **21b** is made of $Al_2O_3$ being the low refractive index material and has a predetermined physical thickness (588 nm, in this instance). Thereby, the structure shown in (e) of FIG. 12 is obtained. After the second multilayer forming layer is performed, with regard to a portion of the first multilayer **21** corresponding to the transmission filter **2₂,** the bottommost thin film **21a** of the second multilayer **22** is directly formed on the topmost thin film **21a** of the first multilayer **21.** Thus, the topmost thin film **21a** of the first multilayer **21** and the bottommost thin film **21a** of the second multilayer **22** constitute the wavelength selection layer **23₂** of the transmission filter **2₂.** The transmission filter **22** shows the transmission spectrum corresponding to an instance where the optical thickness **"nd"** is 0 nm in the simulation result illustrated in FIG. 10. For example, an evaporation technique or a sputtering technique can be used as the deposition method for each of the thin films **21a** and **21b.** In this example, the two kinds of the thin films **21b** and **21a** can be deposited continuously. When $Al_2O_3$ is used as the low refractive index material, the use of the ion beam assisted deposition is preferable. With using the ion beam assisted deposition, the thin film **21b** is exposed to the oxygen ion beam in order to improve denseness of the thin film **21b** in the process of depositing the thin film **21b.**

In brief, with regard to the process of forming the transmission filters **2₁** and **2₂,** the wavelength selection forming layer is performed one time during a fundamental process of alternately stacking, on the first surface of the filter substrate **1,** the plural kinds (two kinds) of the thin films **21b** and **21a** having the different refractive indices and the same optical thickness. Thereby, the plural transmission filters **2₁** and **2₂** are formed. The wavelength selection layer forming process includes a wavelength selection layer depositing process and a wavelength selection layer patterning process. In the wavelength selection layer depositing process, after formation of a laminated film (the first multilayer **21,** in this instance) in the fundamental process, the wavelength selection layer **23ᵢ** (i = 1, in this instance) is formed on the laminated film and is made of the same material as the second layer from the top of the laminated film. The optical thickness of the wavelength selection layer **23ᵢ** (i = 1, in this instance) is decided in accordance with the selection wavelength of the corresponding transmission filter **2ᵢ** (i = 1, in this instance) of the plural transmission filters **2₁,** ... , **2ₘ** (m = 2, in this instance). In the wavelength selection layer patterning process, with regard to the wavelength selection layer **23** deposited in the wavelength selection layer depositing process, an unwanted portion other than a portion belonging to the corresponding one transmission filter **2ᵢ** is etched. In the wavelength selection layer patterning process, the topmost layer of the laminated film is used as an etching stopper layer. Besides, with performing the wavelength selection layer forming process more than once during the aforementioned fundamental process, it is possible to form the optical filter **20** having the plural selection wavelengths. Therefore, it is possible to fabricate, from one chip, the optical filter **20** configured to sense all the aforementioned gasses ($CH_4$, $SO_3$, $CO_2$, CO, and NO).

In the aforementioned fabrication process, the thin film is formed on the laminated film (the first multilayer **21,** in this instance) already formed at the time of interrupting the fundamental process. The thin film is made of the same material as the second layer from the top of the already formed laminated film, and has the optical thickness selected in accordance with the corresponding transmission filter **2ᵢ** (i = 1, in this instance) of the plural transmission filters **2₁,** ..., **2ₘ** (m = 2, in this instance). Subsequently, with regard to the thin film formed on the laminated film, a portion other than a portion used for the corresponding one transmission filter **2ᵢ** (i = 1, in this instance) is etched. Thereby, the single patterned wavelength selection layer **23₁** is formed. However, the plural patterned wavelength selection layers **23** may be formed. For example, when the wavelength selection layer **23₂** is made of the same material as the wavelength selection layer **23₁** and has its optical thickness less than the wavelength selection layer **23₁,** the two patterned wavelength selection layers **23₁** and **23₂** may be formed by partially etching the thin film formed on the laminated film.

Alternatively, in the aforementioned fabrication process, performed between the first multilayer forming process and the second multilayer forming process may be a process of respectively forming the wavelength selection layers **23₁,** ..., **23ₘ** (m = 2, in this instance) on the portions of the laminated film corresponding to the transmission filters **2₁,** ..., 2m (m = 2, in this instance) by means of a mask evaporation technique.

In the aforementioned fabrication process, when SiOx or SiNx is used as the far infrared absorption material of the one thin film **21b** of the two kinds of the thin films **21a** and **21b** while the other thin film **21a** is made of Si, the ion beam-assisted evaporation apparatus employing Si as an evaporation source may be used. In this instance, the thin film **21a** made of Si is deposited in a vacuum atmosphere. When the thin film **21b** is made of SiOx being an oxidation product, the thin film **21b** is deposited with exposed to the oxygen ion beam. When the thin film **21b** is made of SiNx being a nitride, the thin film **21b** is deposited with exposed to the nitrogen ion beam. According to the instance, it is possible to use the same evaporation source for forming the two kinds of the thin films **21a** and **21b.** Therefore, it is unnecessary to use the ion beam assisted evaporation apparatus with plural different evaporation sources, and therefore a fabrication cost can be lowered. Likewise, in the aforementioned fabrication process, when SiOx or SiNx is used as the far infrared absorption material of the one thin film **21b** of the two kinds of the thin films **21a** and **21b** while the other thin film **21a** is made of Si, sputtering apparatus employing Si as a target may be used. In this instance, the thin film **21a** made of Si is deposited in a vacuum atmosphere. When the thin film **21b** is made of SiOx being an oxidation product, the thin film **21b** is deposited in an oxygen atmosphere. When the thin film **21b** is made of SiNx being a nitride, the thin film **21b** is deposited in a nitrogen atmosphere. According to the instance, it is possible to use the same target for forming the two kinds of the thin films **21a** and **21b.** Therefore, it is unnecessary to use the sputtering apparatus with plural different targets, and therefore the fabrication cost can be lowered.

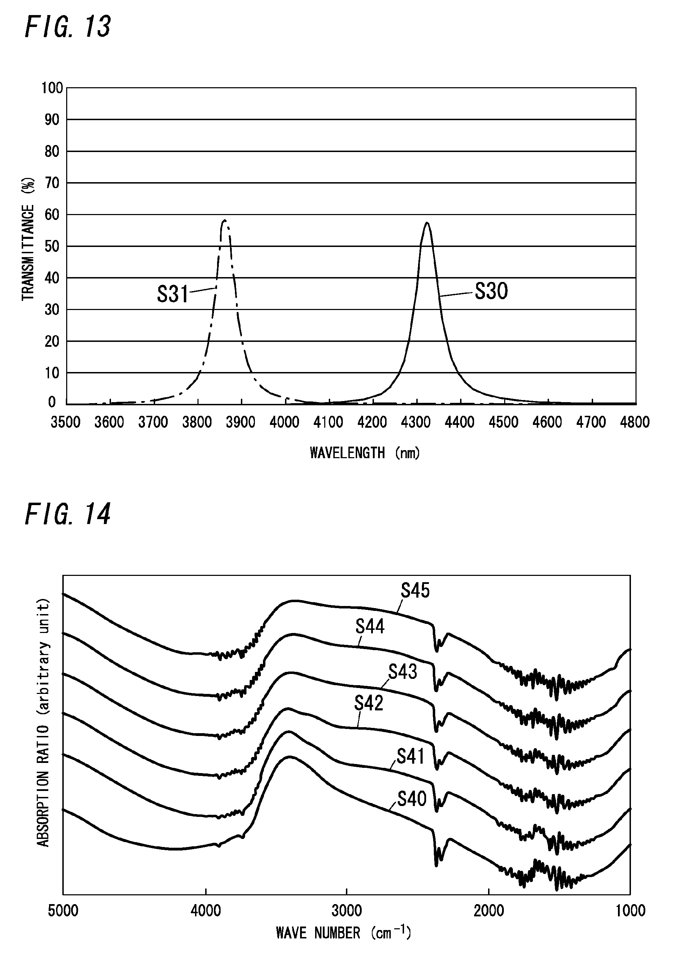

For example, with appropriately selecting the optical thickness **"nd"** of each of the wavelength selection layers **23₁** and **23₂**, it is possible to fabricate, from one chip, the infrared optical filter **20** having the transmission peak wavelengths of 3.8 $\mu$m and 4.3 $\mu$m as shown in FIG. 13.

It is sufficient that each of the first multilayer **21** and the second multilayer **22** has a refractive index periodic structure. Each of the first multilayer **21** and the second multilayer **22** may be fabricated by stacking three or more kinds of thin films.

The following explanation is made to the cut-off filter **3**.

The cut-off filter **3** is a laminated film fabricated by stacking plural (two) kinds of thin films **3a** and **3b** having different refractive indices. With regard to the cut-off filter **3**, the thin film **3a** is a low refractive index layer having a relatively low refractive index. The thin film **3a** is made of $Al_2O_3$ which is one of far infrared absorption materials absorbing far infrared. The thin film **3b** is a high refractive index layer having a relatively high refractive index. The thin film **3b** is made of Ge. In this cut-off filter **3**, the thin films **3a** and **3b** are stacked alternately. Although the number of thin films constituting the cut-off filter 3 is 11 in the present embodiment, the number is not limited to 11. In consideration of stability of the optical property of the cut-off filter **3**, it is preferred that the topmost layer of the cut-off filter **3** which is farthest from the filter formation substrate **1** is the thin film **3a** defined as the low refractive index layer. In the present embodiment, the far infrared absorption material is not limited to $Al_2O_3$ but may be $SiO_2$ and $Ta_2O_5$ which are oxidation products other than $Al_2O_3$. $SiO_2$ has a refractive index lower than $Al_2O_3$. Therefore, with using $SiO_2$, it is possible to increase a difference in a refractive index between the high refractive index material and the low refractive index material. Alternatively, SiNx being the nitride may be adopted as the far infrared absorption material.

As mentioned in the above, with regard to the cut-off filter **3**, the thin film **3a** which is one of the two kinds of the thin films **3a** and **3b** is made of the $Al_2O_3$ which is the far infrared absorption material absorbing far infrared. However, it is sufficient that at least one of plural kinds of thin films constituting the cut-off filter **3** is made of the far infrared absorption material. For example, the cut-off filter **3** may be a laminated film formed by stacking the three kinds of thin films (e.g., a Ge film, an $Al_2O_3$ film, and an SiOx film) on the filter substrate **1** made of Si in the order of the Ge film, the $Al_2O_3$ film, the Ge film, the $SiO_X$ film, the Ge film, the $Al_2O_3$ film, the Ge film, ... , from the nearest to the filter substrate **1**. In this alternative instance, two of the three kinds of the thin films are made of the far infrared absorption material.

The aforementioned cut-off filter **3** absorbs infrared having a wavelength which is longer than the upper limit of the infrared reflection band defined by the transmission filters **2₁** and **2₂**. The cut-off filter **3** is made of $Al_2O_3$ which is the far infrared absorption material absorbing infrared. Like the above transmission filters **2₁** and **2₂**, examination was made to five kinds of the far infrared absorption materials, that is, $MgF_2$, $Al_2O_3$, SiOx, $Ta_2O_5$, and SiNx.

In order to evaluate the effect of the ion beam assist, the present inventors prepared samples of the $Al_2O_3$ film. The samples were deposited on the Si substrate while exposed to different amounts of ion beam irradiation. The present inventors analyzed a property of the samples of the $Al_2O_3$ film by means of the FT-IR spectroscopy (Fourier transform infrared spectroscopy). FIG. 14 shows analysis results of the FT-IR spectroscopy, and the horizontal axis denotes a wave number and the vertical axis denotes an absorption ratio. With regard to FIG. 14, **S40** denotes the analysis result of the sample made without the ion beam assist. **S41, S42, S43, S44**, and **S45** denote the analysis results of the samples of the different amounts of the ion beam irradiation, respectively. **S41, S42, S43, S44**, and **S45** are listed in the order of the amount of the ion beam irradiation from the lowest to the greatest. This analysis results show that the ion beam irradiation can reduce the absorption ratio at approximately 3400 cm$^{-1}$ caused by water contained in the film. Further, the analysis results show that the absorption ratio at approximately 3400 cm$^{-1}$ caused by the water is decreased with an increase of the amount of the ion beam irradiation. In brief, it is considered that the use of the ion beam-assisted evaporation technique can improve the property of the $Al_2O_3$ and to enhance the denseness thereof.

In contrast to the use of $SiO_X$ or SiNx as the far infrared absorption material, the use of $Al_2O_3$ or $T_2O_5$ as the far infrared absorption material as mentioned in the above can improve the absorption property with regard to far infrared.

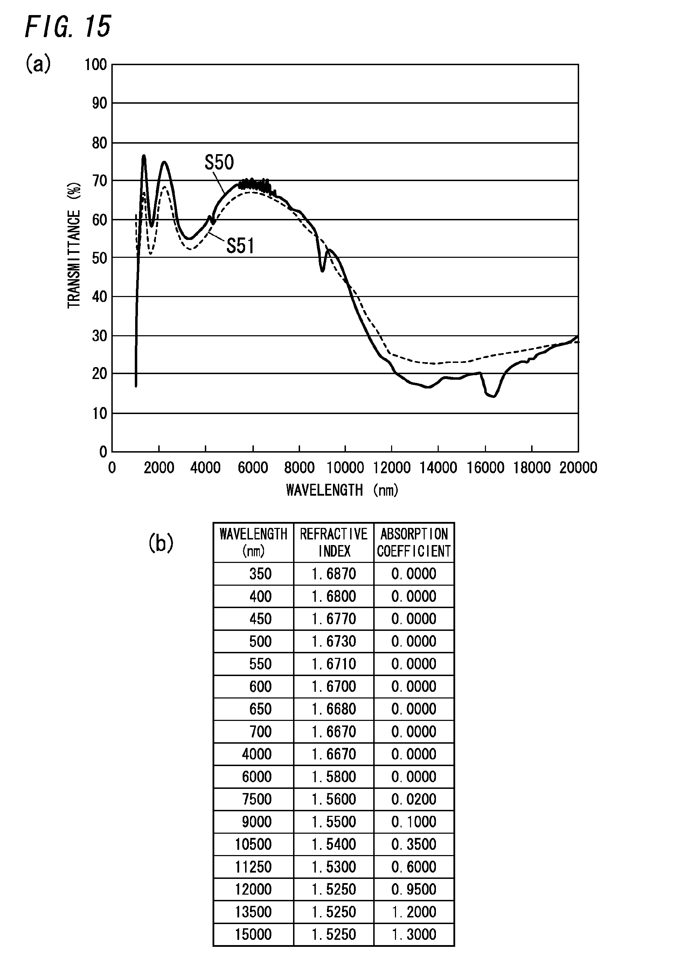

Moreover, the present inventors measured the transmission spectra of the reference including the $Al_2O_3$ layer of 1$\mu$m in thickness formed on the Si substrate. As a result, the present inventors obtained the actual measurement value illustrated by **S50** shown in (a) of FIG. 15. The actual measurement value **S50** shows that the value **S50** is deviated from the calculation value illustrated by **S51** shown in (a) of FIG. 15. The optical parameters (e.g., the refractive index and the absorption coefficient) of the thin layer **3a** made of $Al_2O_3$ were calculated from the actual measurement value **S50** shown in (a) of FIG. 15 by use of the Cauchy's formula. The calculated optical parameters are shown in (b) of FIG. 15. With regard to the new optical parameters shown in (b) of FIG. 15, the refractive index and the absorption coefficient are not constant in the wavelength range of 800 nm to 2000 nm. The refractive index is decreased with an increase of the wavelength. The absorption coefficient is increased gradually with an increase of the wavelength in the range of 7500 nm to 15000 nm.

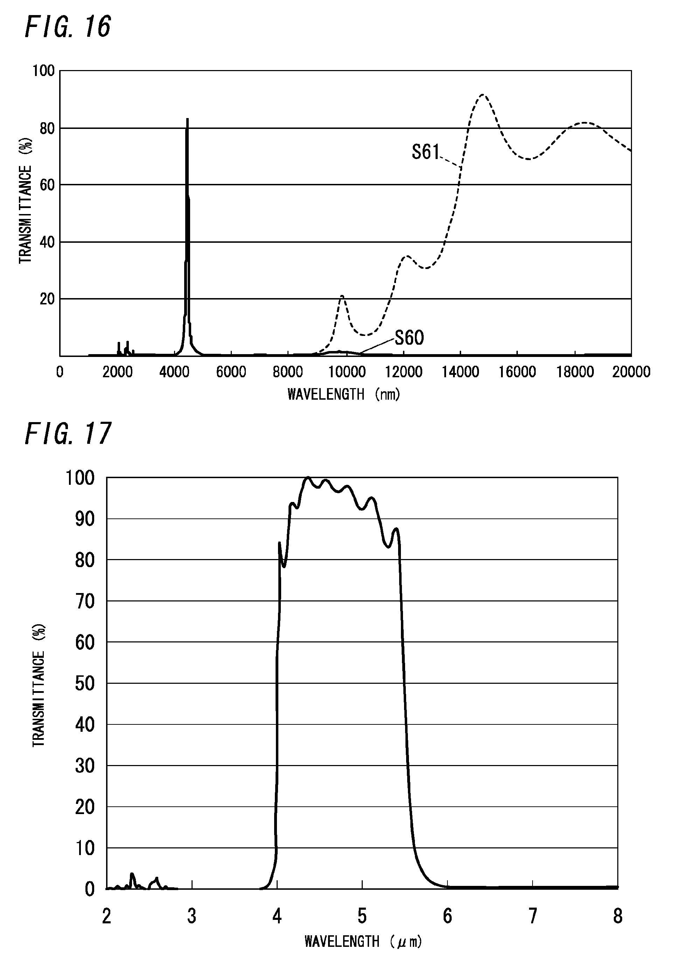

The curve **S60** in FIG. 16 shows a result of a simulation regarding the transmission spectra of the optical filter **20** of an example. This simulation is performed based on the new optical parameters of the $Al_2O_3$. With respect to the optical filter **20** of the example, the transmission filter **2₁** has the laminated structure as shown in below TABLE 3, and has its transmission peak wavelength of 4.4 $\mu$m. The cut-off filter 3 has the laminated structure as shown in below TABLE 4. The curve **S60** in FIG. 16 shows a result of a simulation regarding the optical filter **20** of a comparative example where

the $Al_2O_3$ has a constant refractive index and an absorption coefficient of 0. The new optical parameters are not used for performing the simulation regarding the comparative example. With regard to the example and the comparative example, the simulation was performed on the assumption that Ge has a constant refractive index of 4.0 and a constant absorption coefficient of 0.0.

[TABLE 3]

| constituent | material of film | thickness (nm) |
| --- | --- | --- |
| thin film 21b | $Al_2O_3$ | 600 |
| thin film 21a | Ge | 230 |
| thin film 21b | $Al_2O_3$ | 600 |
| thin film 21a | Ge | 230 |
| thin film 21b | $Al_2O_3$ | 600 |
| wavelength selection layer $23_1$ | Ge | 460 |
| thin film 21b | $Al_2O_3$ | 600 |
| thin film 21a | Ge | 230 |
| thin film 21b | $Al_2O_3$ | 600 |
| thin film 21a | Ge | 230 |
| thin film 21b | $Al_2O_3$ | 600 |
| filter formation substrate 1 | Si substrate | - |

[TABLE 4]

| constituent | material of film | thickness (nm) |
| --- | --- | --- |
| thin film 3a | $Al_2O_3$ | 749 |
| thin film 3b | Ge | 73 |
| thin film 3a | $Al_2O_3$ | 563 |
| thin film 3b | Ge | 37 |
| thin film 3a | $Al_2O_3$ | 463 |
| thin film 3b | Ge | 149 |
| thin film 3a | $Al_2O_3$ | 254 |
| thin film 3b | Ge | 91 |
| thin film 3a | $Al_2O_3$ | 433 |
| thin film 3b | Ge | 517 |
| thin film 3a | $Al_2O_3$ | 182 |
| thin film 3b | Ge | 494 |
| thin film 3a | $Al_2O_3$ | 185 |
| thin film 3b | Ge | 498 |
| thin film 3a | $Al_2O_3$ | 611 |
| thin film 3b | Ge | 465 |
| thin film 3a | $Al_2O_3$ | 626 |
| thin film 3b | Ge | 467 |

(continued)

| constituent | material of film | thickness (nm) |
|---|---|---|
| thin film 3a | $Al_2O_3$ | 749 |
| thin film 3b | Ge | 513 |
| thin film 3a | $Al_2O_3$ | 1319 |
| thin film 3b | Ge | 431 |
| thin film 3a | $Al_2O_3$ | 1319 |
| thin film 3b | Ge | 86 |
| thin film 3a | $Al_2O_3$ | 140 |
| thin film 3b | Ge | 27 |
| thin film 3a | $Al_2O_3$ | 39 |
| thin film 3b | Ge | 4 |
| thin film 3a | $Al_2O_3$ | 15 |
| filter formation substrate 1 | Si substrate | - |

In FIG. 16, the horizontal axis denotes the wavelength of the incident light (infrared light), and the vertical axis denotes the transmittance. According to the transmission spectrum **S61** of the comparative example, the far infrared light in the range of 9000 nm to 20000 nm is not blocked. In contrast, according to the transmission spectrum **S60** of the example, the far infrared light in the range of 9000 nm to 20000 nm is blocked. Further, the example shows that the combination of the cut-off filter 3 having the number of the stacked thin films of 29 and the transmission filter $2_1$ having the number of the stacked thin films of **11** can block the wide band infrared light in the wavelength range of 800 nm to 20000 nm. Thus, the narrow transmission band can be localized only around 4.4 $\mu$m. For example, the transmission spectrum of the cut-off filter 3 has a shape as shown in FIG. 17. FIG. 17 shows that the cut-off filter blocks near infrared light which has a wavelength not greater than 4 $\mu$m as well as far infrared light which has a wavelength not less than 5.6 $\mu$m.

When the optical filter **20** of the present embodiment is fabricated, the cut-off filter forming step is performed first and subsequently the transmission filters $2_1$ and $2_2$ are formed in a manner as mentioned in the above. In the cut-off filter forming step, the cut-off filter **3** is formed by alternately stacking the thin film **3a** and the thin film **3b** on the filter formation substrate **1**. For example, the filter formation substrate **1** is the Si substrate, the thin film **3a** is the $Al_2O_3$ film, and the thin film **3b** is the Ge film.

The following explanation referring FIG. 18 is made to the infrared gas measuring device including the infrared gas detector of the present embodiment.

The infrared gas measuring device illustrated in FIG. 18 includes an infrared light source **10,** a drive circuit **11,** a lens **12,** a chamber **13,** the infrared reception element **40,** the optical filter **20,** the amplifier circuit **63a,** and a calculation circuit (not shown). For example, the infrared light source **10** is a halogen lamp. The drive circuit **11** is configured to drive the infrared light source **10.** The lens **12** is configured to collimate infrared rays emitted from the infrared light source **10.** The chamber **13** is provided with a gas inflow channel **13b** and a gas outflow channel **13c.** The gas inflow channel **13b** is used for supplying a measurement gas (detection target gas) into the chamber **13.** The gas outflow **channel 13c** is used for draining the measurement gas from the chamber **13.** The amplifier circuit **63a** is configured to amplify the output (differential output between the paired pyroelectric elements $4_1$ and $4_2$) of the infrared reception element **40.** The calculation circuit is configured to calculate a concentration of the target gas on the basis of an output from the amplifier circuit **63a.** In brief, the infrared gas measuring device illustrated in FIG. 18 supplies the infrared rays from the infrared light source **10** into a predetermined space which is an inside space of the chamber **13.** The infrared gas measuring device detects the detection target gas by making use of the absorption of the infrared rays caused by the detection target gas existing in the predetermined space. The infrared gas measuring device includes the aforementioned infrared gas detector as an infrared reception unit configured to receive infrared which is emitted from the infrared light source **10** and subsequently passes through the predetermined space. Besides, the amplifier circuit **63a** and the calculation circuit are included in the integrated circuit **63.** However, the amplifier circuit **63a** and the calculation circuit may be placed outside of the package **7.**

In a situation of using the infrared light source (such as a halogen lamp) **10** configured to produce infrared rays with heat, the infrared light source **10** shows an emittance spectrum much broader than that of a light emitting diode. FIG. 19 shows a relation between a temperature and radiant energy of an object on the assumption that the object is a black body. Therefore, a radiant energy distribution of infrared emitted from the object depends on the temperature of the object. According to the Wien's displacement law, a wavelength $\lambda$ [$\mu$m] corresponding to a local maximal value of the radiant energy distribution is expressed as $\lambda = 2898 / T$. Besides, "$T$" [K] denotes an absolute temperature of the object.

In the infrared gas measuring device illustrated in FIG. 18, a halogen lamp is used as the infrared light source **10,** and the pair of the pyroelectric elements $4_1$ and $4_2$ is used as a sensing element of the infrared reception element **40.** Therefore, the drive circuit **11** is configured to modulate an intensity (emission power) of light emitted from the infrared light source **10.** For example, the drive circuit **11** is configured to cyclically vary the intensity of the light emitted from the infrared light source **10.at** a constant period. Besides, the drive circuit **11** may vary the intensity of the light emitted from the infrared light source **10** continuously or intermittently.

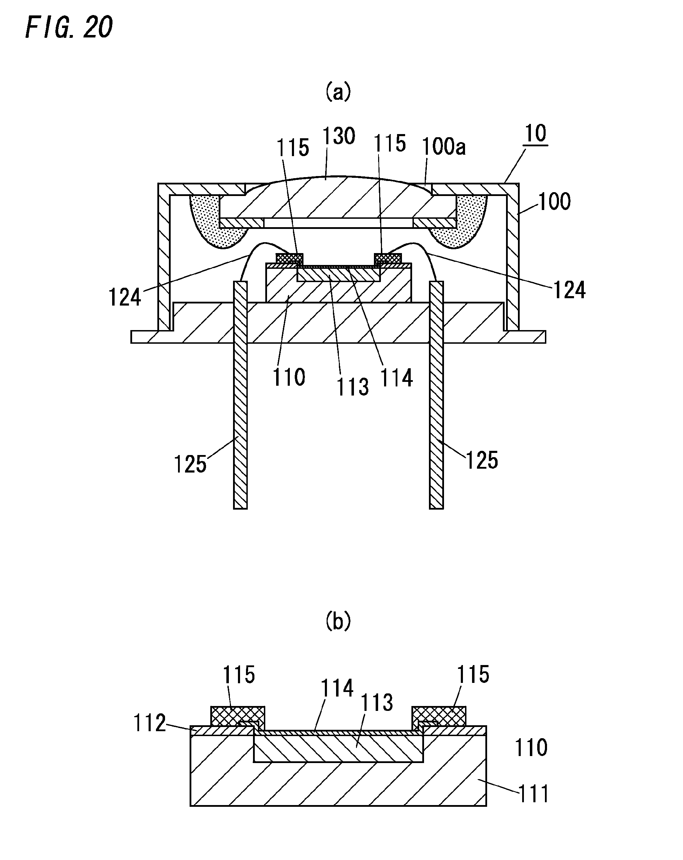

The infrared light source **10** is not limited to a halogen lamp. For example, as shown in FIG. 20, the infrared light source **10** may include an infrared emission element **110,** and a package **100.** The package **100** is a can package configured to enclose the infrared emission element **110.** The infrared emission element **110** includes a support substrate **111,** a heater layer (heating element layer) **114,** and a thermal insulation layer **113.** The support substrate **111** is made of a single crystal silicon substrate (semiconductor substrate). The heater layer **114** is formed over a surface of the support substrate **111.** The thermal insulation layer **113** made of a porous silicon layer is interposed between the heater layer **114** and the support substrate **111.** Further, the infrared emission layer **110** includes a pair of pads **115** and **115** electrically connected to the heater layer **114.** The pads **115** and **115** are electrically connected to terminal pins **125** and **125** via bonding wires **124** and **124,** respectively. With respect to the infrared light source **10** having the configuration illustrated in FIG. 20, the heater layer **114** receives input power by means of applying a voltage between the paired terminal pins **125** and **125,** thereby emitting infrared rays. Besides, in the infrared light source **10** illustrated in FIG. 20, the package **100** is provided with a window opening **100a** which is placed in front of the infrared emission layer **110.** The window opening **100a** is covered with an optical member **130.** The optical member **130** is configured to allow infrared rays to pass through it. Moreover, a dielectric layer **112** made of an oxidized silicon film is formed on a region of the surface of the support substrate **111** on which no thermal insulation layer **113** is formed.

A material of the heater layer **114** is not limited, but may be selected from W, Ta, Ti, Pt, Ir, Nb, Mo, Ni, TaN, TiN, NiCr, and a conductive amorphous silicon. With respect to the infrared emission element **110** illustrated in FIG. 20, the support substrate **111** is made of a single crystal silicon substrate, and the thermal insulation layer **113** is made of a porous silicon layer. Therefore, the support substrate **111** is greater in a heat capacity and a thermal conductivity than the thermal insulation layer **113.** Consequently, the support substrate **111** functions as a heat sink. Accordingly, it is possible to downsize the infrared emission element **110.** Further, the infrared emission element **110** can have an improved response speed with regard to an input voltage or an input current and an improved stability of an emission property of infrared rays.

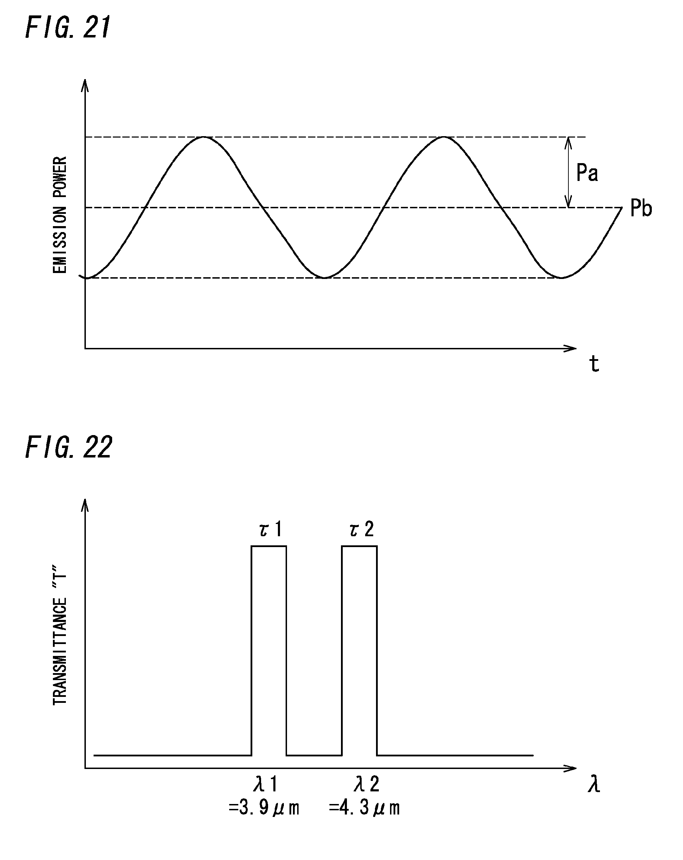

For example, the measurement target gas is $CO_2$, and the transmission filter $2_1$ has its transmission peak wavelength $\lambda_1$ of 3.9 $\mu$m, and the transmission filter $2_2$ has its transmission peak wavelength $\lambda_2$ of 4.3 $\mu$m. Further, the infrared light source **1** is a halogen lamp, and the intensity (emission power) of the light emitted from the infrared light source **10** varies as the curve illustrated in FIG. 21. Moreover, the optical filter **20** has the transmission property illustrated in FIG. 22. In addition, the transmission filter $2_1$ has the transmittance $\tau_1$ at the wavelength $\lambda_1$, and the transmission filter $2_2$ has the transmittance $\tau_2$ at the wavelength $\lambda_2$. The curve illustrated in FIG. 21 has the amplitude $P_a$, a bias component (DC component caused by outside light such as sunlight) $P_b$, and an angular frequency $\omega$ (= $2\pi f$). The measurement target gas exhibits the absorption ratio **T(C)** for infrared. Based on this assumption, the intensity (power) $P_1$ of the infrared which has passed through the transmission filter $2_1$ is calculated by the following formula (**1**), and the intensity (power) $P_2$ of the infrared which has passed through the transmission filter $2_2$ is calculated by the following formula (**2**).

$$P_1 = \tau_1 \left( P_a \sin(\omega t) + P_b \right) \qquad (1)$$

$$P_2 = T(C) \tau_2 \left( P_a \sin(\omega t) + P_b \right) \qquad (2)$$

For example, the pyroelectric element $4_1$ receives the infrared passing through the transmission filter $2_1$ at its light receiving surface side of a positive polarity (+), and the pyroelectric element $4_2$ receives the infrared passing through the transmission filter $2_2$ at its light receiving surface side of a negative polarity (-). The output $I_1$ of the pyroelectric element $4_1$ is expressed by the following formula (**3**), and the output $I_2$ of the pyroelectric element $4_2$ is expressed by the following formula (**4**). In the respective formulae (3) and (4), constants concerning current conversion at the pyroelectric elements $4_1$ and $4_2$ are not shown.

$$I_1 = \omega\tau_1 P_a \cos(\omega t) \quad (3)$$

$$I_2 = -T(C)\omega\tau_2 P_a \cos(\omega t) \quad (4)$$

As shown in (b) of FIG. 3, the two pyroelectric elements $4_1$ and $4_2$ are connected to each other such that the differential output between the two pyroelectric elements $4_1$ and $4_2$ is obtained. Therefore, the output "I" of the infrared reception element **40** is expressed by the following formula (**5**).

$$I = I_1 + I_2 = \omega\tau_1 P_a \cos(\omega t) - T(C)\omega\tau_2 P_a \cos(\omega t) \quad (5)$$

When $\tau_1$ is equal to $\tau_2$, the output "I" of the infrared reception element **40** is expressed by the following formula (**6**).

$$I = \omega\tau_1 P_a \cos(\omega t)(1 - T(C)) \quad (6)$$

The absorption ratio **T(C)** is expressed by the following formula (**7**) on the basis of the Lambert-Beer law. In the formula (**7**), "$\alpha$" denotes an absorption coefficient peculiar to a substance, and "C" denotes the concentration of the substance, and "**L**" denotes the length of the light path. The absorption coefficient is a constant determined by the absorption wavelength and the temperature of the substance.

$$T(C) = 10^{-\alpha CL} \quad (7)$$

Therefore, the output "I" of the infrared reception element **40** is expressed by the following formula (**8**) derived from the formulae (**6**) and (**7**).

$$I = \omega\tau_1 P_a \cos(\omega t)(1 - 10^{-\alpha CL}) \quad (8)$$

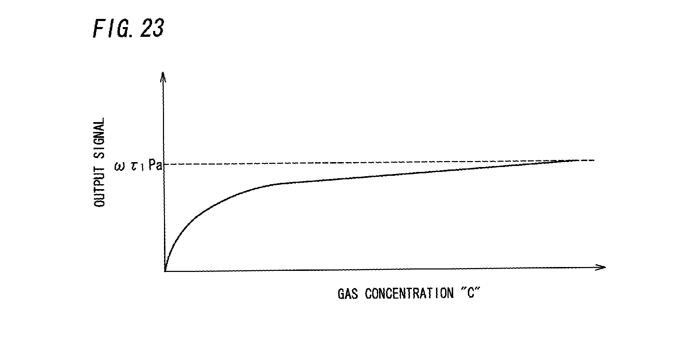

FIG. 23 shows a graph illustrating a relation between the concentration "C" of the gas and the output signal (output "**I**") of the infrared reception element **40** on the basis of the formula (**8**). Therefore, the concentration of the gas can be calculated from the measured amplitude of the output signal of the infrared reception element **40**.

In the infrared gas detector of the present embodiment as explained in the above, the paired pyroelectric elements $4_1$ and $4_2$ having the different polarities are connected in an inverse series manner. Therefore, it is possible to cancel the DC bias component (bias component caused by an undesired gas and/or outside light such as sunlight) of the pair of the pyroelectric elements $4_1$ and $4_2$. In brief, when the concentration of the measurement target gas is zero, the output of the infrared reception element **40** is zero. Further, it is possible to expand the dynamic range of the output of the infrared reception element **40**. In a situation where the two pyroelectric elements $4_1$ and $4_2$ in the pair are formed in the single pyroelectric element formation substrate **41**, it is possible to downsize the infrared gas detector even if the amplifier circuit **63a** is housed in the package **7**. Moreover, it is possible to increase the gain of the amplifier circuit **63a** and improve the S/N ratio.

The infrared gas detector of the present embodiment includes the infrared reception element (infrared reception member) **40,** the package **7,** and the optical filter **20**. The package **7** is configured to accommodate the infrared reception element **40**. The infrared reception element **40** includes the plurality of the thermal infrared detection elements (pyroelectric elements) $4_1$ and $4_2$ each configured to detect infrared based on heat caused by the received infrared. The pyroelectric elements $4_1$ and $4_2$ are placed side by side. The package **7** is provided with the window opening **7a** configured to allow the infrared reception element **40** to receive infrared. The optical filter **20** is attached to the package **7** so as to cover the window opening **7a**. The optical filter **20** includes the plurality of the filter elements respectively corresponding to the plurality of the pyroelectric elements $4_1$ and $4_2$. Each of the filter elements includes the filter substrate 1 made of an infrared transparent material, the transmission filter **2** configured to transmit infrared of a selected wavelength, and the cut-off filter **3** configured to absorb infrared of a wavelength longer than the selected wavelength. The transmission filter **2** and the cut-off filter 3 are formed over the filter substrate **1**. The filter substrate **1** is thermally coupled to the package **7**. The transmission filters $2_1$ and $2_2$ of the respective filter elements are configured to transmit infrared of the different selected wavelengths.

According to the infrared gas detector of the present embodiment, heat generated in the cut-off filter **3** due to absorption of infrared at the cut-off filter **3** is dissipated via the package **7** efficiently. Therefore, it is possible to reduce an increase of the temperature of the transmission filters $2_1$ and $2_2$ and to prevent occurrence of the biased distribution of the temperature of the transmission filters $2_1$ and $2_2$. The sensitivity of the infrared gas detector can be improved at a lower cost. Further, in the infrared gas detector of the present embodiment, the circuit block **9** is housed in the package **7**. When the temperature of circuit components of the circuit block 9 is increased, infrared is emitted from the circuit components and subsequently is reflected by the inner surface of the package **7**. However, the cut-off filter **3** can absorb such infrared. Consequently, it is possible to increase the S/N ratio and improve the sensitivity. Besides, in the present embodiment, the two pyroelectric elements $4_1$ and $4_2$ in the pair are formed in the pyroelectric element formation substrate **41** and are connected in an inverse series or an inverse parallel manner. However, instead of making connection between the two pyroelectric elements $4_1$ and $4_2$ in the pair, the infrared gas detector may include an amplifier (differential amplifier) configured to amplify a difference between the outputs of the two pyroelectric elements $4_1$ and $4_2$ in the pair. Therefore, in contrast to a situation where the infrared gas detector includes amplifiers configured to amplify the outputs of the two pyroelectric elements $4_1$ and $4_2$ in the pair respectively, the infrared gas detector can be downsized and be fabricated at a lowered cost.

Moreover, in the infrared gas detector of the present embodiment, the filter substrate **1** has the first surface facing the inside of the package **7** and the second surface facing the outside of the package **7**. The transmission filter **2** is formed over the first surface of the filter substrate **1**. The cut-off filter **3** is formed over the second surface of the filter substrate **1**. Therefore, it is possible to suppress transmission of heat generated by the absorption of the infrared in the cut-off filter **3** to the pyroelectric elements $4_1$ and $4_2$. Therefore, in contrast to the infrared gas detector including the cut-off filter 3 formed over the first surface of the filter substrate **1**, it is possible to decrease the height of the package **7** and to improve the response performance of the infrared gas detector. In addition, since the transmission filters $2_1$ and $2_2$ are formed over the first surface of the filter substrate **1**, it is possible to suppress occurrence of cross talk caused by infrared rays coming into the optical filter **20** along an oblique direction with regard to the thickness of the optical filter **20**. Thus, it is possible to expand the light receiving region of the respective pyroelectric elements $4_1$ and $4_2$ and improve the sensitivity of the infrared gas detector.

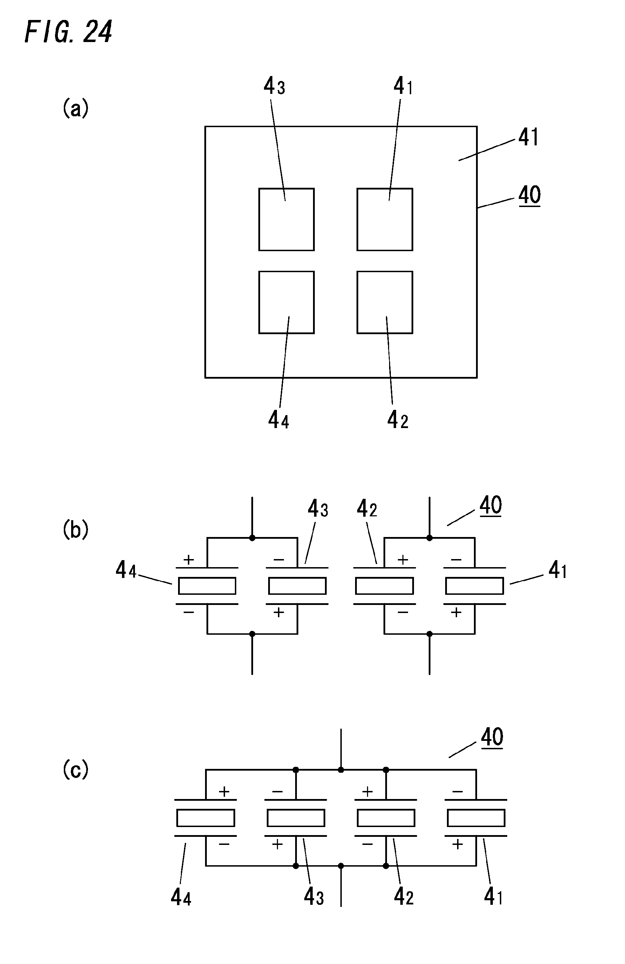

For example, as shown in (a) of FIG. 24, the infrared reception element **40** may include two pyroelectric elements $4_3$ and $4_4$ in a pair in addition to the two pyroelectric elements $4_1$ and $4_2$ in the pair. As shown in (b) or (c) of FIG. 24, these pyroelectric elements $4_1$, $4_2$, $4_3$ and $4_4$ are connected to each other so as to produce one or more differential outputs. In this arrangement, the optical filter **20** may include the transmission filters **2** respectively corresponding to the pyroelectric elements $4_1$, $4_2$, $4_3$ and $4_4$. The instance shown in (b) of FIG. 24 can detect two different gases.

Further, in the infrared gas detector of the present embodiment, each of the transmission filters $2_1$ and $2_2$ includes the first multilayer **21**, the second multilayer **22**, and the wavelength selection layer interposed between the first multilayer **21** and the second multilayer **22**. Each of the first multilayer **21** and the second multilayer **22** is fabricated by stacking plural kinds of the thin films 21a and 21b having different refractive indices and the same optical thickness. The wavelength selection layer 23 has the optical thickness which is different from the optical thickness of the thin film (**21a**, **21b**) and is selected based on the selected wavelength regarding the transmission filter ($2_1$, $2_2$). Consequently, the optical filter **20** can be downsized and be manufactured at a lowered cost. Further, it is possible to decrease a distance between centers of the plural transmission filters $2_1$ and $2_2$ and reduce a difference in the length of the light path between detection light and reference light. Thus, each of the pyroelectric elements $4_1$ and $4_2$ of the infrared reception element **40** can have its improved light receiving efficiency. Moreover, in the infrared gas detector of the present embodiment, the plural filter elements share the filter substrate **1**. Accordingly, in contrast to the infrared gas detector including the transmission filters $2_1$ and $2_2$ formed on the different filter substrates **1**, it is possible to reduce a temperature difference between the transmission filters $2_1$ and $2_2$. Consequently, the detection accuracy and the sensitivity of the infrared gas detector can be improved. Besides, the plural filter elements may be provided as separate parts. In this arrangement, the package **7** is provided with the window openings in the number equal to the number of the filter elements. In brief, the optical filter **20** includes the plural filter elements each attached to the package **7** so as to cover the corresponding opening window **7a**.

Additionally, in the infrared gas detector of the present embodiment, the cut-off filter 3 is a multilayer fabricated by stacking plural kinds of the thin films **3a** and **3b** having different refractive indices. At least one of the plural kinds of the thin films **3a** and **3b** is made of a far infrared absorption material having a property of absorbing far infrared. Consequently, an infrared cut-off function in the wide range from near infrared to far infrared results from a combination of a light interference effect given by the multilayer as the cut-off filter **3** and a far infrared absorption effect given by the thin film **3a** as a member of the multilayer. Accordingly, the optical filter **20** can be manufactured without using the sapphire substrate. Therefore, the optical filter **20** can be manufactured at a lowered cost.

Further, in the infrared gas detector of the present embodiment, the transmission filters **21** and **22** also have an infrared cut-off function in the wide range from near infrared to far infrared. The infrared cut-off function results from a combination of a light interference effect and a far infrared absorption effect. The light interference effect is given by the first multilayer **21** and the second multilayer **22**. The far infrared absorption effect is given by the infrared absorption material of the thin film **21b** of the multilayer including the first multilayer **21,** the wavelength selection layers $23_1$ and $23_2$, and the second multilayer **22**. Consequently, it is possible to reduce the production cost of the optical filter **20** which has an infrared cut-off function in the wide range from near infrared to far infrared and allows transmission of infrared having the selected wavelength.

In the aforementioned optical filter **20,** the far infrared absorption material is selected from oxidation products and nitrogen products. Therefore, the optical filter 20 does not suffer from the change in the optical property caused by the oxidation of the thin films **3a** and **21b** made of the far infrared absorption material. Further, in the aforementioned optical filter **20,** each of the cut-off filter 3 and the transmission layers $2_1$ and $2_2$ has the upmost layer defined as a layer farthest from the filter substrate **1**. The respective upmost layers are made of one selected from the oxidation products and the nitrogen products listed in the above. Accordingly, it is possible to prevent the change in physical properties of the upmost thin films **3a** and **21b** which would otherwise occur due to reaction with moisture or oxygen in the air or adsorption or attachment of an impurity. Consequently, the stability of the filter performance can be enhanced. Further, reflection occurring at a surface of each of the cut-off filter 3 and the transmission filters $2_1$ and $2_2$ can be suppressed. Thus, the filter performance can be improved.

Moreover, in the aforementioned infrared optical filter **20,** the cut-off filter **3** is a laminated film fabricated by alternately stacking the thin films **3a** and **3b**. The thin film **3a** is made of a far infrared absorption material, and the thin film **3b** is made of Ge which is a high refractive index material greater in the refractive index than the far infrared absorption material. Therefore, in contrast to a situation where the high refractive index material is one selected from Si, PbTe, and ZnS, it is enabled to increase a difference in a refractive index between the high refractive index material and the low refractive index material. Consequently, it is possible to reduce the number of thin films constituting the cut-off filter **3.** When Si is used as the high refractive index material, in contrast to a situation where ZnS is used as the high refractive index material, it is possible to increase the difference in the refractive index between the high refractive index material and the low refractive index material of the multilayer. Accordingly, the number of thin films constituting the cut-off filter **3** can be reduced. For a similar reason, it is possible to reduce the number of thin films of each of the transmission filters $2_1$ and $2_2$.

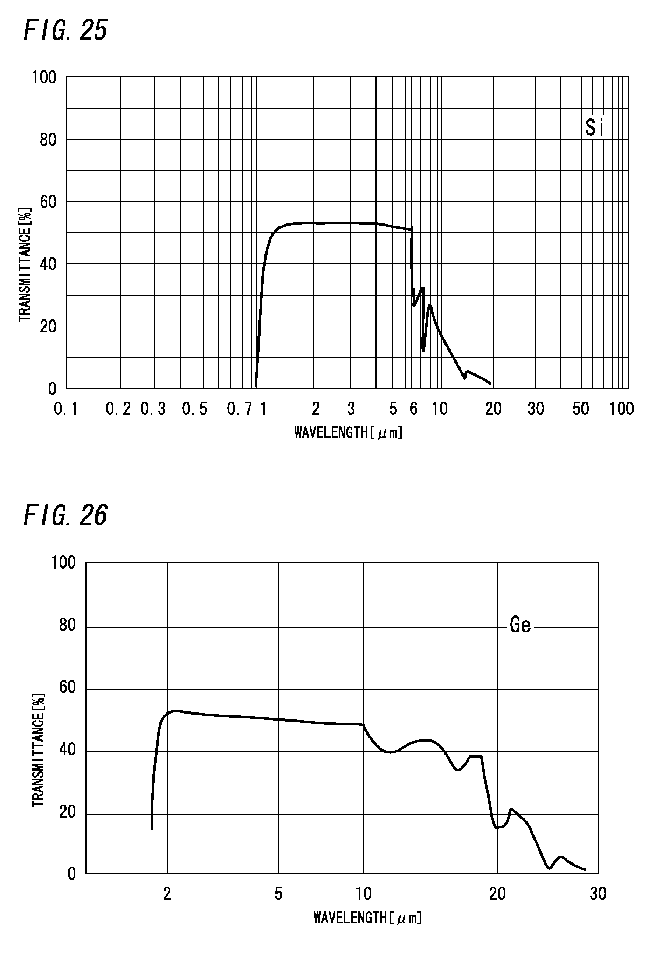

In the present embodiment, the filter substrate **1** is a Si substrate. The filter substrate **1** is not limited to a Si substrate, but may be a Ge substrate. FIGS. 25 and 26 show data indicative of the transmission properties of Si and Ge, respectively.

The data were found on the Internet on February 25, 2009 (URL: http://www.spectra.co.jp/kougaku.files/k_kessho.files/ktp.htm).

In the infrared gas detector of the present embodiment, the filter substrate **1** is one selected from a Si substrate and a Ge substrate, as mentioned in the above. Accordingly, in contras to a situation where the filter substrate **1** is one selected from a sapphire substrate, an MgO substrate, and a ZnS substrate, the infrared gas detector can be manufactured at a lowered cost. In addition, Ge has relatively high thermal conductivity, and Si has high thermal conductivity. Consequently, it is possible to suppress a rise in the temperature of the filter substrate **1,** and suppress infrared emission caused by a rise in the temperature of the optical filter **20**.

Further, in the infrared gas detector of the present embodiment, the package **7** is made of a metal. The filter substrate 1 is an electrically conductive substrate made of Si or Ge, for example. The filter substrate 1 is attached to the cap **72** of the package **7** by use of the bonding portion **58** made of an electrically conductive bonding material (e.g., a silver paste and a solder paste). In other words, the filter substrate 1 is electrically coupled to the package **7.** Therefore, the electromagnetic shielding can be provided by the filter substrate **1** and the package **7**. The infrared reception element **40** can be protected from radiation noises (electromagnetic noises) coming from outside. It is possible to increase the S/N ratio and improve the sensitivity.

Moreover, in the infrared gas detector of the present embodiment, the window opening **7a** has a rectangular shape. In addition, the optical filter **20** is provided with a step **20c** configured to contact with a periphery as well as an inner surface of the window opening **7a** of the cap **72,** such that the optical filter **20** is positioned in relation to the cap **72**. The step **20c** is fixed to the cap **72** by use of the bonding portion **58**. Therefore, the optical filter 20 can be positioned in parallel with the infrared reception element **40** with high accuracy. Consequently, with regard to a direction along an optical axis of the transmission filter ($2_1$, $2_2$) of the optical filter **20,** it is possible to improve an accuracy of a distance between the transmission filter ($2_1$, $2_2$) of the optical filter **20** and the corresponding pyroelectric element ($4_1$, $4_2$) of the infrared reception element **40**. Further, it is enabled to improve an accuracy of aligning the optical axis of the transmission filter ($2_1$, $2_2$) with the optical axis of the light receiving surface of the corresponding pyroelectric element ($4_1$, $4_2$).

Additionally, in the infrared gas detector of the present embodiment, the package **7** accommodates (the circuit components of) the amplifier circuit **63a** configured to amplify the output of the infrared reception element **40.** Therefore, it is possible to shorten the electrical path between the infrared reception element **40** and the amplifier circuit **63a.** Further, the amplifier circuit **63a** is protected by the electromagnetic shielding. It is possible to more increase the S/N ratio and improve the sensitivity.

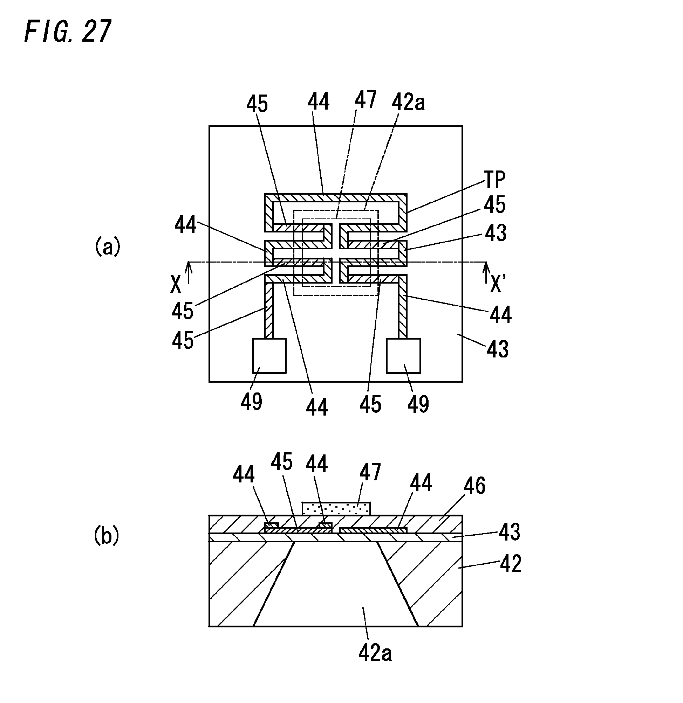

In the aforementioned embodiment, the thermal infrared detection elements are the pyroelectric elements $4_1$ and $4_2$. The thermal infrared detection element is not limited to the pyroelectric element but may be one selected from a thermopile shown in FIG. 27 and a resistive bolometer type infrared detection element, for example. When the thermal infrared detection element is thermopiles, the differential amplifier may be configured to amplify a difference between outputs from the paired two thermopiles. Alternatively, the paired two thermopiles **TP1** and **TP2** may be connected in anti-series with each other, and the amplifier circuit may be configured to amplify the output voltage **Vout** across the anti-series circuit of the thermopiles **TP1** and **TP2.** Alternatively, the paired two thermopiles **TP1** and **TP2** may be connected in anti-parallel with each other, and the amplifier circuit may be configured to amplify the output voltage across the anti-parallel circuit of the thermopiles **TP1** and **TP2.** When the thermal infrared detection element is resistive bolometer type infrared detection elements, a bridge circuit may be provided. The bridge circuit is constituted by the paired two resistive bolometer type infrared detection elements and paired fixed resistors. Each of the fixed resistors has the same resistance as a corresponding one of the resistive bolometer type infrared detection elements. With this arrangement, the detection of the detection target gas or the calculation of the concentration of the detection target gas may be performed based on the output from the bridge circuit.

The thermal infrared detection element has a structure illustrated in FIG. 27. This thermal infrared detection element includes a support substrate **42,** a membrane portion **43,** and a thermopile **TP.** The support substrate **42** is made of a single crystal silicon substrate. With regard to the support substrate **42,** its (100) surface is selected as a main surface. The membrane portion **43** is a silicon nitride film formed on the main surface of the support substrate **42** and is supported by the support surface **42.** The thermopile **TP** is formed on the opposite surface of the membrane portion **43** from the support substrate **42.** The support substrate **42** is provided with an opening **42a** in the form of a rectangular shape. The opening **42a** is formed in order to expose a surface of the membrane portion **43** facing the support substrate **42.** The opening **42a** is formed by means of the anisotropic wet etching utilizing the crystal orientation dependence of the etch rate. The thermopile **TP** includes multiple thermocouples connected in series with each other. Each thermocouple includes a first thermoelectric element **44** and a second thermoelectric element **45.** Each of the first thermoelectric element **44** and the second thermoelectric element **45** has an elongated shape and extends from a region of the membrane portion **43** overlapped with the opening **42a** of the support substrate **42** to a region of the membrane portion **43** overlapped with a periphery of the opening **42a** of the support substrate **42.** With regard to the thermopile **TP,** a junction of first ends of the first thermoelectric element **44** and the second thermoelectric element **45** defines a hot junction, and a junction of second ends of the first thermoelectric element **44** and the second thermoelectric element **45** belonging to the different thermocouples defines a cold junction. Besides, the first thermoelectric element **44** is made of a material having a positive Seebeck coefficient, and the second thermoelectric element **45** is made of a material having a negative Seebeck coefficient.

With regard to the thermal infrared detection element having the structure shown in FIG. 27, a dielectric layer **46** is formed over the main surface of the support substrate so as to cover the thermoelectric elements **44** and **45** and a region of the membrane portion **43** on which the thermoelectric elements **44** and **45** are not formed. There is an infrared absorption portion **47** formed on the dielectric layer **46** to cover a predetermined region including each hot junction of the thermopile **TP.** The infrared absorption portion **47** is made of an infrared absorption material (e.g., niello). Besides, the paired pads **49** and **49** of the infrared reception element **40** are respectively exposed via openings (not shown) formed in the dielectric layer **46.** For example, the dielectric layer **46** is a laminated film consisting of a BPSG film, a PSG film, and an NSG film. Alternatively, the dielectric layer **46** may be a laminated film consisting of a BPSG film and a silicon nitride film. With regard to FIG. 27, (b) shows a schematic cross sectional view taken along the line X-X' of (a). In (a) of FIG. 27, the dielectric layer **46** is not shown.

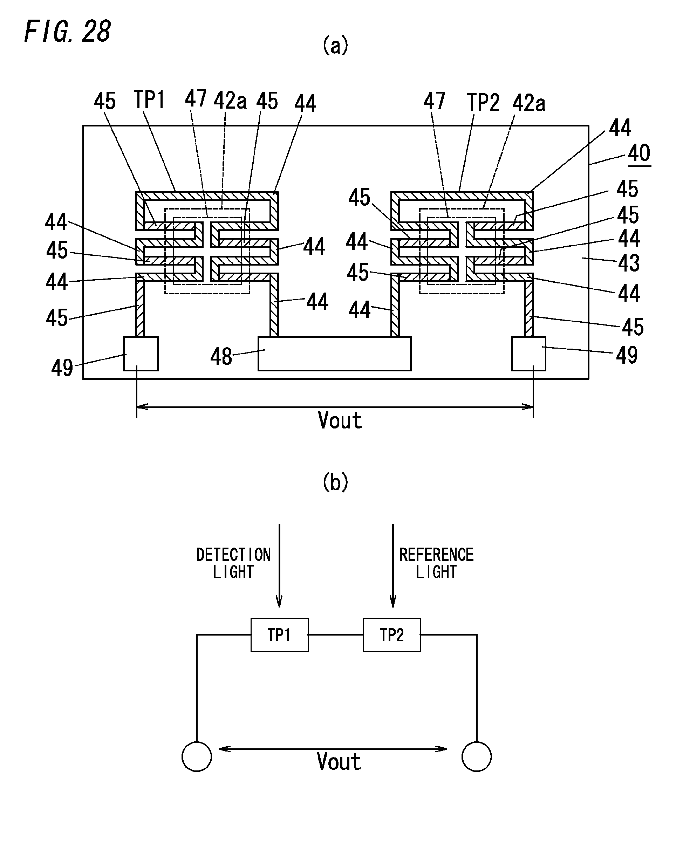

The infrared reception element **40** illustrated in FIG. 28 has a basic structure similar to the thermal infrared detection element illustrated in FIG. 27. The infrared reception element **40** illustrated in FIG. 28 includes two thermopiles **TP1** and **TP2** which have the same structure as the thermopile **TP** illustrated in FIG. 27. The infrared reception element **40** illustrated in FIG. 28 is different from the thermal infrared detection element illustrated in FIG. 27 in only that these two thermopiles **TP1** and **TP2** are connected in anti-series with each other via a metal layer **48** (the two thermopiles **TP1** and **TP2** are connected in series and opposite polarity). Alternatively, the two thermopiles **TP1** and **TP2** may be connected in anti-parallel with each other (the two thermopiles **TP1** and **TP2** are connected in parallel and opposite polarity). As described in the above, the two thermopiles **TP1** and **TP2** are connected in anti-series or anti-parallel with each other. With this arrangement, it is possible to cancel the DC bias component of the pair of the two thermopiles **TP1** and **TP2,** and to expand the dynamic range of the output of the infrared reception element **40.** Especially, in a situation where the pair of the two thermopiles **TP1** and **TP2** are formed in the single support substrate **42,** it is possible to downsize the infrared gas detector even if the amplifier circuit **63a** is housed in the package **7**. Moreover, it is possible to increase the gain of the amplifier circuit **63a** and improve the S/N ratio.

(SECOND EMBODIMENT)

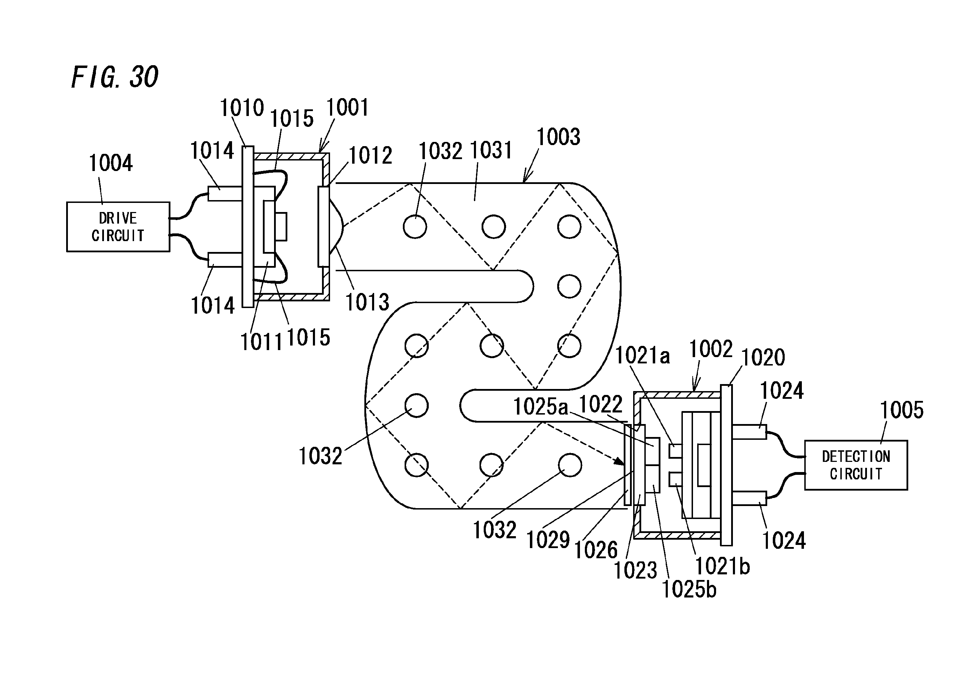

In the present embodiment, an explanation is made to an infrared gas measuring device applied to a gas leakage alarm, for example. Such an infrared gas measuring device includes an infrared light source **1001** and an infrared sensor (infrared detector) **1002,** as shown in FIG. 30. The infrared light source **1001** is configured to emit infrared in response to receiving an electric signal. The infrared sensor **1002** is configured to detect infrared. Interposed between the infrared light source **1001** and the infrared sensor **1002** is a gas detection tube **1003**. A detection target gas (measurement gas) is flowed into the gas detection tube **1003**. Besides, the infrared detector as described in the first embodiment can be adopted as the infrared sensor **102**.

The gas detection tube **1003** includes a conduit **1031** configured to guide infrared from the infrared light source **1001** to the infrared sensor **1002**. The conduit **1031** has its inner surface configured to reflect infrared. For example, a reflection-film configured to reflect infrared is formed on the inner surface of the conduit **1031**. For example, the reflection film is a metal film made of such as Au, and is formed on the entire inner surface of the conduit **1031** by use of a thin film formation method (e.g., a sputtering technique). In brief, a surface of the reflection film is used as the inner surface of the conduit **1031**. Alternatively, the gas detection tube **1003** (the conduit **1031**) may be made of a material reflecting infrared. As shown in the dashed line in FIG. 30, infrared emitted from the infrared light source **1001** is reflected by the inner surface of the conduit **1031** repeatedly and finally reaches the infrared sensor **1002**.

The gas detection tube **1003** includes multiple through holes **1032**. Each through hole **1032** is configured to connect an inside space of the conduit 1031 to an outside space of the conduit **1031**. The through hole **1032** penetrates a wall of the conduit **1031**. Therefore, the detection target gas existing in the outside space of the conduit **1031** comes into the inside space of the conduit **1031** via the through hole **1032**. When the detection target gas exists in the conduit **1031** of the gas detection tube **1003,** a part of infrared emitted from the infrared light source **1001** is absorbed and/or reflected by the detection target gas. This causes the change in the intensity of the received light of the infrared sensor **1002**. With detecting the change in the intensity of the received light, it is possible to detect the detection target gas and measure the concentration of the detection target gas. The present embodiment detects the detection target gas which exists in a monitoring space defined by the inside space of the conduit **1031**.

The conduit **1031** may be formed into a straight shape. Preferably, the conduit **1031** is formed into a meander shape as shown in FIG. 30. Since the inner surface of the conduit **1031** reflects infrared, the infrared can be transmitted from the infrared light source **1001** to the infrared sensor **1002** even if the conduit **1031** has a meander shape.

When the conduit **1031** has a meander shape, it is possible to extend an infrared light path from the infrared light source **1001** to the infrared sensor **1002**. Therefore, the distance that the infrared travels in the detection target gas existing in the conduit **1031** is increased. It is possible to easily detect the change in the infrared which is caused by the detection target gas existing in the conduit **1031**. Further, the infrared is reflected by the inner surface of the conduit **1031** repeatedly. Therefore, the distance that the infrared travels in the detection target gas existing in the conduit **1031** is further increased. Consequently, with using the gas detection tube **1003** (the conduit **1031)** in the form of a meander shape, it is possible to improve the sensitivity for the detection target gas.

Upon receiving an intermittent voltage from a drive circuit **1004,** the infrared light source **1001** emits infrared rays intermittently. In other words, the drive circuit **1004** is configured to drive the infrared light source **1001** such that the infrared light source **1001** emits infrared beams intermittently. The infrared light source **1001** has a shorter activation period and a shorter deactivation period. The activation period is defined as a period starting at the time at which the drive circuit **1004** starts to energize the infrared light source **1001,** and ending at the time at which the infrared light source **1001** starts to emit infrared. The deactivation period is defined as a period starting at the time at which the drive circuit **1004** terminates energizing the infrared light source **1001,** and ending at the time at which the infrared light source 1001 terminates emitting infrared. A brief explanation of the infrared light source 1001 is made later.

The drive circuit **1004** applies a voltage in the form of a single pulse wave or a burst wave consisting of plural (about five to ten) pulse waves to the infrared light source **1001**. Further, a time interval at which the drive circuit **1004** applies the voltage to the infrared light source **1001** is in the range of 10 to 60 seconds, for example. A continuous period (a pulse width of a single pulse) over which the drive circuit **1004** applies the voltage to the infrared light source **1001** depends on the response speed of the infrared sensor **1002**. For example, the continuous period is in the range of 100 $\mu$s to 10 ms. When the burst wave is used, the continuous period is about 100 ms, for example.

As shown in FIG. 30, the infrared light source **1001** includes a metal package (can package) **1010** and an emission element (infrared emission element) **1011** housed in the can package **1010**. The package **1010** is provided with a window opening **1012** which is placed in front of the emission element **1011**. The window opening **1012** is covered with a projection lens **1013**. The projection lens **1013** is made of Si, and is formed through a typical semiconductor process. The infrared light source **1001** includes two lead pins **1014** extending from the package **1010**. The two lead pins **1014** are used for electrically connecting the emission element **1011** to the drive circuit **1004.** An infrared antireflection film is formed on the opposite surfaces of the projection lens **1013** in order to suppress the reflection of infrared in a specific wavelength range necessary for gas detection. Besides, a light collection mirror may be used instead of the projection lens **1013.**

The infrared sensor **1002** includes a metal package (can package) **1020** and two light reception elements **1021a** and **1021b** housed in the can package **1020.** Each of the light reception elements **1021a** and **1021b** is a pyroelectric element. The package **1020** is provided with a single window opening **1022** which is placed in front of the two light reception elements **1021a** and **1021b.** The window opening **1022** is covered with a filter (optical filter) **1029.** The filter **1029** is used for selecting a wavelength of infrared which comes into the respective light reception elements **1021a** and **1021b** from the inside space of the conduit **1031.** The infrared sensor **1002** includes two lead pins **1024** extending from the package **1020.** The two lead pins **1024** are used for electrically connecting the light reception elements **1021a** and **1021b** to a detection circuit **1005.**

Each of the reception elements **1021a** and **1021b** may be one selected from a thermal infrared detection element and a quantum infrared detection element. Preferably, the thermal infrared detection element such as a pyroelectric element is used as the reception elements **1021a** and **1021b.** The thermal infrared detection element has better handling performance than the quantum infrared detection element. The thermal infrared detection element has the higher sensitivity and the lower cost than the quantum infrared detection element.

The filter **1029** includes two transmission filters (narrowband transmission filter portions) **1025a** and **1025b** and a single wideband cut-off filter (a removal filter, a cut-off filter) **1026.** The transmission filters **1025a** and **1025b** are interposed in infrared light paths between the monitoring space (the inside space of the conduit 1031) and the light reception elements **1021a** and **1021b,** respectively. Each of the transmission filters **1025a** and **1025b** is configured to transmit infrared of a specific wavelength. The cut-off filter **1026** is configured to absorb infrared having a wavelength other than the specific wavelengths of infrared rays passing through the transmission filters **1025a** and **1025b.** The two transmission filters **1025a** and **1025b** are overlapped with the cut-off filter **1026.**

The filter **1029** includes a filter substrate (filter formation substrate) **1023** made of Si. The two transmission filters **1025a** and **1025b** are placed side by side on a first surface (surface facing to the light reception elements **1021a** and **1021b)** of the filter substrate **1023.** The cut-off filter **1026** is formed over a second surface (the opposite surface) of the filter substrate **1023.** In other words, the transmission filters **1025a** and **1025b** are interposed in the infrared light paths between the monitoring space and the light reception elements **1021a** and **1021b,** respectively. The cut-off filter **1026** is interposed between the monitoring space and the transmission filters **1025a** and **1025b.** Therefore, the removal filter **1026** narrows a wavelength range of infrared transmitted from the monitoring space to the transmission filters. Subsequently, the each of the transmission-filters **1025a** and **1025b** transmits only infrared in a specific wavelength range. Therefore, only infrared in the specific wavelength can reach a corresponding one of the light receiving elements **1021a** and **1021b.**

Each of the transmission filters **1025a** and **1025b** has transparent characteristics of transmitting infrared in a narrow range within a wavelength range from middle infrared to far infrared emitted from the emission element **1011.** The transmission filter **1025a** is designed to transmit infrared included in a specific wavelength range in which infrared is absorbed in the detection target gas. The other transmission filter **1025b** is designed to transmit infrared included in a specific wavelength range in which infrared is not absorbed in the detection target gas.

For example, the transmission filter **1025a** is configured to transmit infrared in the specific wavelength range corresponding to the detection target gas. When the detection target gas is a carbon dioxide, the transmission filter **1025a** is configured to transmit infrared of a wavelength included in the specific wavelength range centered on 4.3 $\mu$m. When the detection target gas is a carbon monoxide, the transmission filter **1025a** is configured to transmit infrared of a wavelength included in the specific wavelength range centered on 4.7 $\mu$m. When the detection target gas is a methane gas, the transmission filter **1025a** is configured to transmit infrared of a wavelength included in the specific wavelength range centered on 3.3 $\mu$m. For example, the transmission filter **1025b** is configured to transmit infrared of a wavelength included in the specific wavelength range centered on 3.9 $\mu$m within which these detection target gases do not absorb infrared.

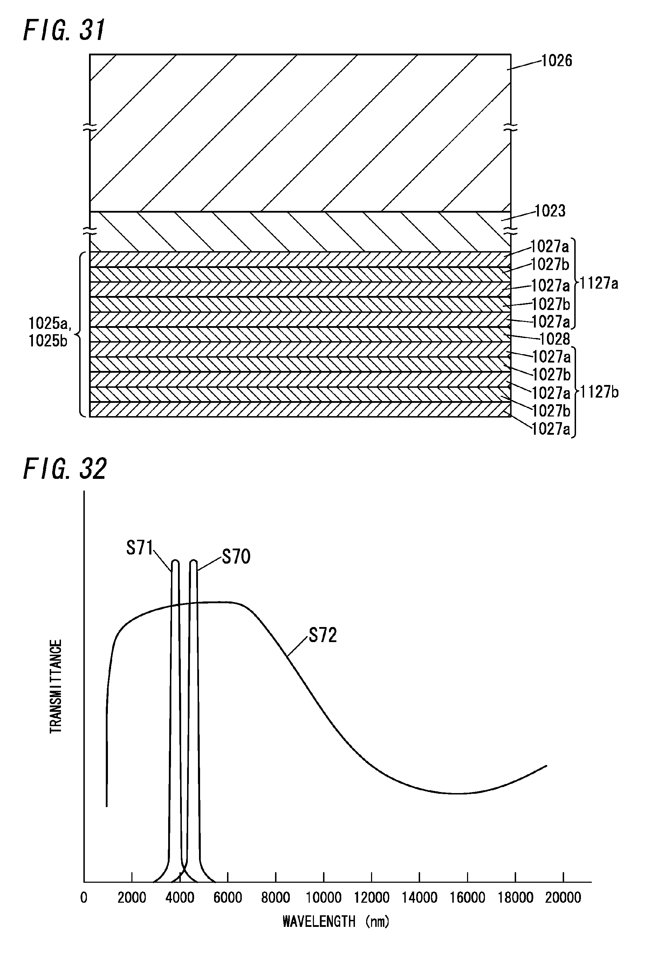

For example, as shown in FIG. 31, each of the transmission filters **1025a** and **1025b** includes a first $\lambda$/4 multilayer (first multilayer) **1127a,** a second $\lambda$/4 multilayer (second multilayer) **1127b,** and a wavelength selection layer **1028** interposed between the first multilayer **1127a** and the second multilayer **1127b.** Each of the first multilayer **1127a** and the second multilayer **1127b** is fabricated by stacking plural kinds of thin films **1027a** and **1027b** having different refractive indices and the same optical thickness. In the instance shown in FIG. 31, the thin films **1027a** and **1027b** are stacked alternately. Each of the first multilayer **1127a** and the second multilayer **1127b** is a multilayer having a periodic structure. The wavelength selection layer **1028** has an optical thickness which is different from the optical thickness of the thin film (**1027**a, **1027**b) and is selected based on the selected wavelength (specific wavelength range) regarding the transmission filter (**1025a**, **1025b**). Besides, with regard to some selected wavelengths of the transmission filters 1025a and **1025b,** the wavelength selection layer **1028** can be omitted. Each of the thin films **1027a** and 1027b is designed to have a quarter-wave optical thickness.

The cut-off filter 1026 is an infrared absorption layer made of a material (infrared absorption material) absorbing infrared. The infrared absorption material is $Al_2O_3$ or $Ta_2O_3$, for example. Like the transmission filters 1025a and 1025b, the cut-off filter 1026 may be a multilayer filter. In brief, the cut-off filter 1026 may be a laminated film fabricated by stacking plural kinds of thin films having different refractive indices. For example, with regard to the cut-off filter 1026, a thin film defined as a low refractive index layer having a relatively low refractive index may be made of $Al_2O_3$ which is one of far infrared absorption materials absorbing far infrared. In contrast, a thin film defined as a high refractive index layer having a relatively high refractive index may be made of Ge. In other words, the multilayer filter includes at least one layer which is an infrared absorption layer configured to absorb far infrared having a wavelength longer than the upper limit of the specific wavelength ranges of the transmission filters 1025a and 1025b.

When the cut-off filter 1026 is the aforementioned infrared absorption layer, the cut-off filter 1026 can absorb infrared of an extensive wavelength range which has a lower limit greater than an upper limit of the specific wavelength ranges, without absorbing infrared of the specific wavelength ranges transmitted by the transmission filters 1025a and 1025b. Alternatively, when the cut-off filter is the aforementioned multilayer filter, it is possible to prevent that the light reception elements 1021a and 1021b receive infrared in an undesired wavelength range by use of reflection of infrared as well as absorption of infrared.

FIG. 32 illustrates transmission characteristics of the transmission filters 1025a and 1025b and the cut-off filter 1026. In FIG. 32, S70 denotes the characteristics curve of the transmission filter 1025a, and S71 denotes the characteristics curve of the transmission filter 1025b, and S72 denotes the characteristics curve of the cut-off filter 1026. FIG. 32 indicates that the cut-off filter 1026 does not transmit infrared in an undesired wavelength range (wavelength range of far infrared) in a long-wavelength side, but removes the same infrared by absorbing it. Therefore, the cut-off filter 1026 transmits infrared of a wavelength range (wavelength range of middle or far infrared) in a short-wavelength side. Each of the narrow range transmission-filters 1025a and 1025b transmits only infrared of a wavelength included in the corresponding specific wavelength range within the wavelength range of the infrared passing through the cut-off filter 1026.

The filter substrate 1023 is configured to support the transmission filters 1025a and 1025b and the cut-off filter 1026. Further, the filter substrate 1023 is thermally coupled to the package 1020, thereby dissipating heat of the cut-off filter 1026. The filter substrate 1023 is made of a material of transmitting infrared of the specific wavelength ranges of the respective transmission filters 1025a and 1025b. For example, the filter substrate 1 is made of Si as mentioned in the above, but may be made of Ge or ZnS.

In order to detect the gas in the gas detection tube 1003 and measure the concentration thereof by use of outputs of the two light reception elements 1021a and 1021b, it is necessary to obtain a difference or a proportion regarding output values (outputs) of the light reception elements 1021a and 1021b. It is assumed that the outputs of the light reception elements 1021a and 1021b are Va and Vb respectively when the detection target gas does not exist in the gas detection tube 1003. Further, it is assumed that only the output of the light reception element 1021a is decreased by $\Delta V$ when the detection target gas exists in the gas detection tube 1003. In the aforementioned instance, with regard to the light reception element 1021a in front of which the transmission filter 1025a is placed, the intensity of the received light is decreased when the carbon dioxide exists. In contrast, with regard to the light reception element 1021b in front of which the transmission filter 1025b is placed, the intensity of the received light is not decreased even when the carbon dioxide exists. Therefore, the assumption that only the output of the light reception element 1021a is decreased in response to existence of the detection target gas is reasonable. In this example, the difference between the outputs of the light reception elements 1021a and 1021b is varied from (Va - Vb) to (Va - $\Delta V$ - Vb). The proportion of the outputs of the light reception elements 1021a and 1021b is varied from (Va / Vb) to {(Va - $\Delta V$) / Vb}.

When the light reception elements 1021a and 1021b are pyroelectric elements, it is possible to obtain the difference between outputs of the light reception elements 1021a and 1021b by use of the polarity of the pyroelectric element. For example, the light reception elements 1021a and 1021b are connected in anti-series with each other. Alternatively, with supplying the outputs of the light reception elements 1021a and 1021b to a differential amplifier (differential amplifier circuit), it is possible to obtain the difference between the outputs of the light reception elements 1021a and 1021b irrespective of the kinds of the light reception elements 1021a and 1021b.

When the infrared sensor 1002 receives infrared corresponding to the single pulse wave from the infrared light source 1001, the infrared sensor 1002 is likely to consider the received infrared as a noise caused by external light, irrespective of whether the infrared sensor uses the difference or the proportion regarding the outputs of the light reception elements 1021a and 1021b. Therefore, it is preferred that the infrared sensor 1002 receives infrared corresponding to the burst wave from the infrared light source 1001. When the infrared is corresponding to the burst wave, the infrared sensor 1002 can calculate an average of the differences or the proportions obtained by receiving infrared multiple times. Consequently, it is possible to reduce the effect of the noise and improve the S/N ratio.

The present embodiment adopts the pyroelectric elements as the light reception elements 1021a and 1021b. The light reception elements 1021a and 1021b are connected in anti-series with each other so as to output the difference of the outputs of the light reception elements **1021a** and **1021b** to the detection circuit **1005.** For example, the detection circuit **1005** judges whether or not the concentration of the carbon dioxide (the detection target gas) in the gas detection tube **1003** is not less than a predetermined concentration, on the basis of the difference of the outputs of the light reception elements **1021a** and **1021b**. The detection circuit **1005** may be placed inside or outside of the package **1020.**

The detection circuit **1005** is configured to judge whether or not the concentration of the detection target gas inside the gas detection tube **1003** is not less than a prescribed concentration. The detection circuit **1005** is configured to, upon judging that the concentration of the detection target gas is not less than the prescribed concentration, output an alarm signal. The alarm signal is supplied to an alarm device configured to give a visual or audio alarm.

For example, the detection circuit **1005** includes a current-voltage converter, a comparator, and an output circuit. The current-voltage converter has an integration function of averaging the outputs of the light reception elements **1021a** and **1021b** respectively corresponding to the burst wave. The comparator is configured to compare a threshold with an output value of the current-voltage converter. The output circuit is configured to output the alarm signal in accordance with a comparative result obtained from the comparator. The detection circuit **1005** may have a configuration different from the above. The detection circuit **1005** may be configured to supply an output corresponding to the concentration of the detection target gas. With this arrangement, the detection circuit **1005** includes the current-voltage converter, a conversion circuit configured to convert the output value of the current-voltage circuit to the concentration of the detection target gas, and an output circuit configured to supply an output corresponding to the concentration of the detection target gas depending on a conversion result obtained from the conversion circuit.

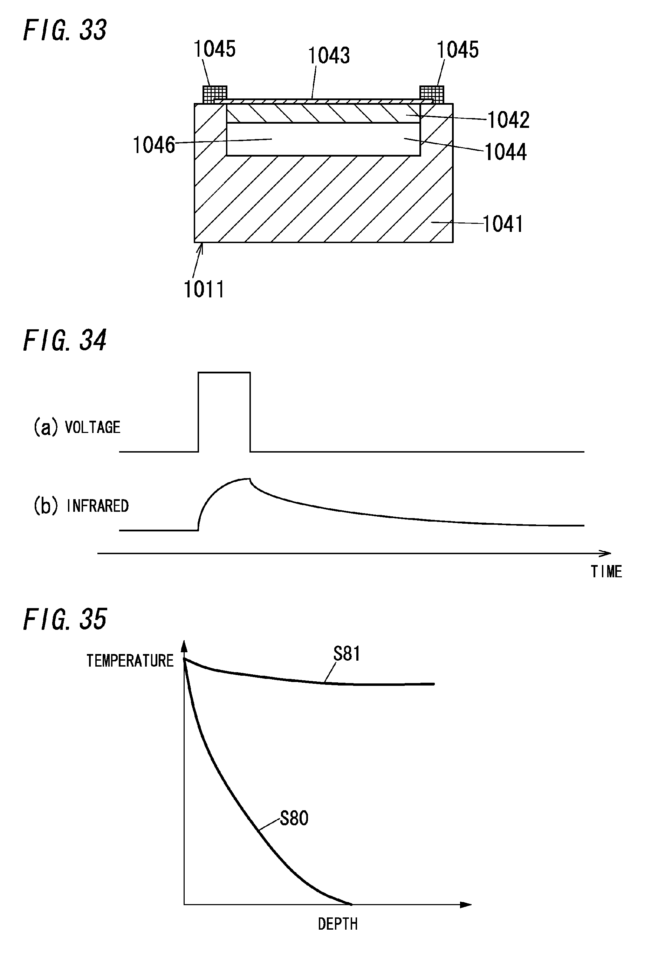

The emission element **1011** is required to have a response speed in the range of about **10** μs to **10** ms in order to emit infrared in response to a single pulse wave or a burst wave supplied from the drive circuit **1004**. FIG. 33 illustrates an instance of the emission element **1011** which meets the above requirement. The structure of the emission element **1011** shown in FIG. 33 is an example. The structure of the emission element **1011** is not limited to the structure illustrated in FIG. 33.

The emission element **1011** illustrated in FIG. 33 includes a substrate **1041,** a holding layer **1042,** and an infrared emission layer **1043**. The holding layer **1042** is a thin film formed over a main surface of the substrate **1041.** The infrared emission layer **1043** is a thin film formed on an opposite surface of the holding layer **1042** from the substrate **1041.** The infrared emission layer **1043** is configured to generate heat in response to receiving electrical power, thereby emitting infrared light. Further, the emission element **1011** includes a thin gaseous layer **1044** formed in the main surface of the substrate over which the holding layer **1042** is formed. The gaseous layer **1044** is surrounded by the substrate **1041** and the holding layer **1042**. In brief, the emission element **1011** includes the gaseous layer **1044** interposed between the substrate **1041** and the holding layer **1042**. In the instance illustrated in FIG. 33, the substrate **1041** is provided with a recessed portion **1046** at its main surface. The recessed portion **1046** is covered with the holding layer **1042**. The gaseous layer is defined as a space surrounded by an inner surface of the recessed portion **1046** and the holding layer **1042**.

The substrate **1041** is a semiconductor substrate (e.g., a single crystal silicon substrate) in the form of a cuboid. Further, the holding layer **1042** is a porous part of the substrate **1041** formed by means of anodizing a region other than a periphery of the main surface of the substrate **1041**. Conditions (e.g., composition of an electrolyte solution, a current density, and a treatment time) of the anode oxidation are selected depending on a conductive type and electrical conductivity of the substrate **1041.**

The substrate **1041** is anodized in a hydrogen fluoride solution. Consequently, it is possible to obtain the holding layer **1042** which is a porous semiconductor layer (e.g., a porous silicon layer) having porosity of about 70 %. The conductivity type of the substrate **1041** may be one selected from p-type and n-type. When porous treatment using anode oxidation is performed, a p-type silicon substrate may show porosity greater than that of an n-type silicon substrate. Therefore, it is preferred that a p-type silicon substrate is used as the substrate **1041.**

The holding layer **1042** formed by performing the porous treatment using the anode oxidation on a part of the substrate **1041** shows decreased thermal capacity, decreased thermal conductivity, and improved thermal resistance. Further, this holding layer **1042** has a smoothed surface. In addition, in order to decrease the thermal conductivity of the holding layer **1042,** a part or a whole of the holding layer **1042** may be oxidized or nitrided. The oxidized or nitrided holding layer **1042** shows improved electrical insulation.

The holding layer **1042** may be a semiconductor oxidation film formed by use of thermal oxidation. Instead of forming a semiconductor oxidation film as the holding layer **1042** by use of thermal oxidation, the holding layer **1042** made of materials including an oxidation product may be formed by use of a CVD method. In contrast to use of the porous treatment, use of the thermal oxidation or the CVD method can simplify a process of forming the holding layer **1042.** Therefore, it is possible to improve mass productivity. When the CVD method is adopted for forming the holding layer **1042,** a high thermal insulation oxidation product (e.g., alumina) or a material containing such an oxidation product can be used. The holding layer **1042** may be made of a porous body of such an oxidation product or a material.

The infrared emission layer **1043** is made of a material selected from TaN and TiN. Such a material (TaN and TiN) has superior oxidation resistance. Therefore, it is possible to use the infrared emission layer **1043** in an air atmosphere. Consequently, the emission element **1011** need not be housed in the package, and can be mounted on a substrate as a bare chip. Even when the emission element **1011** is housed in the package, it is unnecessary to cover, with the windowpane, the window opening which is formed in the package to transmit infrared emitted from the emission element **1011.** Therefore, since infrared is not attenuated by the windowpane, an infrared emission efficiency can be improved. When the infrared emission layer **1043** made of the aforementioned material (TaN and TiN) has an appropriate thickness (several tens of nm) so as to have sufficient durability and enough response performance, sheet resistance of the infrared emission layer **1043** has a desired value.

In the deposition process of the infrared emission layer **1043** by use of the material (TaN and TiN), a nitrogen gas is flowed. Thus, the sheet resistance of the infrared emission layer **1043** can be adjusted by varying partial pressure of the nitrogen gas. For example, the infrared emission layer 1043 can be deposited on a predetermined position by means of reactive sputtering of TaN. the infrared emission layer **1043** having its sheet resistance of the desired value at a prescribed heating temperature can be formed by adjusting the partial pressure of the nitrogen gas. The infrared emission layer **1043** may be made of a material other than TaN and TiN. For example, the infrared emission layer **1043** may be made of nitride metal or carbonized metal.

For example, the intensity of the emitted infrared is varied depending on the voltage (drive voltage) applied between electrodes **1045.** While the power supplied to the infrared emission layer **1043** is constant, the drive voltage is decreased with a decrease of the sheet resistance of the infrared emission layer **1043.** The loss caused by an increase of the drive voltage is decreased with a decrease of the drive voltage. Additionally, since an intensity of an electric field inside the emission layer is decreased, it is possible to prevent breakage of the emission element **1011.** In view of the above, the sheet resistance is preferred to be small.

The infrared emission layer **1043** has a negative resistance temperature coefficient of decreasing the sheet resistance with an increase of the temperature. Therefore, even if the drive voltage is constant, the sheet resistance is decreased with an increase of the temperature, and the current flowing through the infrared emission layer **1043** is increased. In brief, the power supplied to the infrared emission layer **1043** is increased with an increase of the temperature. Therefore, the infrared emission layer **1043** can have an increased maximum attained temperature.

For example, the infrared emission layer **1043** is made of TaN, and the resistance temperature coefficient is -0.001 [$°C^{-1}$]. In this example, when the maximum attained temperature is 500 [°C] and the sheet resistance at the maximum attained temperature is 300 [$\Omega$sq], the infrared emission layer 1043 has the sheet resistance of 571 [$\Omega$sq] at the room temperature.

When the drive voltage is generated by use of a booster circuit, the infrared emission layer **1043** having the negative resistance temperature coefficient as mentioned in the above can increase the maximum attained-temperature yet an increase of a boost ratio of the booster circuit can be suppressed. Therefore, power loss in the booster circuit can be reduced.

The electrodes **1045** in a pair are formed on the surface of the infrared emission layer **1043.** The electrodes **1045** are made of metal having high electrical conductivity. In FIG. 33, the electrodes **1045** in the pair are formed on right and left ends of the infrared emission layer **1043,** respectively. For example, iridium which hardly reacts with a material of the infrared emission layer **1043** and has superior stability at a high temperature is suitable as a material of the electrode **1045.** Alternatively, when an increase in the temperature of the infrared emission layer **1043** is relatively small, aluminum can be used as the material of the electrode **1045.** The material of the electrode **1045** is not limited to aforementioned metal, but may be selected from the other electrical conductive material.

As described in the above, in the infrared light source **1001,** the emission element **1011** is housed in the package **1010.** The electrodes **1045** of the emission element **1011** are connected to the lead pins **1014** via the bonding wires **1015,** respectively.

With regard to the emission element **1011,** when the infrared emission layer **1043** is energized via the electrodes **1045** (when the voltage is applied between the electrodes **1045),** the infrared emission layer **1043** is heated by the Joule heat generated by supplied power, thereby emitting infrared therefrom. When the infrared emission layer **1043** is not energized, emission of the infrared from the infrared emission layer is terminated.

When an energization period in which the infrared emission layer **1043** is energized is relatively short, the gaseous layer **1044** does not cause heat conduction and a convective flow. Thus, the gaseous layer **1044** does not conduct heat. Therefore, a decrease in the temperature of the holding layer **1042** is suppressed. Consequently, it is possible to keep the infrared emission layer **1043** at the high temperature, and promote the infrared emission.

While the infrared emission layer **1043** is not energized, when the substrate **1041** has a temperature different from the holding layer **1042,** a gas existing in the gaseous layer **1044** causes heat conduction and a convective flow, thereby conducting heat from the holding layer **1042** to the substrate **1041.** Therefore, the heat dissipation of the holding layer **1042** is promoted. Consequently, the infrared emission layer can be cooled down rapidly. Therefore, it is possible to terminate the infrared emission immediately.

A sinusoidal voltage may be applied between the electrodes **1045** in the pair. In this instance, the temperature of the infrared emission layer **1043** can be increased during a period of increasing the voltage, and the temperature of the infrared emission layer **1043** can be decreased during a period of decreasing the voltage. Therefore, with applying the sinusoidal voltage between the electrodes **1045,** it is possible to modulate the intensity of the infrared emitted from the infrared light source **1001.**

For example, as shown in (a) of FIG. 34, a pulse voltage is applied to the infrared emission layer **1043** (when a pulse voltage is applied between the electrodes **1045** in the pair provided to the infrared emission layer **1043).** As shown in (b) of FIG. 34, the infrared emission layer **1043** emits infrared immediately in response to a rising edge of the pulse voltage. The infrared emission layer **1043** terminates emitting infrared in a short time from a falling edge of the pulse voltage.

The peak wavelength $\lambda$ [$\mu$m] of infrared emitted from the infrared emission layer **1043** complies with the Wien's displacement law. Therefore, a relation between the peak wavelength $\lambda$ [$\mu$m] and the absolute temperature "T" [K] of the infrared emission layer **1043** satisfies the following formula (9).

$$\lambda = \frac{2898}{T} \quad (9)$$

Therefore, with varying the temperature of the infrared emission layer **1043,** it is possible to vary the peak wavelength of infrared emitted from the infrared emission layer **1043.** Adjustment of the temperature of the infrared emission layer **1043** can be made by controlling the Joule heat generated per unit time by means of varying the amplitude and/or the waveform of the voltage applied between the electrodes **1045.**

For example, the infrared emission layer **1043** can be configured to emit infrared with its peak wavelength of 3 to 4 [$\mu$m] in response to receiving the sinusoidal voltage with an effective value of **100** V at its electrodes **1045.** The selection of the applied voltage enables the infrared emission layer **1043** to emit infrared with its peak wavelength equal to or more than 4 [$\mu$m].

In an instance where the sinusoidal voltage is applied between the electrodes **1045** of the infrared light source with the above structure, a thermal diffusion length "$\mu$" of the holding layer **1042** is expressed by the following formula (10). In the following formula **(10)**, $\alpha$**p** [W/mK] denotes the thermal conductivity of the holding layer **1042.** Cp [J/m$^3$K] denotes volumetric heat capacity (product of specific heat capacity and density) of the holding layer **1042.** "**f**" [Hz] denotes an responsive frequency (the double of the frequency of the applied voltage) of the infrared emission layer **1043.** Besides, $\omega$ = **2$\pi$f.**

$$\mu = \left( \frac{2\alpha p}{\omega C p} \right)^{\frac{1}{2}} \quad (10)$$

The holding layer **1042** is required to have its thickness **Lp** so as to, upon receiving heat changing like an AC from the infrared emission layer, transfer from the holding layer **1042** to the gaseous layer **1044** via a boundary surface between the holding layer **1042** and the gaseous layer **1044,** infrared emitted from the infrared emission layer **1043** to the holding layer **1042.** In other words, it is necessary that the thickness **Lp** of the holding layer **1042** is selected such that the infrared emitted from the infrared emission layer **1043** to the holding layer **1042** reaches the gaseous layer **1044** via the holding layer **1042.** In brief, it is preferred that the thickness **Lp** of the holding layer **1042** is less than the heat diffusion length "**$\mu$**" **(Lp < $\mu$).**

For example, the holding layer **1042** is made of porous silicon. In this example, when "**f**" = **10** [kHz] and "$\alpha$**p**" = **1.1** [W/mK] and **Cp** = **1.05** * **10$^6$** [J/m$^3$K], the heat diffusion length "**$\mu$**" is equal to 5.8 * 10$^{-6}$ [m] in accordance with the formula (10). Therefore, it is preferred that the holding layer **1042** has its thickness **Lp** less than 5.8 [$\mu$m].

In order to improve the emission efficiency of infrared, it is preferred that the holding layer **1042** is formed such that a resonance condition with regard to infrared is fulfilled. When the resonance condition is fulfilled, infrared from the infrared emission layer **1043** to the holding layer **1042** can be reflected by the boundary surface between the holding layer **1042** and the gaseous layer **1044.** With this arrangement, it is possible to reduce a wasted amount of infrared radiation emitted backward from the infrared emission layer **1043.** Therefore, in contrast to a situation where the resonance condition is not fulfilled, it is possible to enhance the intensity of infrared emitted from the infrared emission layer **1043.** In order to achieve this effect, the thickness of the holding layer **1042** is selected such that the resonance condition of infrared with a desired wavelength is fulfilled.

In order that the holding layer **1042** fulfills the resonance condition regarding the infrared with the desired wavelength, it is necessary that the length of light path of the holding layer **1042** with regard to the infrared with the desired wavelength is an odd multiple of a quarter of the desired wavelength. When the thickness of the holding layer

1042 is denoted by **Lp** [m] and a refractive index of the holding layer **1042** is denoted by **"n"**, the length of the light path is expressed as **"n * Lp"**. Therefore, the resonance condition is expressed by the following formula (11), wherein **"λ"** denotes a wavelength in vacuum with regard to the infrared of the desired wavelength, and **"m"** denotes an integer.

$$n * Lp = (2m - 1)\frac{\lambda}{4} \quad (11)$$

As described in the above, in an example where the holding layer **1042** is made of porous silicon, the refractive index **"n"** of the holding layer **1042** is 1.35. When the desired wavelength is 4 [μm] and **"m"** = 1, the thickness **Lp** of the holding layer **1042** is 0.74 [μm]. Since **Lp** = 0.74 [μm] < 5.8 [μm], the thickness **Lp** of the holding layer 1042 satisfies a relation of Lp <μ.

The aforementioned holding layer **1042** does not prevent an increase in the temperature of the infrared emission layer **1043.** In contrast to the holding layer **1042** made of a dense material, the holding layer **1042** made of porous silicon can have the reduced volumetric heat capacity. Consequently, it is possible to reduce the volumetric heat capacity as a whole of the infrared emission layer **1043** and the holding layer **1042.** Further, the heat conductivity and the volumetric heat capacity of the holding layer **1042** are decreased with an increase of porosity of the holding layer **1042.**

Since the holding layer **1042** can have the reduced volumetric heat capacity and does not prevent an increase in the temperature of the infrared emission layer **1043,** the temperature rising efficiency can be improved. Consequently, the emission element **1011** can respond to a variation of the applied voltage immediately. Accordingly, it is possible to increase the modulation frequency of the applied voltage.

Moreover, the holding layer **1042** has opposite surfaces respectively facing the infrared emission layer **1043** and the gaseous layer **1044.** Since the gaseous layer **1044** has the heat conductivity less than that of the holding layer **1042,** the thermal resistance of a heat transfer path from the infrared emission layer **1043** to the holding layer **1042** is increased. Consequently, the heat dissipation from the infrared emission layer **1043** to an atmosphere surrounding the infrared emission layer **1043** is suppressed. The curve **S81** illustrated in FIG. 35 shows that the temperature of the holding layer **1042** is increased when the infrared emission layer **1043** is heated. However, a large temperature gradient with regard to the thickness direction of the holding layer **1042** is not observed. In FIG. 35, the curve **S80** shows a variation of the temperature with regard to the thickness direction of the holding layer **1042** of an instance devoid of the gaseous layer **1044.**

Further, it is preferred that a thickness **Lg** of the gaseous layer **1044** is selected so as to comply with the following condition. In an instance where the sinusoidal voltage is applied to the infrared emission layer **1043,** the thickness **Lg** of the gaseous layer **1044** is selected to be in the range defined by the following formula **(12).** In this formula **(12), "f"** [Hz] denotes the frequency of the applied voltage, and α**g** [W/mK] denotes thermal conductivity of the gaseous layer **1044,** and **Cg** [J/m$^3$K] denotes volumetric heat capacity of the gaseous layer **1044.** Besides, **Lg' = (2**α**g / ω**Cg**)$^{1/2}$,** and ω = **2**π**f.**

$$0.05 Lg' < Lg < 3Lg' \quad (12)$$

For example, when **"f"** = 10 [kHz] and **"**α**g"** = 0.0254 [W/mK] and Cg = 1.21 * 10$^3$ [J/m$^3$K], the formula **(12)** indicates 1.3 [μm] < **Lg** < 77.5 [μm], For example, when the thickness **Lg** of the gaseous layer **1044** is 25 [μm], the above formula **(12)** is satisfied. Preferably, the thickness **Lg** of the gaseous layer **1044** is selected from the range defined by the formula (12) so as to maximize a ratio of the temperature amplitude ratio.

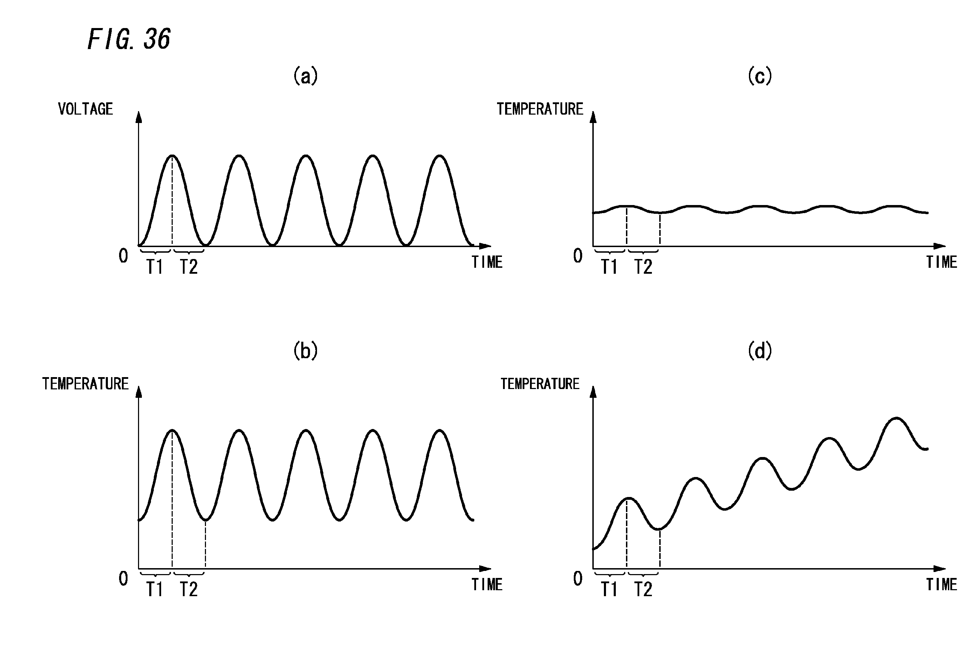

When the temperature of the substrate **1041** is constant, the gaseous layer **1044** shows a thermal insulation performance or a heat dissipation performance depending on the temperature of the holding layer **1042** as well as the thickness **Lg.** With appropriately selecting the thickness **Lg** of the gaseous layer **1044** from the range defined by the above formula **(12),** as shown in (a) and (b) of FIG. 36, the gaseous layer **1044** can have the thermal insulation performance during a period (temperature rising period) **T1** when the voltage applied to the infrared emission layer **1043** is increased. Further, the gaseous layer **1044** can have the heat dissipation performance during a period (temperature falling period) **T2** when the voltage applied to the infrared emission layer **1043** is decreased.

In brief, a period during which the gaseous layer **1044** has the thermal insulation performance can be substantially synchronized with a period of increasing the voltage applied to the infrared emission layer **1043.** In addition, a period during which the gaseous layer **1044** has the heat dissipation performance can be substantially synchronized with a period of decreasing the voltage applied to the infrared emission layer **1043.** Even when the voltage applied to the infrared emission layer **1043** is modulated at a high frequency, it is possible to vary the temperature of the infrared emission layer **1043** at a frequency substantially equal to the frequency of the voltage applied to the infrared emission layer **1043.** Therefore, providing the gaseous layer **1044** can improve the response performance.

With regard to FIG. 36, (c) indicates a temperature variation of the infrared emission layer of the first comparative example of the emission element **1011.** This first comparative example is devoid of the gaseous layer **1044.** When the emission element **1011** is devoid of the gaseous layer **1044,** the emission element **1011** has the insufficient thermal insulation performance, and the emission element **1011** shows the heat dissipation performance rather than the thermal insulation performance. For example, when the drive voltage (see (a) in FIG. 36) modulated at the frequency of 10 kHz is applied between the electrodes **1045,** as shown in (c) of FIG. 36, the temperature of the infrared emission layer **1043** is not increased up to a temperature (predetermined temperature) corresponding to a predetermined intensity of infrared before a lapse of the temperature rising period **T1.** Further, the heat of the infrared emission layer is dissipated during the temperature falling period **T2,** and the infrared emission layer **1043** is kept at a low temperature.

With regard to FIG. 36, (d) indicates a temperature variation of the infrared emission layer of the second comparative example of the emission element **1011.** In this second comparative example, the thickness **Lg** of the gaseous layer **1044** exceeds **3Lg'** which is the upper limit of the range defined by the formula **(12).** For example, the thickness **Lg** is 525 $\mu$m. Thus, the emission element **1011** has the insufficient heat dissipation performance. For example, when the drive voltage (see (a) in FIG. 36) modulated at the frequency of 10 kHz is applied between the electrodes **1045,** as shown in (d) of FIG. 36, the temperature of the infrared emission layer **1043** is increased up to the above temperature during the temperature rising period **T1.** However, the temperature of the infrared emission layer **1043** is not decreased sufficiently even if the temperature falling period **T2** elapses. The temperature of the infrared emission layer **1043** is increased as the periods **T1** and **T2** are repeated. Therefore, the infrared emission layer **1043** is kept at a high temperature.

Besides, FIG. 33 illustrates a directly-heated element (emission element **1011)** configured to emit infrared from the infrared emission layer **1043** when the infrared emission layer **1043** is heated by energizing the infrared emission layer **1043.** Alternatively, it is possible to adopt an indirectly-heated element (emission element 1011) configured to emit infrared from the infrared emission layer **1043** when the infrared emission layer **1043** is heated by energizing a heater layer provided as a separate part from the infrared emission element **1043.** For example, the above heater layer may be interposed between the holding layer **1042** and the infrared emission layer **1043,** or may be provided to an opposite side of the infrared emission layer **1043** from the holding layer **1042.**

With regard to the indirectly-heated emission element 1011, the infrared emission layer **1043** can be used as the holding layer **1042.** Further, with respect to the indirectly-heated emission element **1011,** it is necessary to improve the emission efficiency for the infrared with the desired wavelength. In order to achieve this requirement, the heater layer is formed so as to satisfy the resonance condition regarding the infrared with the desired wavelength in order that infrared emitted from the infrared emission layer **1043** passes through the heater layer. Besides, a reflection layer (not shown) configured to reflect infrared can be used as an alternative to the gaseous layer **1044.** In brief, the emission layer **1011** may be configured to change the intensity of infrared depending on a pulse with duration in the range of about 10 $\mu$s to 10 ms.

As describe in the above, the infrared gas measuring device of the present embodiment includes the infrared light source **1001** and the infrared sensor **1002.** The infrared light source **1001** is configured to emit infrared. The infrared sensor **1002** is configured to detect infrared emitted from the infrared light source **1001** and passing through the monitoring space into which the detection target gas is flowed. The infrared gas measuring device of the present embodiment detects the detection target gas in the monitoring space by use of the output of the infrared sensor **1001.** The infrared sensor **1001** includes the light reception elements **1021a** and **1021b,** the transmission filters **1025a** and **1025b,** and the cut-off filter **1026.** Each of the light reception elements **1021a** and **1021b** is configured to convert received infrared to an electric signal. The transmission filters **1025a** and **1025b** are interposed in incoming paths of infrared to the light reception elements **1021a** and **1021b** from the monitoring space, respectively. Each of the transmission filters **1025a** and **1025b** is configured to selectively transmit infrared rays in a specific wavelength range. The cut-off filter 1026 is interposed between the monitoring space and the transmission filters **1025a** and **1025b.** The cut-off filter **1026** is configured to absorb infrared in a wavelength range other than the specific wavelength ranges of the transmission filters **1025a** and **1025b,** thereby removing infrared over a wide range. The light reception elements **1021a** and **1021b** are configured to sense infrared in the specific wavelength range transmitted by the transmission filters **1025a** and **1025b,** respectively. The drive circuit **1004** is configured to drive the infrared light source **1001** such that the infrared light source **1001** emits infrared intermittently.

According to the infrared gas measuring device of the present embodiment, since the cut-off filter **1026** removes a large part of infrared of a wavelength unnecessary for detection of the detection target gas, the sensitivity for the detection target gas can be improved. When the cut-off filter **1026** is used, the cut-off filter **1026** is likely to emit infrared in response to the temperature rising caused by absorption of the unnecessary infrared by the cut-off filter **1026.** However, the infrared light source **1001** emits infrared intermittently. Therefore, it is possible to suppress the temperature rising which would otherwise occur due to the absorption of the unnecessary infrared. It is possible to suppress a wavelength shift which would otherwise occur due to the temperature variation of the cut-off filter **1026** caused by the infrared radiation of the infrared light source **1001.** Consequently, it is possible to utilize the function of removing the unnecessary infrared by the cut-off filter **1026,** and detect the detection target gas at a high accuracy. Further, since the infrared light source **1001** emits infrared intermittently, in contrast to an instance where the infrared light source **1001** emits infrared continuously, power consumption can be reduced.

Further, the infrared light source **1001** includes the substrate **1041,** the holding layer **1042** formed over the substrate **1041,** the infrared emission layer **1042** formed over the holding layer **1041,** and the gaseous layer **1044** interposed between the substrate **1041** and the holding layer **1042.** The infrared emission layer **1043** is configured to emit infrared in response to heat generated due to energization of the infrared emission layer **1043.** The gaseous layer **1044** is configured to suppress a decrease of the temperature of the holding layer **1042** while the infrared emission layer **1043** is energized, and to promote heat transmission from the holding layer **1042** to the substrate **1041** while the infrared emission layer **1042** is not energized.

According to the infrared light source **1001** including the infrared emission layer **1043,** the holding layer **1042,** and the gaseous layer **1055,** the gaseous layer **1044** suppresses a decrease of the temperature of the holding layer **1042** while the infrared emission layer **1043** is energized. Therefore, it is possible to increase a proportion of an amount of infrared radiation to supplied power (power supplied to the infrared emission layer **1043).** In contrast, the gaseous layer **1044** promotes the heat transfer from the holding layer **1042** to the substrate **1041** while the infrared emission layer **1043** is not energized, thereby decreasing the temperature of the holding layer **1042.** Consequently, it is possible to terminate emitting infrared in a short time. In other words, the infrared emission layer **1043** immediately emits infrared in response to power supply to the infrared emission layer **1043** and immediately terminates emitting infrared in response to termination of the power supply to the infrared emission layer **1043.** Therefore, the infrared emission layer **1043** shows an excellent response performance. Further, it is possible to emit infrared at a high efficiency with respect to the supplied power. Thus, in contrast to a situation where the infrared emission element **1011** is selected from an incandescent lamp and a lamp including a filament in a dielectric film, power consumption can be reduced.

When the cut-off filter **1026** is a multilayer filter including an infrared absorption layer, a wavelength of infrared to be removed can be adjusted by use of reflection infrared as well as absorption of infrared. Besides, a wavelength range of infrared absorbed in the cut-off filter **1026** depends on a material of the infrared absorption layer. In contrast, a wavelength range of infrared reflected by the cut-off filter **1026** depends on refractive indices and thicknesses of thin films constituting a laminated film. Thus, the complementary use of the absorption and the reflection can extend the wavelength range of infrared to be removed. In other words, even when the infrared **1001** is configured to emit infrared in a wide wavelength range, infrared with a wavelength unnecessary for detecting the detection target gas is removed as possible. Consequently, it can be suppressed that the light reception elements **1021a** and **1021b** receive infrared with a wavelength unnecessary for detecting the detection target gas. Thus, the sensitivity with regard to the detection target gas can be improved.

When the infrared absorption layer is made of one selected from $Al_2O_3$ and $Ta_2O_3$, in contrast to a situation where the infrared absorption layer is made of one selected from $SiO_X$ and SiNx, the infrared absorption layer can have an improved absorption rate for far infrared. Especially, when the infrared absorption layer is made of $Al_2O_3$, it is preferred that the filter substrate **1023** is made of Si. In this instance, since Si and $Al_2O_3$ have the substantially same hardness, there is no possibility that the multilayer filter (cut-off filter **1026**) is removed from the filter substrate **1023** even when a variation of a surrounding temperature causes expansion or contraction of the filter **1029.** Accordingly, stability and durability can be improved.

For example, each of the light reception elements **1021a** and **1021b** may be a thermal infrared detection element configured to sense infrared in a wavelength range corresponding to an entire wavelength range of infrared emitted from the infrared light source **1001.** In this instance, with changing the configurations of the transmission filters **1025a** and **1025b** and the cut-off filter **1026,** the infrared gas measuring device can detect various kinds of the detection target gases. Therefore, the infrared gas measuring devices configured to detect the different detection target gases can be manufactured by use of common parts. Accordingly, the infrared gas measuring device can be manufactured at a lowered cost.

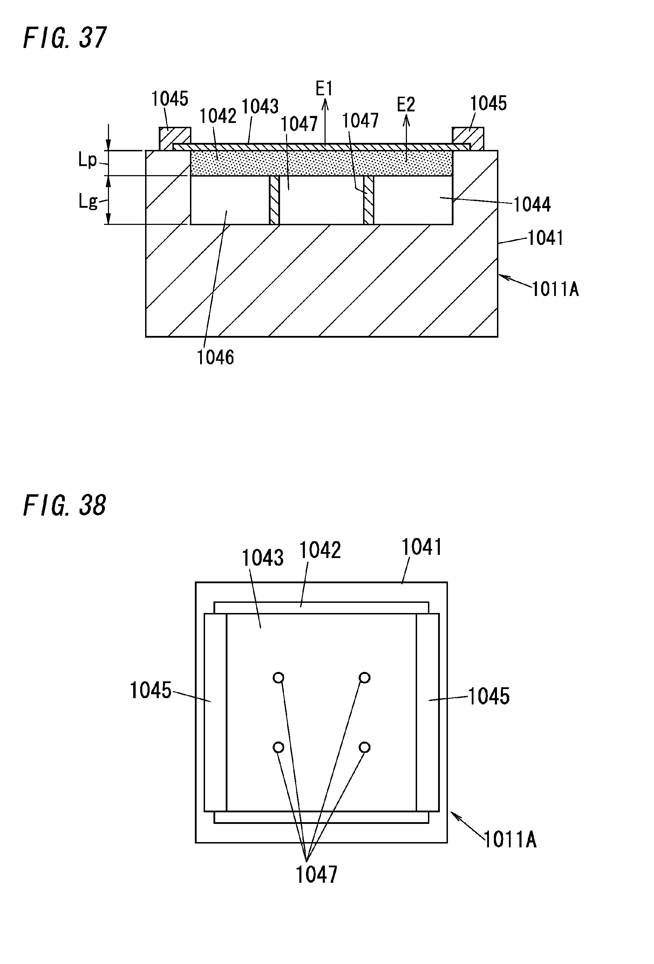

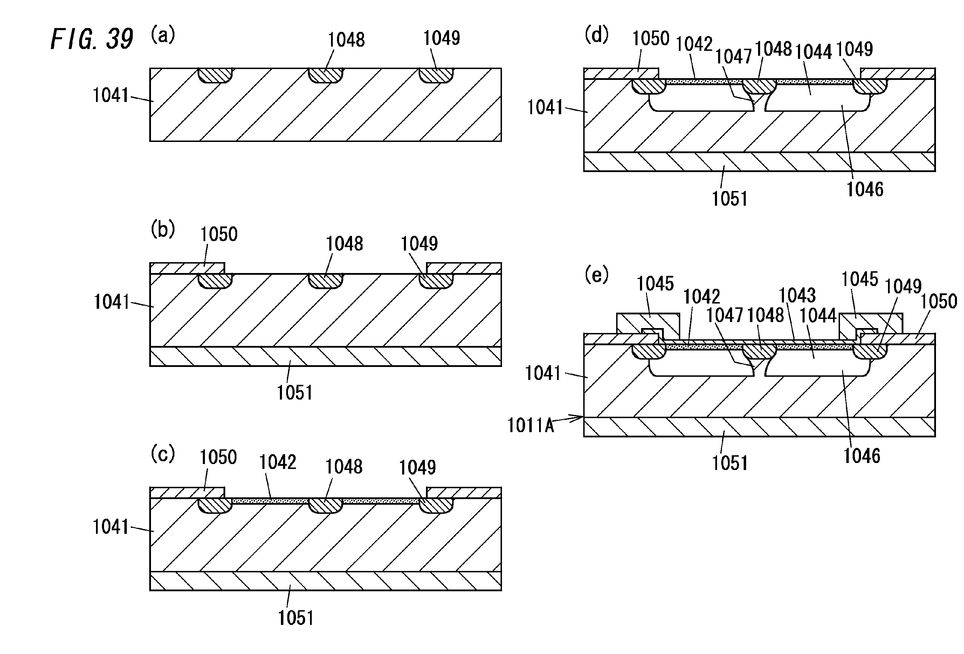

FIGS. 37 and 38 illustrate the first modified example (emission element **1011A**) of the emission element **1011.** Besides, the upward/rearward direction and the leftward/rightward direction of FIG. 37 denote an upward/rearward direction and a leftward/rightward direction of the emission element **1011A,** respectively.

As shown in FIGS. 37 and 38, the emission element **1011A** is different from the emission element **1011** in that the emission element **1011A** includes support portions (support members) **1047** in the form of a pillar. Each of the support portions **1047** is interposed between the holding layer **1042** and a bottom of the recessed portion **1046** in order to support the holding layer **1042.**

The support portion **1047** is made of a single crystal silicon greater in mechanical strength than a porous layer. The support portion **1047** is formed in a circular truncated cone and has a diameter greater towards its upper side than at its lower side. In the instance illustrated in FIG. 37, the four support portions **1047** are placed in the gaseous layer **1044** and are spaced from each other at a predetermined interval. Each of the support portions **1047** connects the upper surface of the substrate **1041** (i.e., the bottom surface of the recessed portion **1046** of the substrate **1041)** to the lower surface of the holding layer **1042,** thereby supporting the holding layer **1042** over the substrate **1041.** Even if the temperature of the infrared emission layer **1045** is varied, it is possible to avoid that the holding layer **1042** is stuck to the substrate **1041** due to a difference in a thermal expansion coefficient between the infrared emission layer **1045** and the holding layer **1042.** Further, it can be prevented that the temperature variation of the infrared emission layer **1043** is blocked and that the infrared emission layer is deformed and broken. In a situation where a wet process is performed in a process of fabricating the emission element **1011B**, it can be prevented that the holding layer **1042** is stuck to the substrate **1041** in a dry process subsequent to the wet process. Further, while the thickness **Lp** of the holding layer **1042** fulfills the above resonance condition, the deformation of the holding layer **1042** is likely to occur due to heat generated. However, with providing the support portion **1047,** it is possible to prevent the deformation of the holding layer **1042** caused by generated heat. In the instance shown in FIG. 37, the support portion **1047** makes contact with the lower surface of the holding layer **1042.** Besides, the support portion **1047.** The support portion **1047** may penetrate through the holding layer **1042** so as to support the same.

When the substrate **1041** is made of single crystal silicon, a part of the substrate **1041** may be left as the support portion **1047** in a process of forming the recessed portion **1046.** With this arrangement, a stress occurring in a junction of the support portion **1047** and the substrate **1041** is reduced down to zero. In other words, since the support portion **1047** is formed integrally with the substrate **1041,** the mechanical strength of the support portion **1047** can be improved.

As shown in FIG. 37, when the infrared emission layer **1043** is energized by means of applying the voltage between the electrodes **1045,** the emission element **1011A** emits infrared **E1** upwardly from the infrared emission layer **1043.** Since the holding layer **1042** supports the infrared emission layer **1043** directly, heat generated in the infrared emission layer **1043** is transferred to the holding layer **1042** directly. The holding layer **1042** is heated when the heat is transferred from the infrared emission layer **1043** to the holding layer **1042.** Consequently, the temperature of a part of the holding layer **1042** is increased and then infrared **E2** is emitted from the holding layer **1042.**

The infrared emission layer **0143** is configured to have transparency for infrared. Therefore, infrared emitted toward the infrared emission layer **1043** from the holding layer **1042** passes through the infrared emission layer **1043** and travels upwardly from the infrared emission layer **1043.** In brief, the emission element **1011A** emits infrared **E1** emitted upwardly from the infrared emission layer **1043** and infrared **E2** emitted upward of the infrared emission layer **1042** from the holding layer **1042** via the infrared emission layer **1043.** With regard to the emission element **1011A,** the infrared emission layer **1043** acts as a directly-heated infrared emission source, and the holding layer **1042** acts as an indirectly-heated infrared emission source. As apparent from the above, with regard to the emission element **1011A,** the holding layer **1042** emits infrared by use of a part of energy radiated to the holding layer **1042** from the infrared emission layer **1043.** Consequently, the emission efficiency of infrared with regard to the supplied power can be improved. In other words, it is possible to reduce the supplied power necessary to emit infrared radiation of a desired amount.

Also in the emission element **1011A,** while the temperature of the infrared emission layer **1043** is increased, the gaseous layer **1044** thermally insulates the holding layer **1042** from the substrate **1041.** The gaseous layer **1044** acts as a thermal insulation layer between the holding layer **1042** and the substrate **1041,** thereby promoting an increase in the temperature of the infrared emission layer **1043.** Consequently, the temperature rising period **T1** can be shortened. While the temperature of the infrared emission layer **1043** is decreased, heat transferred from the infrared emission layer **1043** to the holding layer **1042** is dissipated to the substrate **1041** through the gaseous layer **1044.** The gaseous layer **1044** acts as a heat dissipation layer between the holding layer **1042** and the substrate **1041,** thereby promoting a decrease in the temperature of the infrared emission layer **1043.** Consequently, the temperature falling period **T2** can be shortened. Accordingly, as shown in (a) and (b) of FIG. 37, it is possible to synchronize the temperature variation of the infrared emission layer **1043** with the waveform of the input voltage. Consequently, it is possible to improve the output of the infrared emitted from the emission element **1011A,** and to drive the emission element **1011A** at a high frequency. Further, it is enabled to shorten the time necessary to measure the gas, and the power consumption can be reduced.

The holding layer **1042** is a porous layer. The porous layer is lower in a heat capacity and a thermal conductivity than a dense dielectric material. Therefore, the holding layer **1042** does not prevent an increase of the temperature of the infrared emission layer **1043.** The temperature rising period **T1** can be shortened.

Especially, it is preferred that the holding layer **1042** is made of porous silicon or porous polysilicon. With this preferred instance, the heat resistance of the holding layer **1042** can be improved. Consequently, it can be prevented that an increase of the temperature of the infrared emission layer **1043** causes deformation or breakage of the holding layer **1042.**

The holding layer **1042** is fixed to the substrate **1041** at its outer periphery. Especially, in the instance illustrated in FIGS. 37 and 38, the outer periphery of the holding layer **1042** is bonded to the inner periphery of the recessed portion **1046** of the substrate **1041.** Therefore, it is possible to prevent the deformation or the breakage of the holding layer **1042** caused by a stress occurring due to a difference in a thermal expansion coefficient between the infrared emission layer **1043** and the holding layer **1042** when the temperature of the infrared emission layer **1043** is increased.

Next, the following explanation referring to (a) to (e) in FIG. 39 is made to a process of manufacturing the emission element **1011A**. In the following explanation, the number of the support portions **1047** is one. The substrate **1041** is a p-type semiconductor substrate in the form of an approximately rectangular shape. The substrate **1041** has resistivity in the range of 80 to 120 Ωcm.

In the process of manufacturing the emission element **1011A,** a doping process is performed first. In the doping process, as shown in (a) of FIG. 39, a first impurity diffusion region **1048** and a second impurity diffusion layer **1049** are formed in a first surface (upper surface, in (a) of FIG. 39) of the substrate **1041.** The first impurity diffusion region **1048** has a rectangular shape and is formed in a center of a rectangular region (holding layer forming region) of the first surface of the substrate **1041.** The holding layer forming region is used for forming the holding layer **1042.** The second impurity diffusion region **1049** has a rectangular frame shape and surrounds the holding layer forming region. The first impurity diffusion region **1048** and the second impurity diffusion region **1049** are formed by means of the ion implantation of an n-type impurity (e.g., phosphorus ion) at a high concentration in the first surface of the substrate **1041,** followed by drive-in diffusion. Besides, the first impurity diffusion region **1048** is greater in a peripheral shape than the support portion **1047.** The first impurity diffusion region **1048** is formed to have a thickness substantially equal to that of the gaseous layer **1044.**

After the doping process, an annealing process (annealing treatment) is performed. Thus, the impurities of the first impurity diffusion region **1048** and the second impurity diffusion region **1049** are diffused and are activated. Each of the first impurity diffusion region **1048** and the second impurity diffusion region **1049** is used as an n-type anode oxidation mask.

After the annealing process, a mask forming process is performed. In the mask forming process, a silicon dioxide film is formed on a whole of the first surface (upper surface, in (a) of FIG. 39) and a whole of a second surface (lower surface, in (b) of FIG. 39) of the substrate **1041** by means of an oxidation treatment. Subsequently, the silicon dioxide film formed on the first surface of the substrate **1041** is patterned by means of a photolithography technique and an etching technique in order to form an anode oxidation mask **1050** (see (b) in FIG. 39). The anode oxidation mask **1050** exposes the above holding layer forming region and a part of the second impurity diffusion region **1049.** Meanwhile, the silicon dioxide film formed on the second surface of the substrate **1041** is removed by means of an etching technique. Thereafter, an aluminum electrode **1051** is formed on the second surface of the substrate **1041** by mean of a sputtering method. The aluminum electrode **1051** is a back contact used for applying an electrical potential to the substrate **1041** in the anode oxidation treatment. Therefore, the aluminum electrode **1051** is formed so as to make an ohmic contact with the substrate **1041.**

After the mask forming process, a pore forming process is performed. In the pore forming process, the anode oxidation is performed in order to make multiple pores in a part of the holding layer forming region other than the first impurity diffusion region **1048** and the second impurity diffusion region **1049.** Thus, as shown in (c) of FIG. 39, the holding layer **1042** made of porous silicon is formed.

With regard to the anode oxidation of the semiconductor substrate, it is known that pore forming or electrochemical polishing occurs depending on a relation between a supplied amount of fluorine ions and a supplied amount of holes. When the supplied amount of the fluorine ions exceeds the supplied amount of the holes, the pore forming occurs. When the supplied amount of the holes exceeds the supplied amount of the fluorine ions, the electrochemical polishing occurs.

In the pore forming process, a solution of hydrogen fluoride at a concentration of 30 % is used as an electrolysis solution of the anode oxidation. The solution of hydrogen fluoride at a concentration of 30 % is prepared by means of mixing a hydrofluoric solution with ethanol. In the anode oxidation process, the first surface of the substrate **1041** is soaked with the electrolysis solution. Thereafter, a voltage is applied between the aluminum electrode **1051** formed on the second surface of the substrate **1041** and a platinum electrode (not shown) placed to face the first surface of the substrate **1041** so as to supply a current at predetermined current density (e.g., 100 mA/cm$^2$) for a prescribed time period. Thus, the holding layer **1042** having its thickness **Lp** of 1 $\mu$m is formed. In order to use the first impurity diffusion region **1048** and the second impurity diffusion region **1049** as the n-type mask for the anode oxidation, it is necessary that the first impurity diffusion region **1048** and the second impurity diffusion region **1049** are not exposed to light during the anode oxidation process.

As described in the above, it is sufficient that the thickness **Lp** of the holding layer **1042** is less than the length **"μ"** of the thermal diffusion.

After the pore forming process, an electrochemical polishing process is performed. In the electrochemical polishing process, the anode oxidation is performed under a condition different from that in the pore forming process. Thereby, the recessed portion **1046** (gaseous layer **1044**) is formed in the substrate **1041.** With regard to the electrochemical polishing process, since the first impurity diffusion region **1048** works as the mask, a part of the substrate **1041** beneath the first impurity diffusion region **1048** is not removed but remains. As a result, the support portion **1047** is formed. The support portion **1047** has a circular truncated cone shape having a diameter greater towards its upper side than at its lower side. As described in the above, with performing the electrochemical polishing process, the gaseous layer **1044** and the support portion **1047** are formed simultaneously.

As mentioned in the above, the pore forming or the electrochemical polishing occurs depending on the relation between the supplied amount of fluorine ions and the supplied amount of holes.

Accordingly, in the electrochemical polishing process, a solution of hydrogen fluoride at a concentration of 15 % is used as an electrolysis solution of the anode oxidation. The solution of hydrogen fluoride at a concentration of 15 % is prepared by means of mixing a hydrofluoric solution with ethanol. In the anode oxidation process, the holding layer **1042** and the anode oxidation mask **1050** are soaked with the electrolysis solution prepared. Thereafter, a voltage is applied between the aluminum electrode **1051** and the platinum electrode (not shown) placed to face the first surface of the substrate **1041** so as to supply a current at predetermined current density (e.g., 1000 mA/cm$^2$) for a prescribed time period. Since the holding layer **1042** has multiple pores, a part of the substrate **1041** covered with the holding layer **1042** is polished. Thus, the gaseous layer **1044** having its thickness **Lg** of 25 $\mu$m is formed. In this process, since the first impurity diffusion region **1048** works as the mask, a part of the substrate **1041** beneath the support portion **1047** is not removed but remains.

As mentioned in the above, the thickness Lg of the gaseous layer **1044** is selected to fulfill the above formula (**12**).

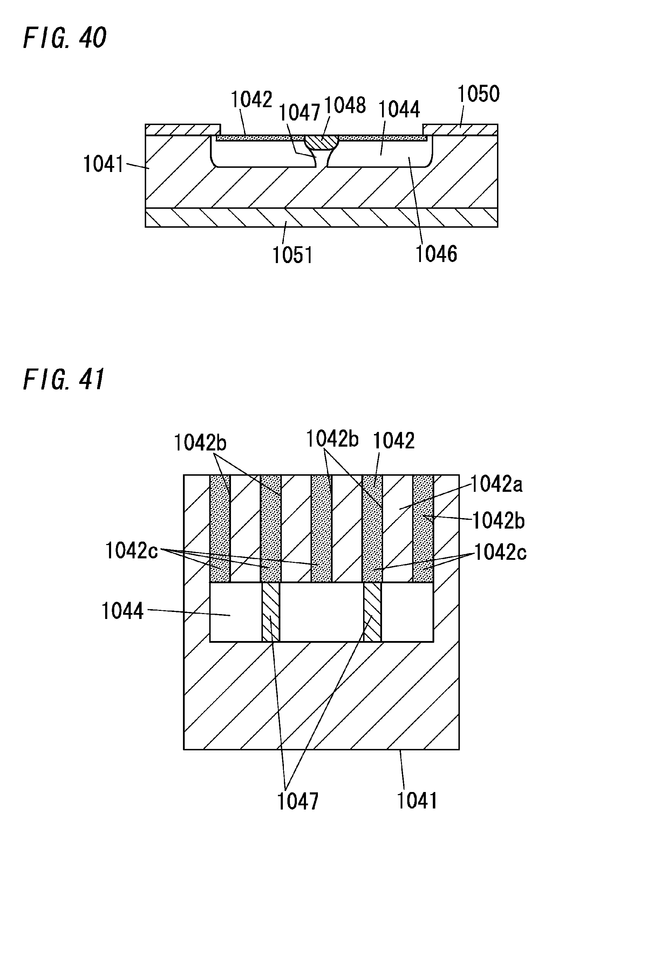

In the electrochemical polishing process, the substrate **1041** is polished isotropically. Therefore, if the second impurity diffusion region **1049** is not formed in the substrate **1041,** a part of the substrate **1049** adjacent to the periphery of the holding layer **1042** is polished, as shown in FIG. 40. As a result, the holding layer **1042** is supported by only the anode oxidation mask **1050.** Therefore, the mechanical strength of the emission element **1011A** is weakened. In contrast, since the instance illustrated in (d) of FIG. 39 has the second impurity diffusion region **1049,** the second impurity diffusion region **1049** (n-type region) connects the periphery of the holding layer **1042** to the substrate **1041.** Consequently, the mechanical strength of the emission element **1011A** can be improved.

In brief, the process of manufacturing the emission element **1011A** includes a doping process (second doping process) prior to the mask forming process. In the second doping process, the second impurity diffusion region **1049** is formed. The second impurity diffusion region extends from the holding layer forming region to a region of the first surface of the substrate **1041** on which the anode oxidation mask **1050** is formed. The second impurity diffusion region **1049** works as the anode oxidation mask. Therefore, a part of the substrate **1041** beneath the second impurity diffusion region **1049** is not electrochemically polished along the thickness direction of the substrate **1041.** Thus, the substrate **1041** supports the second impurity diffusion region **1049** from below. Accordingly, in the emission element **1011A,** the second impurity diffusion region **1049** and a part of the substrate **1041** supporting the second impurity diffusion region **1049** from below function as a reinforcement member configured to reinforce connection between the holding layer **1042** and the substrate **1041.** Consequently, it is possible to increase mechanical strength of a junction between the holding layer **1042** and the substrate **1041,** and prevent the deformation and the breakage of the holding layer **1042.**

After the electrochemical polishing process, an infrared emission layer forming process is performed. In the infrared emission layer forming process, the infrared emission layer **1043** is formed on the holding layer **1042** (a region surrounded by the anode oxidation mask **1050).** In the instance shown in (e) of FIG. 39, the infrared emission layer **1043** is formed so as to extend from the holding layer **1042** to an inner periphery of the anode oxidation mask **1050.** The infrared emission layer **1043** is made of noble metal (e.g., Ir) with a property of generating heat in response to energization. Further, the infrared emission layer **1043** has a thickness of 100 nm. The material of the infrared emission layer **1043** is not limited to Ir but may be a heat resistance material with a property of generating heat in response to energization. The heat resistance material is selected from heat resistance metal, metallic nitride, and metallic carbide, for example. Preferably, the infrared emission layer **1043** is made of a material with a high infrared emissivity.

After the infrared emission layer forming process, an electrode forming process is performed. In the electrode forming process, the electrodes **1045** are formed on the opposite ends (left and right ends, in (e) of FIG. 39) of the infrared emission layer **1043,** respectively. For example, the electrode **1045** is formed by means of an evaporation technique using a metal mask.

Through the aforementioned processes, the emission element **1011A** illustrated in (e) of FIG. 39 is obtained.

As described in the above, the process of fabricating the emission element **1011A** includes the mask process, the pore forming process, the electrochemical polishing process, and the infrared emission layer forming process. The mask process is defined as a process of forming the anode oxidation mask **1050.** The pore forming process is defined as a process of forming the holding layer **1042** being a porous layer by means of the anode oxidation. The electrochemical polishing process is defined as a process of forming the gaseous layer **1044** by means of the electrochemical polishing utilizing the anode oxidation. The infrared emission layer forming process is defined as a process of forming the infrared emission layer **1043.**

According to the process of manufacturing the emission element **1011A** as mentioned in the above, after the holding layer **1042** is formed by use of the porous treatment utilizing the anode oxidation in the pore forming process, the gaseous layer **1044** is formed by use of the electrochemical polishing treatment utilizing the anode oxidation in the electrochemical polishing process. In brief, with performing the anode oxidation treatment based on the different conditions twice, it is possible to easily form the holding layer **1042** over the recessed portion **1046** of the substrate **1041.** Further, the holding layer **1042** can have a decreased volumetric thermal capacity and an increased thermal insulation performance.

Further, the process of manufacturing the emission element **1011A** includes the doping process (first doping process) prior to the mask process. The doping process is defined as a process of forming the first impurity diffusion layer **1048** in the holding layer forming region. In the pore forming process, pores are not formed in the first impurity diffusion region **1048.** Further, in the electrochemical polishing process, the first impurity diffusion region **1048** is not electrochemically polished. Thus, the first impurity diffusion region **1048** works as the anode oxidation mask. Therefore, a part of the substrate **1041** beneath the first impurity diffusion region **1048** is not electrochemically polished along the thickness direction of the substrate **1041.** Thus, the support portion **1047** is formed beneath the first impurity diffusion region **1048.**

As mentioned in the above, the first impurity diffusion region **1048** is used as the anode oxidation mask. Therefore, it is unnecessary to form an anode oxidation mask **1050** on the holding layer forming region in the mask process. When such an anode oxidation mask **1050** is formed on the holding layer forming region, there is a difference in level between the surface of the anode oxidation mask **1050** and the surface of the holding layer forming region (the first surface of the substrate **1041).** In brief, with forming the first impurity diffusion region **1048,** it is unnecessary to form the additional anode oxidation mask **1050** producing the difference in level in the mask process. Consequently, it is possible to prevent the breakage of the infrared emission layer **1043** formed on the upper surface of the holding layer **1042** which would otherwise occur at the periphery of the anode oxidation mask **1050.** In addition, it can be prevented that the infrared emission layer **1043** has nonuniform resistance. Thus, it is possible to manufacture the emission element **1011A** capable of operating stably.

Moreover, after the electrochemical polishing process, a drying process is performed. The drying process is defined as a process of purifying and drying the substrate **1041** and the holding layer **1042.** Since the support portion **1047** is formed through the electrochemical polishing process, it is possible to prevent that the holding layer **1042** is stuck to the substrate **1041** in the drying process.

FIG. 41 shows another instance of the holding layer **1042.** The holding layer **1042** illustrated in FIG. 41 is made of bulk silicon. The holding layer **1042** includes a macro-porous silicon portion **1042a** in the form of a plate shape. The macro-porous silicon portion **1042a** is provided with plural macro-pores **1042b** extending along a thickness direction of the macro-porous silicon portion **1042a.** The macro pore **1042b** has a size of a few $\mu$m, for example. The macro-pore **1042b** is fully filled with a nano-porous silicon portion **1042c.** The nano-porous silicon portion **1042c** is provided with plural nano-pores. The nano-pore has a size of a few nm, for example. As not illustrated in the drawings, the surface (upper surface, in FIG. 41) of the holding layer **1042** includes a region corresponding to the nano-porous silicon portion **1042,** and such a region has a microscopically waving surface.

With appropriately selecting the conductivity type and the resistivity of the substrate **1041** and the condition (e.g., the composition of the electrolyte solution, the current density, and the treatment time) of the porous treatment utilizing the anode oxidation, the aforementioned holding layer **1042** can be formed. For example, the substrate **1041** is a high resistance p-type silicon substrate having resistance of 100 $\Omega$cm. In this instance, a highly-concentrated hydrofluoric acid solution of hydrofluoric acid at a concentration of about 25 % is used as the electrolyte solution. The current density is a relatively high value such as 100 mA/cm$^2$.

As described in the above, the holding layer **1042** illustrated in FIG. 41 has a structure where the macro-pores **1042b** are formed in the bulk semiconductor and the nano-pores are placed inside the macro-pore **1042b.** The macro-pore **1042b** is used for emitting infrared based on cavity radiation occurring due to an increase of the temperature of the holding layer **1042.**

With regard to the holding layer **1042,** when the holding layer **1042** receives heat from the infrared emission layer **1043,** the cavity radiation occurs in the macro-pore **1042.** Therefore, the emission efficiency of infrared can be more improved. The nano-porous silicon portion **1042** provided with the nano-pores is formed in the macro-pore **1042b.** Although forming the macro-pores **1042b** in the holding layer **1042** causes a decrease of mechanical strength of the holding layer **1042,** it is possible to suppress the decrease of the mechanical strength of the holding layer **1042** without preventing the cavity radiation occurring in the macro-pores **1042b.** In addition, the thermal insulation performance of the holding layer **1042** can be improved.

When the nano-porous silicon portion **1042b** is not formed in the macro-pore **1042b,** the surface of the holding layer **1042** has multiple recessed or protruded portions in micro-meter scale. When the recessed or protruded portions in micro-meter scale exist in the surface of the holding layer **1042,** it is impossible that the infrared emission layer **1043** has the thickness in the range of tens of nanometers. Meanwhile, when the nano-porous silicon portion **1042b** is formed in the macro-pore **1042b,** only multiple recessed or protruded fine portions in nano-meter scale exist in the surface of the holding layer **1042.** Therefore, the thickness of the infrared emission layer **1043** does not suffer from a surface condition of the holding layer **1042** substantially. Therefore, it is possible to adjust the thickness of the infrared emission layer **1043** in the range of tens of nanometers.

In order to have the holding layer **1042** emit infrared, it is necessary that the holding layer **1042** has its thickness **Lp** not less than 0.5 $\mu$m. As described in the above, the thickness **Lp** of the holding layer **1042** is selected to be less than "$\mu$" determined by the above formula **(10).**

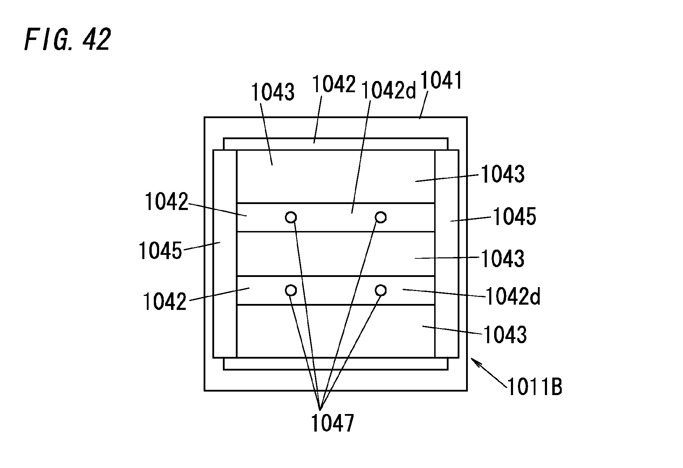

FIG. 42 illustrates the second modified example (emission element **1011B**) of the emission element **1011.** Differently from the emission element **1011A in** which the infrared emission layer **1043** is formed on the entire upper surface of the holding layer **1042,** the emission element **1011B** includes the three infrared emission layers **1043** formed on the upper surface of the holding layer **1042.** The three infrared emission layers **1043** are arranged in a predetermined direction (upward/downward direction, in FIG. 42) at a predetermined interval. Thus, the holding layer **1042** includes exposed portions **1042d** each having an upper surface exposed via a gap between the infrared emission layers **1043.** The support portion **1047** is configured to support the holding layer **1042** at the exposed portion **1042d** of the holding layer **1042.** In the instance illustrated in FIG. 42, the support portion **1047** extends through the exposed portion **1042d** of the holding layer **1042** in the thickness direction of the holding layer **1042.** In the instance shown in FIG. 42, the holding layer **1042** includes the two exposed portions **1042d,** and each of the exposed portions **1042d** is supported over the substrate **1041** by the two support portions **1047** arranged in a predetermined direction (leftward/rightward direction, in FIG. 42) at a predetermined interval. Moreover, the instance illustrated in FIG. 42 includes the three infrared emission layers **1043.** However, the number of the infrared emission layers **1043** may be two, or four or more.

In the emission element **1011B** illustrated in FIG. 42, the infrared emission layer **1043** makes no direct contact with the support portion **1047.** Therefore, heat generated at the infrared emission layer **1043** is transferred to the support portion **1047** via the holding layer **1042.** The infrared emission layer **1043** has the thermal conductivity greater than that of the holding layer **1042** (in other words, the holding layer **1042** has the thermal conductivity lower than that of the infrared emission layer **1043**). Therefore, in contrast to an instance where the infrared emission layer **1043** makes direct contact with the support portion **1047,** it can be suppressed that heat generated in the infrared emission layer **1043** is transferred to the substrate **1041** via the support portion **1047.** Consequently, with regard to the infrared emission layer **1043,** luminous efficiency (emission efficiency) of infrared can be improved.

Since the infrared emission layer **1043** makes no direct contact with the support portion **1047,** it can be suppressed that a relatively large temperature gradient occurs between the infrared emission layer **1043** and the support portion **1047.** Consequently, it is possible to prevent the breakage of the infrared emission layer **1043** and the support unit **1047** which would otherwise occur due to large thermal stress caused by the temperature gradient.

Alternatively, the support portion **1047** may be configured to connect a lower surface of the exposed portion **1042d** of the holding layer **1042** to the bottom of the recessed portion **1046,** thereby supporting the holding layer **1042.** This arrangement can have a distance between the infrared emission layer **1043** and the support portion **1047** greater than that of the instance shown in FIG. 37. Therefore, it can be suppressed that heat generated at the infrared emission layer **1043** is transferred to the substrate **1041** through the support portion **1047.** Thus, the luminous efficiency (emission efficiency) of the infrared emission layer **1043** can be improved. This arrangement also can suppress the occurrence of the relatively large thermal gradient between the infrared emission layer **1043** and the support portion **1047.** Consequently, it is possible to prevent the breakage of the infrared emission layer **1043** and the support unit **1047** which would otherwise occur due to large thermal stress caused by the temperature gradient.

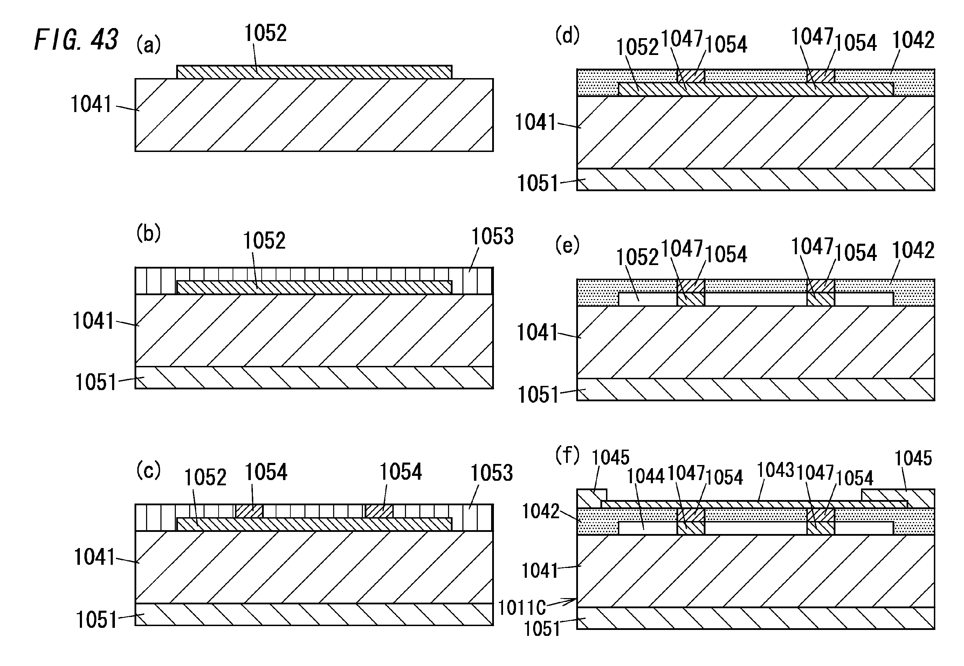

Next, (f) of FIG. 43 illustrates the third modified example (emission element **1011C)** of the emission element **1011.** Like the emission element **1011,** the emission element **1011C** includes the substrate **1041,** the holding layer **1042,** the infrared emission layer **1043,** the gaseous layer **1044,** the electrodes **1045,** and the support portions **1047.** With regard to the emission element **1011C,** the recessed portion **1046** used for the gaseous layer **1044** is formed in not the substrate **1041** but the holding layer **1042.**

Next, the following explanation referring to FIG. 43 is made to a process of manufacturing the emission element **1011C.**

In the process of manufacturing the emission element **1011C,** a sacrifice layer forming process is performed first. In the sacrifice layer forming process, as shown in (a) of FIG. 43, a sacrifice layer **1052** is formed on the first surface (upper surface, in (a) of FIG. 43) of the substrate **1041.** The sacrifice layer **1052** is partially removed in an etching process subsequent to the sacrifice layer forming process. For example, the sacrifice layer **1052** is made of a silicon dioxide film with a thickness of about 5 $\mu$m. The silicon dioxide film with a thickness of about 5 $\mu$m is formed by use of a plasma CVD method. The sacrifice layer **1052** is formed by means of patterning this silicon dioxide film by means of a photolithography technique and an etching technique.

After the sacrifice layer forming process, a polysilicon layer forming process is performed. In the polysilicon layer forming process, the aluminum electrode **1051** is formed on the second surface (lower surface, in (b) of FIG. 43) of the substrate **1041** first, as shown in (b) of FIG. 43. Thereafter, a polysilicon layer **1053** is formed over the substrate **1041** so as to cover the sacrifice layer **1052.** The polysilicon layer **1053** is used as a basis for the holding layer **1042.** Besides, partial thicknesses of the polysilicon layer **1053** are respectively selected such that the polysilicon layer **1053** has a flat surface. The polysilicon layer **1053** has the conductivity type of p-type. For example, the polysilicon layer **1053** is formed through a step of forming a non-doped polysilicon layer by means of a CVD method and a step of performing ion implantation of a p-type impurity in the non-doped polysilicon layer followed by drive-in diffusion. A part of the polysilicon layer **1053** over the sacrifice layer **1052** has a thickness of 1 μm.

Besides, in the above, it is sufficient that the thickness Lp of the holding layer 1042 is less than the length "μ" determined by the above formula **(10).** With regard to the emission element **1011C,** the thickness **Lp** of the holding layer 1042 is defined as a thickness of a part of the holding layer **1042** over the gaseous layer **1044.**

After the polysilicon layer forming process, a doping process is performed. In the doping process, as shown in (c) of FIG. 43, impurity diffusion regions **1054** are formed in the part of the polysilicon layer **1053** over the sacrifice layer **1052.** The impurity diffusion regions **1054** are arranged in a predetermined direction (leftward/rightward direction, in (c) of FIG. 43) at a predetermined interval. The impurity diffusion region **1054** is formed by means of the ion implantation of an n-type impurity (e.g., phosphorus ion) at a high concentration in the holding layer **1042,** followed by drive-in diffusion. The impurity diffusion region **1054** extends through the holding layer **1042** in the thickness direction of the holding layer **1042.** Moreover, in the doping process, the impurity diffusion region **1054** is annealed in order to diffuse and activate the impurities inside the impurity diffusion region **1054.** The impurity diffusion region **1054** is used as an n-type anode oxidation mask.

After the doping process, a pore forming process is performed. In the pore forming process, the anode oxidation is performed in order to make multiple pores in a part of the polysilicon layer **1053** other than the impurity diffusion region **1054.** Thus, as shown in (d) of FIG. 43, the holding layer **1042** made of porous silicon is formed.

In the pore forming process, a solution of hydrogen fluoride at a concentration of 30 % is used as an electrolysis solution of the anode oxidation. The solution of hydrogen fluoride at a concentration of 30 % is prepared by means of mixing a hydrofluoric solution with ethanol. In the anode oxidation process, the polysilicon layer **1053** is soaked with the electrolysis solution. Thereafter, a voltage is applied between the aluminum electrode **1051** and a platinum electrode (not shown) placed on the surface of the polysilicon layer **1053** so as to supply a current at predetermined current density (e.g., 100 mA/cm$^2$) for a prescribed time period. Thus, multiple pores are formed in the polysilicon layer **1053.** As a result, the holding layer **1042** is formed. In order to use the impurity diffusion region **1054** as the n-type anode oxidation mask, it is necessary that the impurity diffusion region **1054** is not exposed to light during the anode oxidation process.

After the pore forming process, the etching process is performed. In the etching process, as shown in (e) of FIG. 43, the sacrifice layer **1052** is etched in order to obtain the gaseous layer **1044** is obtained. Although the sacrifice layer **1052** is covered with the holding layer **1042,** the sacrifice layer **1052** can be etched with an etchant (e.g., an HF solution) because the holding layer **1042** has multiple pores. In this etching process, the impurity diffusion region **1054** acts as an etching mask. Therefore, a part of the sacrifice layer **1052** beneath the impurity diffusion region **1054** is not etched but remains. As a result, the support portion **1047** is formed. As described in the above, the gaseous layer **1044** and the support portion **1047** are formed simultaneously through the etching process.

After the etching process, an infrared emission layer forming process is performed. In the infrared emission layer forming process, the infrared emission layer **1043** is formed on the holding layer **1042.** In the instance shown in (e) of FIG. 43, the infrared emission layer **1043** has a peripheral size slightly greater than that of the gaseous layer **1044.** The infrared emission layer **1043** is made of noble metal (e.g., Ir) with a property of generating heat in response to energization. Further, the infrared emission layer **1043** has a thickness of 100 nm. The material of the infrared emission layer **1043** is not limited to Ir but may be a heat resistance material with a property of generating heat in response to energization. The heat resistance material is selected from heat resistance metal, metallic nitride, and metallic carbide, for example. Preferably, the infrared emission layer **1043** is made of a material with a high infrared emissivity.

After the infrared emission layer forming process, an electrode forming process is performed. In the electrode forming process, the electrodes **1045** are formed on the opposite ends (left and right ends, in (e) of FIG. 43) of the infrared emission layer **1043,** respectively. For example, the electrode **1045** is formed by means of an evaporation technique using a metal mask.

Through the aforementioned processes, the emission element **1011C** illustrated in (f) of FIG. 43 is obtained.

As described in the above, the process of fabricating the emission element **1011C** includes the sacrifice layer forming process, the polysilicon layer forming process, the pore forming process, the etching process, and the infrared emission layer forming process. In the sacrifice layer forming process, the sacrifice layer **1052** is formed on a predetermined region of the first surface of the sacrifice layer forming process. In the polysilicon layer forming process, the polysilicon layer **1053** doped with the impurities is formed on the sacrifice layer **1052.** In the pore forming process, the holding layer **1042** which is the porous layer is formed by means of anodizing the polysilicon layer **1053.** In the etching process, the gaseous layer **1044** is formed by means of etching the sacrifice layer **1052** via the pores of the holding layer **1042.**

According to the process of manufacturing the emission element **1011C** as mentioned in the above, after the holding layer **1042** is formed by providing multiple pores in the polysilicon layer **1053** covering the sacrifice layer **1052,** the gaseous layer **1044** is formed by means of etching and removing the sacrifice layer **1052** via the pores formed in the holding layer **1042.** Therefore, it is possible to easily form the gaseous layer **1044** and the holding layer **1042.**

Further, the process of manufacturing the emission element **1011C** includes the doping process between the polysilicon layer forming process and the pore forming process. In the doping process, the impurity diffusion region **1054** is formed in the polysilicon layer **1053**. Even if the anode oxidation is performed in the pore forming process, the impurity diffusion region **1054** does not become porous.

Therefore, in the etching process subsequent to the pore forming process, the impurity diffusion region **1054** acts as an etching mask for the sacrifice layer **1052**. Therefore, the sacrifice layer **1052** is etched with the exception of a part of the sacrifice layer **1052** covered in the thickness direction of the sacrifice layer **1052** with the impurity diffusion region **1052**. The part of the sacrifice layer **1052** which has not been etched defines the support portion **1047**. According to the process of manufacturing the emission element **1011C,** it is possible to form the gaseous layer **1044** and the support portion **1047** easily and simultaneously.

**Claims**

1. An infrared gas detector comprising:

   an infrared reception member;
   a package configured to accommodate said infrared reception member; and
   an optical filter,
   wherein said infrared reception member includes a plurality of thermal infrared detection elements each configured to detect infrared based on heat caused by received infrared,
   said thermal infrared detection elements being placed side by side,
   said package being provided with a window opening configured to allow said infrared reception member to receive infrared,
   said optical filter being attached to said package so as to cover said window opening, and including a plurality of filter elements respectively corresponding to the plurality of said thermal infrared detection elements,
   each of said filter elements including a filter substrate made of an infrared transparent material, a transmission filter configured to transmit infrared of a selected wavelength, and a cut-off filter configured to absorb infrared of a wavelength longer than the selected wavelength,
   said transmission filter and said cut-off filter being formed over said filter substrate,
   said filter substrate being thermally coupled to said package, and
   said transmission filters of said respective filter elements being configured to transmit infrared of the different selected wavelengths.

2. An infrared gas detector as set forth in claim 1, wherein
   said infrared reception member includes a pair of said thermal infrared detection elements,
   said thermal infrared detection element being a pyroelectric element or a thermopile, and
   said thermal infrared detection elements in the pair being connected in anti-series or anti-parallel with each other.

3. An infrared gas detector as set forth in claim 2, wherein
   said infrared gas detector further comprises an amplifier circuit configured to amplify an output of said infrared reception member,
   said amplifier circuit being housed in said package.

4. An infrared gas detector as set forth in claim 1, wherein
   said infrared gas detector further comprises an amplifier circuit,
   said infrared reception member includeing a pair of said thermal infrared detection elements,
   said thermal infrared detection element being a pyroelectric element or a thermopile, and
   said amplifier circuit being a differential amplifier circuit configured to amplify a difference between outputs of said respective thermal infrared detection elements in the pair.

5. An infrared gas detector as set forth in claim 1, wherein
   said filter substrate is made of a Si substrate or a Ge substrate.

6. An infrared gas detector as set forth in claim 1, wherein
   said package is provided with a shield member made of a metal, said shield being configured to prevent transmission of an electromagnetic wave from an outside to an inside of said package, and
   said filter substrate being electrically connected to said shield member.

**7.** An infrared gas detector as set forth in claim 1, wherein
said filter substrate has a first surface facing an inside of said package and a second surface facing an outside of said package,
said transmission filter being formed over said first surface of said filter substrate, and
said cut-off filter being formed over said second surface of said filter substrate.

**8.** An infrared gas detector as set forth in claim 1, wherein
said filter substrates of said respective filter elements are provided as a single part.

**9.** An infrared gas detector as set forth in claim 1, wherein
said transmission filter includes a first $\lambda/4$ multilayer, a second $\lambda/4$ multilayer, and a wavelength selection layer interposed between said first $\lambda/4$ multilayer and said second $\lambda/4$ multilayer,
each of said first $\lambda/4$ multilayer and said second $\lambda/4$ multilayer being fabricated by stacking plural kinds of thin films having different refractive indices and the same optical thickness,
said wavelength selection layer having an optical thickness which is different from the optical thickness of said thin film and is selected based on the selected wavelength regarding said transmission filter,
said cut-off filter being a laminated film fabricated by stacking plural kinds of thin films having different refractive indices,
at least one of said plural kinds of said thin films of said cut-off filter being made of a far infrared absorption material having a property of absorbing far infrared.

**10.** An infrared gas measuring device comprising:

an infrared light source configured to emit infrared to a predetermined space; and
an infrared gas detector as configured to receive infrared passing through the predetermined space,
wherein said infrared sensor is defined by claim 1.

**11.** An infrared gas measuring device as set forth in claim 10, wherein
said infrared gas measuring device further comprises a driving circuit configured to control said infrared light source such that said infrared light source emits infrared intermittently.

**12.** An infrared gas measuring device as set forth in claim 11, wherein
said infrared light source includes a substrate, a holding layer formed over said substrate, an infrared emission layer formed over said holding layer, and a gaseous layer interposed between said substrate and said holding layer,
said infrared emission layer being configured to emit infrared in response to receive heat generated when said infrared emission layer is energized,
said gaseous layer being configured to suppress a decrease of a temperature of said holding layer while said infrared emission layer is energized, and to promote heat transmission from said holding layer to said substrate while said infrared emission layer is not energized.

**13.** An infrared gas measuring device as set forth in claim 13, wherein
said gaseous layer has a thickness **Lg** in the rage of **0.05Lg'** to **3Lg'**,
wherein **"f'** [Hz] denotes a frequency of a sinusoidal voltage applied to said infrared emission layer, and $\alpha$g [W/mK] denotes a thermal conductivity of said gaseous layer, and Cg [J/m$^3$K] denotes a volumetric heat capacity of said gaseous layer, and **Lg' = (2$\alpha$g / $\omega$Cg)$^{1/2}$ ($\omega$ = 2$\pi$f).**

**14.** An infrared gas measuring device as set forth in claim 13, wherein
said holding layer has heat conductivity lower than said substrate,
said holding layer being configured to produce infrared transmitted from said holding layer to said infrared emission layer in response to absorbing heat generated by said energized infrared emission layer or reflecting infrared emitted from said infrared emission layer, and
said infrared emission layer being configured to transmit the infrared produced by said holding layer.

FIG. 1

(a)

(b)

FIG. 2

# FIG. 3

(a)

4₂    4₁

41

40

(b)

40    4₁

4₂

(c)

40

4₂    4₁

FIG. 4

FIG. 5

FIG. 6

*FIG. 7*

*FIG. 8*

FIG. 9

FIG. 10

FIG. 11

# FIG. 12

*FIG. 13*

*FIG. 14*

## FIG. 15

(a)

(b)

| WAVELENGTH (nm) | REFRACTIVE INDEX | ABSORPTION COEFFICIENT |
|---|---|---|
| 350 | 1.6870 | 0.0000 |
| 400 | 1.6800 | 0.0000 |
| 450 | 1.6770 | 0.0000 |
| 500 | 1.6730 | 0.0000 |
| 550 | 1.6710 | 0.0000 |
| 600 | 1.6700 | 0.0000 |
| 650 | 1.6680 | 0.0000 |
| 700 | 1.6670 | 0.0000 |
| 4000 | 1.6670 | 0.0000 |
| 6000 | 1.5800 | 0.0000 |
| 7500 | 1.5600 | 0.0200 |
| 9000 | 1.5500 | 0.1000 |
| 10500 | 1.5400 | 0.3500 |
| 11250 | 1.5300 | 0.6000 |
| 12000 | 1.5250 | 0.9500 |
| 13500 | 1.5250 | 1.2000 |
| 15000 | 1.5250 | 1.3000 |

FIG. 16

FIG. 17

FIG. 18

FIG. 19

FIG. 20

(a)

(b)

FIG. 21

FIG. 22

*FIG. 23*

## FIG. 24

(a)

(b)

(c)

FIG. 25

FIG. 26

*FIG. 27*

(a)

(b)

*FIG. 28*

(a)

Vout

(b)

DETECTION LIGHT

REFERENCE LIGHT

TP1

TP2

Vout

*FIG. 29*

RECEPTION
POWER

P

CONCENTRATION

FIG. 30

## FIG. 31

## FIG. 32

FIG. 33

FIG. 34

(a) VOLTAGE

(b) INFRARED

TIME

FIG. 35

TEMPERATURE

S81

S80

DEPTH

FIG. 36

(a)

(c)

(b)

(d)

EP 2 447 705 A1

FIG. 37

FIG. 38

FIG. 39

(a)

1048    1049

1041

(b)
1050        1048    1049

1041

1051

(c)
1050    1042    1048    1049

1041

1051

(d)    1050  1042  1047 1048 1044 1049

1041

1051            1046

(e)
1045    1042    1043    1045 1049 1050
       1047 1048 1044

1041

1011A

1051            1046

EP 2 447 705 A1

FIG. 40

FIG. 41

*FIG. 42*

## FIG. 43

(a)

1052

1041

(b)

1052       1053

1041

1051

(c)

1052   1054     1054     1053

1041

1051

(d)

1052 1047 1054    1047 1054   1042

1041

1051

(e)

1052 1047 1054    1047 1054   1042

1041

1051

(f)

1045   1044 1047 1054   1043 1047 1054    1045

1042

1041

1011C

1051

EP 2 447 705 A1

## INTERNATIONAL SEARCH REPORT

| | |
|---|---|
| | International application No. |
| | PCT/JP2010/060570 |

A.   CLASSIFICATION OF SUBJECT MATTER
*G01N21/35*(2006.01)i, *G01J1/02*(2006.01)i, *G01J1/04*(2006.01)i, *G01N21/61* (2006.01)n

According to International Patent Classification (IPC) or to both national classification and IPC

B.   FIELDS SEARCHED

Minimum documentation searched (classification system followed by classification symbols)
G01N21/00-21/01, G01N21/17-21/61, G01J1/00-4/04, G01J7/00-11/00

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho    1971-2010   Toroku Jitsuyo Shinan Koho   1994-2010

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y<br>A | JP 3-205521 A  (Horiba, Ltd.),<br>09 September 1991 (09.09.1991),<br>page 4, upper right column, line 17 to page 5,<br>upper left column, line 20; page 5, lower left<br>column, line 19 to page 6, upper left column,<br>line 3; fig. 1 to 3<br>& DE 69014808 C | 1-8,10-12<br>9,13,14 |
| Y<br>A | JP 6-74818 A  (Matsushita Electric Works,<br>Ltd.),<br>18 March 1994 (18.03.1994),<br>paragraph [0030]; fig. 1<br>(Family: none) | 1-8,10-12<br>9,13,14 |

| ☒  Further documents are listed in the continuation of Box C. | ☐  See patent family annex. |
|---|---|

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    27 July, 2010 (27.07.10) | Date of mailing of the international search report<br>    10 August, 2010 (10.08.10) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/060570

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 7-190852 A  (Matsushita Electric Industrial Co., Ltd.),<br>28 July 1995 (28.07.1995),<br>paragraph [0022]; fig. 5<br>(Family: none) | 1-8,10-12<br>9,13,14 |
| Y<br>A | JP 62-14028 A  (Nippon Ceramic Co., Ltd.),<br>22 January 1987 (22.01.1987),<br>page 2, lower right column, lines 2 to 8;<br>page 3, upper right column, line 4 to lower left column, line 4; fig. 2, 3<br>& US 4800278 A          & EP 224595 A1<br>& WO 1986/007449 A1      & DE 224595 T | 1-8,10-12<br>9,13,14 |
| Y | JP 7-174624 A  (Kureha Chemical Industry Co., Ltd.),<br>14 July 1995 (14.07.1995),<br>paragraph [0003]; fig. 3<br>(Family: none) | 2-4 |
| Y<br>A | JP 2009-109348 A  (Yokogawa Electric Corp.),<br>21 May 2009 (21.05.2009),<br>paragraphs [0004] to [0011], [0046]; fig. 5, 6<br>& US 2009/0108726 A1     & EP 2056337 A2 | 10-12<br>13,14 |
| Y<br>A | JP 2001-221737 A  (Yokogawa Electric Corp.),<br>17 August 2001 (17.08.2001),<br>paragraphs [0004] to [0010]; fig. 1, 3<br>(Family: none) | 10,12<br>11,13,14 |
| A | JP 2004-257885 A  (Horiba, Ltd.),<br>16 September 2004 (16.09.2004),<br>paragraph [0026]<br>(Family: none) | 9 |
| A | JP 3-95502 A  (Sumitomo Bakelite Co., Ltd.),<br>19 April 1991 (19.04.1991),<br>page 2, lower left column, line 1 to page 3, upper left column, line 4; fig. 1<br>(Family: none) | 9 |

Form PCT/ISA/210 (continuation of second sheet) (July 2009)

**EP 2 447 705 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7072078 A
- JP 3205521 A
- JP 10281866 A